# EUROPEAN PATENT SPECIFICATION

(11) **EP 4 539 525 B1**
(45) Date of publication and mention of the grant of the patent: **07.10.2026**
(21) Application number: 23829964.8
(22) Date of filing: 14.06.2023
(51) Int. Cl.: H04W 12/122, H04W 48/02, H04W 12/126

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 28.06.2022 CN 202210752034
(43) Date of publication of application: 16.04.2025
(73) Proprietor: Huawei Technologies Co., Ltd., Shenzhen, Guangdong 518129 (CN)
(72) Inventor: LEI, Zhongding, Shenzhen, Guangdong 518129 (CN)
(74) Representative: Gill Jennings & Every LLP
(86) International application number: PCT/CN2023/100183
(87) International publication number: WO 2024/001782

(56) References cited:
- WO-A1-2021/209155
- AU-A1- 2020 440 758
- CN-A- 104 281 154
- CN-A- 108 614 577
- CN-A- 110 673 640
- CN-A- 113 676 936
- KR-A- 20190 131 337
- US-A1- 2021 099 493
- HUAWEI ET AL: "KI#1,2,3,7, Sol#5 Update: Simplification of PDU Session establishment between USS/UTM and C2 PDU Sessions", vol. SA WG2, no. e-meeting; 20201012 - 20201023, 2 October 2020 (2020-10-02), XP051938449, Retrieved from the Internet <URL:https://ftp.3gpp.org/tsg_sa/WG2_Arch/TSGS2_141e_Electronic/Docs/S2-2007410.zip S2-2007410 UAS solution 5 update_v8.docx> [retrieved on 20201002]

## Description

### TECHNICAL FIELD

This application relates to the field of communication technologies, and in particular, to a communication method and apparatus.

### BACKGROUND

An uncrewed aerial system (unmanned/uncrewed aerial system, UAS) includes an uncrewed aerial vehicle (unmanned/uncrewed aerial vehicle, UAV) and an uncrewed aerial vehicle remote control (UAV controller, UAVC). The uncrewed aerial vehicle remote control may be briefly referred to as a remote control, a remote control device, or the like. The uncrewed aerial vehicle may fly autonomously or may fly according to a control instruction of the remote control. To be specific, the uncrewed aerial vehicle and the remote control may communicate with each other. For example, the remote control may send the control instruction to the uncrewed aerial vehicle, so that the uncrewed aerial vehicle sends a shot photo or video to the remote control after aerial photographing.

The uncrewed aerial system may be combined with a mobile communication network to make full use of advantages, such as wide area coverage, high reliability, and support for high-speed mobile services, of the mobile communication network, and expand the uncrewed aerial system to implement beyond-line-of-sight (remote) high-reliability flight, so that the uncrewed aerial system is more widely used and marketed. In other words, the uncrewed aerial vehicle plays two roles at the same time: a terminal in the mobile communication network, and an uncrewed aerial vehicle that can fly in the uncrewed aerial system. For the mobile communication network, the mobile communication network may not only provide the uncrewed aerial vehicle with a service (for example, multimedia communication or a data service) enjoyed by a common terminal, but also provide the uncrewed aerial vehicle with a service (for example, remote positioning or a no-fly fence) specific to the uncrewed aerial vehicle.

The two roles of the uncrewed aerial vehicle make the uncrewed aerial vehicle face the following problems: During flight of the uncrewed aerial vehicle, an attacker uses the mobile communication network to carry out a denial of service (denial of service, DoS) attack against the uncrewed aerial vehicle. For example, the attacker sends a large amount of data of a non-uncrewed aerial vehicle service to the uncrewed aerial vehicle to maliciously occupy resources (such as network resources, computing resources, and battery resources) of the uncrewed aerial vehicle, so as to affect normal working of the uncrewed aerial vehicle. As a result, the uncrewed aerial vehicle deviates from a route, and cannot reach a destination address as expected, or even the uncrewed aerial vehicle falls. Therefore, how to reduce attacks carried out by an attacker on an uncrewed aerial vehicle by using a non-uncrewed aerial vehicle service is an urgent problem to be resolved.

AU 2020 440 758 A1 discloses a wireless communication method, a terminal device, and a network device. The network device can obtain a service permitted area and a service prohibited area of a terminal device on the basis of geo-fencing area information, so as to enable a 3GPP network to serve for the management and control of the terminal device. The wireless communication method comprises: a mobility management function entity receives first information, wherein the first information comprises geo-fencing area information of a terminal device, the geo-fencing area information indicates a service C permitted area or a service permitted area list for the terminal device, or, the geo-fencing area information indicates a service prohibited area or a service prohibited area list for the terminal device.

HUAWEI ET AL: "KI#1,2,3,7, Sol#5 Update: Simplification of PDU Session establishment between USS/UTM and C2 PDU Sessions", 3GPP DRAFT; S2-2007410, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2 discloses techniques for establishing a PDU session for USS/UTM communication and for C2 communication.

US 2021/0099493 A1 discloses a method for providing restricted service, and communications device.

WO 2021/209155 A1 discloses a method of and an unmanned aerial vehicle for acting upon a restriction in services for the UAV, a UAV control server and a base station.

### SUMMARY

Embodiments of this application provide a communication method and apparatus, to reduce attacks carried out by an attacker on an uncrewed aerial vehicle by using a non-uncrewed aerial vehicle service, and improve safety of the uncrewed aerial vehicle.

According to a first aspect, this application provides a communication method. The method may be performed by a first device, or may be performed by a component (such as a chip) of the first device. In the method, a first device determines that a first condition is met, where the first condition includes one or more of the following conditions: a terminal device is authorized for an uncrewed aerial vehicle service, the terminal device initiates establishment of a 1^{st} session corresponding to the uncrewed aerial vehicle service, or the terminal device is in a flying state; and the first device restricts a non-uncrewed aerial vehicle service of the terminal device and/or restricts a first control plane procedure of the terminal device, where the first control plane procedure is not a procedure specific to the uncrewed aerial vehicle service.

In this embodiment of this application, the first device conditionally restricts the non-uncrewed aerial vehicle service of the terminal device, so that attacks carried out by an attacker on the terminal device by using the non-uncrewed aerial vehicle service can be reduced, and safety of the terminal device can be improved. The first device conditionally restricts the first control plane procedure of the terminal device, to release a resource required for performing the first control plane procedure, so that more available resources can be provided for the uncrewed aerial vehicle service.

For example, if the terminal device is authorized for the uncrewed aerial vehicle service, it means that the terminal device supports simultaneous execution of the uncrewed aerial vehicle service and the non-uncrewed aerial vehicle service. In this case, the first device restricts the non-uncrewed aerial vehicle service of the terminal device, to reduce attacks carried out by an attacker on the terminal device by using the non-uncrewed aerial vehicle service, and prevent the non-uncrewed aerial vehicle service from occupying a resource of the uncrewed aerial vehicle service. Alternatively, the terminal device is authorized for the uncrewed aerial vehicle service, and the first device may restrict the first control plane procedure, to release a resource required for performing the first control plane procedure, so that more resources available for the authorized uncrewed aerial vehicle service can be reserved for the terminal device.

For another example, if the terminal device initiates establishment of the 1^{st} session corresponding to the uncrewed aerial vehicle service, it means that the terminal device is to perform the uncrewed aerial vehicle service. In this case, the first device restricts the non-uncrewed aerial vehicle service of the terminal device, to reduce attacks carried out by an attacker on the terminal device by using the non-uncrewed aerial vehicle service in a process of performing the uncrewed aerial vehicle service by the terminal device, and prevent the non-uncrewed aerial vehicle service from occupying a resource of the uncrewed aerial vehicle service in the process of performing the uncrewed aerial vehicle service by the terminal device. Alternatively, the terminal device initiates establishment of the 1^{st} session corresponding to the uncrewed aerial vehicle service, and the first device restricts the first control plane procedure, so that a resource required for performing the first control plane procedure can be released, thereby increasing resources available for the uncrewed aerial vehicle service.

For another example, the terminal device is in a flying state, and the first device restricts the non-uncrewed aerial vehicle service of the terminal device, to reduce attacks carried out by an attacker on the flying terminal device by using the non-uncrewed aerial vehicle service. This can avoid a problem that the terminal device deviates from a route and cannot reach an expected destination address because the non-uncrewed aerial vehicle service occupies a large quantity of resources of the terminal device or the like, thereby improving safety of the terminal device. Alternatively, the terminal device is in a flying state, and the first device restricts the first control plane procedure, so that more resources available for the uncrewed aerial vehicle service can be reserved for the flying terminal device, thereby avoiding a problem that the flying terminal device cannot work normally or even crashes due to insufficient resources or the like.

In a possible implementation, that the first device restricts the non-uncrewed aerial vehicle service of the terminal device may be specifically any one of the following:
with the first device being a first session management function device, the first device releases all or a part of sessions corresponding to the non-uncrewed aerial vehicle service that are managed by the first device, and/or prohibits establishment or modification of a session corresponding to the non-uncrewed aerial vehicle service; or
with the first device being a short message service-service center, the first device does not send or suspends sending a first message to the terminal device, where the first message is used to request to establish or modify a session corresponding to the non-uncrewed aerial vehicle service; or
with the first device being the terminal device, the first device does not send or suspends sending a first message to a first session management function device, where the first message is used to request to establish or modify a session corresponding to the non-uncrewed aerial vehicle service.

In the foregoing implementation, the first device may restrict the non-uncrewed aerial vehicle service of the terminal device in a plurality of manners such as releasing the session corresponding to the non-uncrewed aerial vehicle service, prohibiting establishment or modification of the session corresponding to the non-uncrewed aerial vehicle service, or skipping sending, to the terminal device or the session management function device, a message used to request to establish or modify the session corresponding to the non-uncrewed aerial vehicle service. The implementation is flexible.

In a possible implementation, if the first device determines that the terminal device is authorized for the uncrewed aerial vehicle service, and/or the terminal device is in a flying state, before the first device restricts the non-uncrewed aerial vehicle service of the terminal device and/or restricts the first control plane procedure, the method may further include: The first device receives a second message from the terminal device, where the second message is used to request to establish a first session; and the first device determines, based on the second message, that the first session belongs to a session corresponding to the uncrewed aerial vehicle service.

In the foregoing implementation, if the terminal device is authorized for the uncrewed aerial vehicle service and/or is in a flying state, the first device may determine whether a received session establishment request message is used to establish the session corresponding to the uncrewed aerial vehicle service. For example, the first session belongs to the session corresponding to the uncrewed aerial vehicle service, and the first device restricts the uncrewed aerial vehicle service and/or restricts the first control plane procedure. For another example, if the first session belongs to the session corresponding to the non-uncrewed aerial vehicle service, it means that the first device has released the session corresponding to the non-uncrewed aerial vehicle service and/or the terminal device has not established the 1^{st} session corresponding to the uncrewed aerial vehicle service, and resources are sufficient. In this case, the first device may not restrict the non-uncrewed aerial vehicle service and/or the first control plane procedure, so that resource utilization can be improved while impact on the uncrewed aerial vehicle service is reduced.

In a possible implementation, the method may further include: The first device sends a third message to a second device, where the third message is used to request to restrict the non-uncrewed aerial vehicle service of the terminal device.

In the foregoing implementation, after determining to restrict the non-uncrewed aerial vehicle service of the terminal device, the first device may send the third message to the second device, so that the second device restricts the non-uncrewed aerial vehicle service of the terminal device.

In a possible implementation, the method may further include: The first device receives first indication information from the second device, where the first indication information indicates to release one or more sessions corresponding to the non-uncrewed aerial vehicle service. Correspondingly, that the first device restricts a non-uncrewed aerial vehicle service of the terminal device may be: The first device releases, based on the first indication information, the one or more sessions corresponding to the non-uncrewed aerial vehicle service.

According to the independent claims, a implementation that the first device restricts a non-uncrewed aerial vehicle service of the terminal device includes that the first device releases all or a part of sessions corresponding to the non-uncrewed aerial vehicle service that are managed by the first device, and the method may further include: The first device determines that N is greater than M, where N is a quantity of sessions corresponding to the non-uncrewed aerial vehicle service that are managed by the first device, and M is a quantity of sessions corresponding to the non-uncrewed aerial vehicle service that are allowed to be established on the first device when the terminal device performs the uncrewed aerial vehicle service; and the first device determines to release H sessions corresponding to the non-uncrewed aerial vehicle service, where H is a positive integer greater than or equal to (N-M).

In the foregoing implementation, the first device may release, based on the indication information of the second device, one or more sessions corresponding to the non-uncrewed aerial vehicle service, or may release, based on N and M, one or more sessions corresponding to the non-uncrewed aerial vehicle service. The implementation is flexible.

In a possible implementation, that the first device restricts a non-uncrewed aerial vehicle service of the terminal device may be: The first device sends second indication information to the terminal device, where the second indication information indicates that establishment of the session corresponding to the non-uncrewed aerial vehicle service is prohibited.

In the foregoing implementation, the first device indicates, to the terminal device, that establishment of the session corresponding to the non-uncrewed aerial vehicle service is prohibited. In this way, the terminal device may not initiate the session corresponding to the non-uncrewed aerial vehicle service, thereby restricting the non-uncrewed aerial vehicle service of the terminal device.

In a possible implementation, the first control plane procedure includes one or more of a primary authentication procedure, a deregistration procedure, a slice authentication procedure, or a secondary authentication procedure.

In a possible implementation, that the first device restricts a first control plane procedure of the terminal device may be: The first device suspends or terminates the first control plane procedure.

In the foregoing implementation, the first device may suspend or terminate the first control plane procedure, and the first control plane procedure is not a procedure specific to the uncrewed aerial vehicle service. In this way, suspension or termination of the first control plane procedure is not against execution of the uncrewed aerial vehicle service, and a resource required for performing the first control plane procedure can be released, so that more available resources can be provided for the uncrewed aerial vehicle service, thereby facilitating execution of the uncrewed aerial vehicle service.

In a possible implementation, after the first device suspends the first control plane procedure, the method further includes: The first device starts a first timer; the first device determines that the terminal device meets the first condition during running of the first timer; and the first device terminates the first control plane procedure when the running of the first timer ends.

In the foregoing implementation, the first device may first suspend the first control plane procedure. If the terminal device meets the first condition during running of the timer, the first device may terminate the first control plane procedure. If the terminal device does not meet the first condition during running of the timer, the first device may perform the first control plane procedure.

In a possible implementation, the method may further include: The first device receives a fourth message from a third device, where the fourth message is used to request to perform the first control plane procedure; and the first device sends a fifth message to the third device, where the fifth message includes a reason for not performing the first control plane procedure.

In the foregoing implementation, when the first device suspends or terminates the first control plane procedure, the first device may feed back, to the third device, the reason for not performing the first control plane procedure. For example, the reason for not performing the first control plane procedure may be that the terminal device meets the first condition.

In a possible implementation, that the first device determines that the terminal device is in a flying state may be: The first device receives third indication information from an access and mobility management function device, where the third indication information indicates that the terminal device is in a flying state. Optionally, the first device sends a sixth message to the access and mobility management function network element, where the sixth message is used to obtain a status of the terminal device, and the status of the terminal device includes the flying state and/or a non-flying state.

In the foregoing implementation, the first device may obtain the status of the terminal device from the access and mobility management function device. The status of the terminal device may be actively pushed by the access and mobility management function device, or may be obtained by the first device by subscribing to the status of the terminal device from the access and mobility management function device. The implementation is flexible.

In a possible implementation, the first device is an access and mobility management function device; and that the first device determines that the terminal device is in a flying state may be specifically: The first device receives fourth indication information from a fourth device, where the fourth indication information indicates that the terminal device is in a flying state; or the first device determines, based on mobility information of the terminal device and/or flight information of the terminal device, that the terminal device is in a flying state.

In the foregoing implementation, the access and mobility management function device may learn, from the fourth device, that the terminal device is in a flying state, or may determine, based on the mobility information and/or the flight information of the terminal device, that the terminal device is in a flying state. The implementation is flexible.

In a possible implementation, the first device is the terminal device; and that the first device determines that the terminal device is in a flying state may be: The first device determines, based on mobility information and/or fifth indication information that is from an application layer, that the terminal device is in a flying state, where the fifth indication information indicates that the terminal device enters a flight mode.

In the foregoing implementation, the terminal device may determine whether the terminal device is in a flying state.

In a possible implementation, the method may further include: The first device determines that a second condition is met, where the second condition includes one or more of the following conditions: authorization for the uncrewed aerial vehicle service is revoked from the terminal device, the terminal device is not authorized for the uncrewed aerial vehicle service, the uncrewed aerial vehicle service of the terminal device is deregistered, or the terminal device releases a last session corresponding to the uncrewed aerial vehicle service.

With the first device being the first session management function device, the first device receives a seventh message from the terminal device, and establishes or modifies, based on the seventh message, a session corresponding to the non-uncrewed aerial vehicle service, where the seventh message is used to request to establish or modify the session corresponding to the non-uncrewed aerial vehicle service.

Alternatively, with the first device being the short message service-service center, the first device sends an eighth message to the terminal device, where the eighth message is used to request to establish or modify a session corresponding to the non-uncrewed aerial vehicle service.

Alternatively, with the first device being the terminal device, the first device sends an eighth message to the first session management function device, where the eighth message is used to request to establish or modify a session corresponding to the non-uncrewed aerial vehicle service.

In the foregoing implementation, when the first device determines that the second condition is met, the first device cancels restriction on the non-uncrewed aerial vehicle service of the terminal device, so that the first device can perform the non-uncrewed aerial vehicle service, thereby improving compatibility.

In a possible implementation, the method may further include: The first device determines that the second condition is met, where the second condition includes one or more of the following conditions: authorization for the uncrewed aerial vehicle service is revoked from the terminal device, the terminal device is not authorized for the uncrewed aerial vehicle service, the uncrewed aerial vehicle service of the terminal device is deregistered, or the terminal device releases the last session corresponding to the uncrewed aerial vehicle service; the first device receives the fourth message from the third device, where the fourth message is used to request to perform the first control plane procedure; and the first device performs the first control plane procedure.

In the foregoing implementation method, when the first device determines that the second condition is met, the first device cancels restriction on the first control plane procedure, so that the first device can execute the first control plane procedure, thereby improving compatibility.

According to a second aspect, this application provides a communication method. The method may be performed by a second device, or may be performed by a component (such as a chip) of the second device. In the method, a second device receives a message that is from a first session management function device and that is used to request to restrict a non-uncrewed aerial vehicle service of the terminal device; the second device determines, based on the message, that a second session management function device manages a session corresponding to the non-uncrewed aerial vehicle service of the terminal device; and the second device sends indication information to the second session management function device, where the indication information indicates to release all or a part of sessions corresponding to the non-uncrewed aerial vehicle service that are managed by the second session management function device, and/or indicates to prohibit establishment or modification of the session corresponding to the non-uncrewed aerial vehicle service.

In this embodiment of this application, the second device determines, in response to the message for restricting the non-uncrewed aerial vehicle service of the terminal device, the session management function device that manages the session corresponding to the non-uncrewed aerial vehicle service of the terminal device, and sends the indication information to the session management function device, to indicate the session management function device to restrict the non-uncrewed aerial vehicle service of the terminal device. This can reduce attacks carried out by an attacker on an uncrewed aerial vehicle by using the non-uncrewed aerial vehicle service, and prevent the non-uncrewed aerial vehicle service from occupying a resource of the uncrewed aerial vehicle service.

In a possible implementation, the method may further include: The second device sends first indication information to the first session management function device, where the first indication information indicates to release one or more sessions corresponding to the non-uncrewed aerial vehicle service.

According to the independent claims, the method may further include: The second device receives N from the first session management function device, where N is a quantity of sessions corresponding to the non-uncrewed aerial vehicle service that are managed by the first session management function device; and the second device determines, based on a quantity of sessions corresponding to the non-uncrewed aerial vehicle service that have been established by the terminal device, N, and M, that the first session management function device needs to release one or more sessions corresponding to the non-uncrewed aerial vehicle service, where M is a quantity of sessions corresponding to the non-uncrewed aerial vehicle service that are allowed to be established on the first session management function device when the terminal device performs the uncrewed aerial vehicle service.

In the foregoing implementation method, the second device may maintain the quantity of sessions corresponding to the non-uncrewed aerial vehicle service that have been established by the terminal device, and determine, with reference to N and M, a quantity of sessions corresponding to the non-uncrewed aerial vehicle service that need to be released by each of one or more session management function devices corresponding to the terminal device.

According to a third aspect, this application provides a communication apparatus. The communication apparatus is configured to perform the method according to any one of the first aspect and the possible implementations of the first aspect. The communication apparatus is, for example, a first device, or a functional module in the first device, for example, a baseband apparatus or a chip system.

In a possible implementation, the communication apparatus includes a baseband apparatus and a radio frequency apparatus. In another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional unit, and the functional unit is referred to as the transceiver unit. The functional unit can implement the sending function and the receiving function. Alternatively, the sending unit and the receiving unit may be different functional units, and the transceiver unit is a general term for these functional units.

According to a fourth aspect, this application provides a communication apparatus. The communication apparatus is configured to perform the method according to any one of the second aspect and the possible implementations of the second aspect. The communication apparatus is, for example, a second device, or a functional module in the second device, for example, a baseband apparatus or a chip system.

In a possible implementation, the communication apparatus includes a baseband apparatus and a radio frequency apparatus. In another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional unit, and the functional unit is referred to as the transceiver unit. The functional unit can implement the sending function and the receiving function. Alternatively, the sending unit and the receiving unit may be different functional units, and the transceiver unit is a general term for these functional units.

According to a fifth aspect, this application provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the first aspect and the possible implementations of the first aspect.

According to a sixth aspect, this application provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the second aspect and the possible implementations of the second aspect.

According to a seventh aspect, this application provides a communication system. The communication system includes the communication apparatus according to the fifth aspect and/or the communication apparatus according to the sixth aspect.

According to an eighth aspect, this application provides a computer-readable storage medium. The computer-readable storage medium is configured to store a computer program or instructions, and when the computer program or the instructions are run, the method according to any one of the first aspect and the possible implementations of the first aspect is implemented, or the method according to any one of the second aspect and the possible implementations of the second aspect is implemented.

According to a ninth aspect, this application provides a computer program product including instructions. When the computer program product runs on a computer, the method according to any one of the first aspect and the possible implementations of the first aspect is implemented, or the method according to any one of the second aspect and the possible implementations of the second aspect is implemented.

According to a tenth aspect, this application further provides a chip. The chip is coupled to a memory, and is configured to read and execute program instructions in the memory, so that an apparatus in which the chip is located implements the method according to any one of the first aspect and the possible implementations of the first aspect, or implements the method according to any one of the second aspect and the possible implementations of the second aspect. Optionally, the chip system may include a chip, or may include a chip and another discrete component.

For technical effects that can be achieved in any one of the third aspect to the tenth aspect and the possible implementations of the third aspect to the tenth aspect, correspondingly refer to the technical effects that can be achieved in any one of the first aspect and the second aspect and the possible implementations of the first aspect and the second aspect. Details are not described herein again.

### BRIEF DESCRIPTION OF DRAWINGS

FIG. 1 is a diagram of a network architecture;
FIG. 2 is another diagram of a network architecture;
FIG. 3 is a diagram of an uncrewed aerial vehicle service and a non-uncrewed aerial vehicle service;
FIG. 4 is a schematic flowchart of a communication method according to an embodiment of this application;
FIG. 5 is another schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is another schematic flowchart of a communication method according to an embodiment of this application;
FIG. 10 is another schematic flowchart of a communication method according to an embodiment of this application;
FIG. 11 is another schematic flowchart of a communication method according to an embodiment of this application;
FIG. 12 is another schematic flowchart of a communication method according to an embodiment of this application;
FIG. 13 is another schematic flowchart of a communication method according to an embodiment of this application;
FIG. 14 is a diagram of a structure of a communication apparatus according to an embodiment of this application; and
FIG. 15 is another diagram of a structure of a communication apparatus according to an embodiment of this application.

### DESCRIPTION OF EMBODIMENTS

To make the objectives, technical solutions, and advantages of embodiments of this application clearer, the following first describes some terms in embodiments of this application.
(1) A terminal device may also be referred to as user equipment (user equipment, UE), an access terminal, a terminal, a subscriber unit, a subscriber station, a mobile station, a remote station, a remote terminal, a mobile device, a user terminal, a user agent, a user apparatus, or the like. The terminal device may be, for example, a cellular phone (cellular phone), a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the terminal device may be a handheld device with a wireless communication function, a computing device or another device connected to a wireless modem, a vehicle-mounted device, a wearable device, an uncrewed aerial vehicle, a terminal in the internet of things or the internet of vehicles, a terminal in any form in a 5G network and a future network, relay user equipment, a terminal in a future evolved 6G network, or the like. A type, a category, or the like of the terminal device is not limited in embodiments of this application.

A function of the terminal device may be implemented by using a hardware component inside the terminal device, and the hardware component may be a processor and/or a programmable chip inside the terminal device. Optionally, the chip may be implemented by an application-specific integrated circuit (application-specific integrated circuit, ASIC) or a programmable logic device (programmable logic device, PLD). The PLD may be any one of a complex programmable logic device (complex programmable logical device, CPLD), a field-programmable gate array (field-programmable gate array, FPGA), generic array logic (generic array logic, GAL), and a system on a chip (system on a chip, SOC), or any combination thereof.

In addition, for ease of understanding embodiments of this application, the following uses an example in which the terminal device is an uncrewed aerial vehicle for description.

(2) An uncrewed aerial vehicle service is a service that is specific to an uncrewed aerial vehicle and that is enjoyed by the uncrewed aerial vehicle. The uncrewed aerial vehicle service may be a communication service provided by a network for the uncrewed aerial vehicle on a control plane (control plane) and/or a user plane (user plane). For example, the uncrewed aerial vehicle service may be a control plane procedure (such as uncrewed aerial vehicle authentication, authorization, or flight route authorization), command and control (command and control, C2) communication, remote uncrewed aerial vehicle identification, remote positioning, a no-fly fence, or a flight map download service dedicated to the uncrewed aerial vehicle or specific to the uncrewed aerial vehicle. However, a type of the uncrewed aerial vehicle service is not limited in embodiments of this application.

(3) A non-uncrewed aerial vehicle service is a service other than an uncrewed aerial vehicle service, and may be understood as a service enjoyed by a common terminal device. The non-uncrewed aerial vehicle service may be, for example, a multimedia communication service, a data service, or an internet service. However, a type of the non-uncrewed aerial vehicle service is not limited in embodiments of this application.

It should be noted that when a network cannot identify a type of an uncrewed aerial vehicle (for example, when the network identifies the uncrewed aerial vehicle as a common terminal) or an uncrewed aerial vehicle service of the uncrewed aerial vehicle is not authorized, the uncrewed aerial vehicle may be considered as a common terminal device. In this case, a service provided by the network for the uncrewed aerial vehicle is a non-uncrewed aerial vehicle service.

(4) In embodiments of this application, "a plurality of" means two or more. In view of this, "a plurality of" in embodiments of this application may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship of associated objects, and indicates that three relationships may exist. For example, A and/or B may indicate the following three cases: Only A exists, both A and B exist, and only B exists. In addition, the character "/" generally indicates an "or" relationship between the associated objects, unless otherwise specified. Terms "system" and "network" in embodiments of this application may be used interchangeably.

Unless otherwise specified, ordinal numbers such as "first" and "second" in embodiments of this application are used to distinguish between a plurality of objects, and are not used to limit a sequence, a time sequence, priorities, or importance of the plurality of objects. For example, a first device, a second device, a third device, and a fourth device in embodiments of this application are used to distinguish between a plurality of devices, and do not limit priorities or importance of the plurality of devices. For another example, a first message, a second message, a third message, a fourth message, and the like in embodiments of this application are used to distinguish between a plurality of messages, and do not limit a sequence, a time sequence, priorities, or importance of the plurality of messages.

In addition, in embodiments of this application, the term "example" is used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The foregoing describes some terms in embodiments of this application. The following describes a communication system to which embodiments of this application are applicable.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The technical solutions in embodiments of this application may be applied to various communication systems. In a communication system, a part operated by an operator may be referred to as a public land mobile network (public land mobile network, PLMN) (which may also be referred to as an operator network, a mobile communication network, or the like). The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network (5G network for short), a 4th generation (4th generation, 4G) mobile communication network (4G network for short), and another future communication system such as a 6G network. For ease of description, the PLMN or the 5G network is used as an example for description in embodiments of this application.

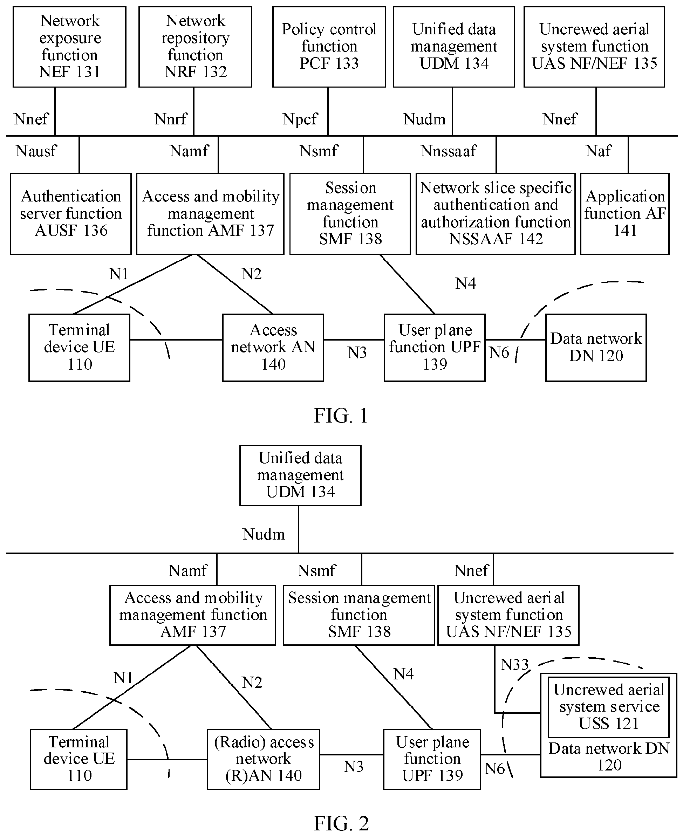

FIG. 1 is a diagram of a network architecture according to an embodiment of this application. A 5G network architecture based on a service-based architecture in a non-roaming scenario defined in a 3GPP standardization process is used as an example. The network architecture may include three parts: a terminal device part, a data network (data network, DN) part, and a PLMN part.

The terminal device part may include a terminal device 110, and may establish a connection to an operator network through an interface (for example, N1) provided by the operator network, and use a service such as data and/or voice provided by the operator network. The terminal device 110 may further access a data network 120 through the operator network, and use an operator service deployed on the data network 120 and/or a service provided by a third party. The third party may be a service provider other than the operator network and the terminal device 110, and may provide another service such as data and/or voice for the terminal device 110. A specific representation form of the third party may be specifically determined based on an actual application scenario, and is not limited herein. For a description of the terminal device 110, refer to the description of the terminal device in the foregoing term explanation part. Details are not described herein again.

The data network 120 may also be referred to as a packet data network (packet data network, PDN), and is usually a network outside the operator network, for example, a third-party network. The operator network may access a plurality of data networks 120, and a plurality of services may be deployed on the data network 120, to provide a service such as data and/or voice for the terminal device 110. For example, the data network 120 may be a private network of a smart factory, a sensor installed in a workshop of the smart factory may be the terminal device 110, a control server of the sensor is deployed in the data network 120, and the control server may provide a service for the sensor. The sensor may communicate with the control server to obtain an instruction of the control server, transmit collected sensor data to the control server according to the instruction, and the like. For another example, the data network 120 may be an internal office network of a company, a mobile phone or a computer of an employee of the company may be the terminal device 110, and the mobile phone or the computer of the employee may access information, data resources, and the like on the internal office network of the company.

The PLMN may include but is not limited to a network exposure function (network exposure function, NEF) 131, a network repository function (network function repository function, NRF) 132, a policy control function (policy control function, PCF) 133, a unified data management (unified data management, UDM) 134, an uncrewed aerial system (unmanned/uncrewed aerial system, UAS) function 135, an authentication server function (authentication server function, AUSF) 136, an access and mobility management function (access and mobility management function, AMF) 137, a session management function (session management function, SMF) 138, a user plane function (user plane function, UPF) 139, a (radio) access network ((radio) access network, (R)AN) 140, an application function (application function, AF) 141, a network slice specific authentication and authorization function (network slice specific authentication and authorization function, NSSAAF) 142, and the like. In the PLMN, a part other than a (radio) access network 140 part may be referred to as a core network (core network, CN) part.

For example, the following briefly describes network functions that may be used in embodiments of this application. In addition, FIG. 1 further relates to another network element, and details are not described herein.

The AN 140, also referred to as a radio (Radio) AN, may be considered as a subnet of an operator network, and is an implementation system between a service node and the terminal device 110 in the operator network. To access the operator network, the terminal device 110 first passes through the (R)AN 140, and then may be connected to the service node in the operator network through the (R)AN 140. An access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a pico base station device (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The network exposure function 131 is a control plane function provided by an operator, and is configured to enable a third party to use a service provided by a network. For example, in a 5G communication system, the network exposure function 131 may be an NEF, as shown in FIG. 1. In a future communication system such as a 6G communication system, the network exposure function 131 may still be an NEF, or may have another name. This is not limited in embodiments of this application.

The network repository function 132 is a control plane function provided by an operator, and may be configured to maintain real-time information of all network function services in a network. For example, in a 5G communication system, the network repository function 132 may be an NRF, as shown in FIG. 1. In a future communication system such as a 6G communication system, the network repository function 132 may still be an NRF, or may have another name. This is not limited in embodiments of this application.

The policy control function 133 is a control plane function provided by an operator, and supports a unified policy framework to govern network behavior and provide subscription information related to a policy rule and policy decision for another control function. For example, in a 5G communication system, the policy control function 133 may be a PCF, as shown in FIG. 1. In a future communication system such as a 6G communication system, the policy control function 133 may still be a PCF, or may have another name. This is not limited in embodiments of this application.

The unified data management 134 is a control plane function provided by an operator, and is responsible for storing information such as a subscriber permanent identifier (subscriber permanent identifier, SUPI) of a subscriber in an operator network, a generic public subscription identifier (generic public subscription identifier, GPSI) of the subscriber, a credential (credential), and the like. The SUPI is first ciphered during transmission, and a ciphered SUPI is referred to as a subscription concealed identifier (subscription concealed identifier, SUCI). The information stored in the unified data management 134 may be used for authentication and authorization for the terminal device 110 to access the operator network. The subscriber in the operator network may be specifically a user using a service provided by the operator network, for example, a user using a SIM card of China Telecom, or a user using a SIM card of China Mobile. The credential of the subscriber may be a long-term key stored in the SIM card or a stored small file such as information related to ciphering of the SIM card, and is used for authentication and/or authorization. It should be noted that for ease of description, information such as the permanent identifier, the credential, a security context, authentication data (cookie), and a token related to verification/authentication and authorization is not limited or distinguished in embodiments of this application. For example, in a 5G communication system, the unified data management 134 may be a UDM, as shown in FIG. 1. In a future communication system such as a 6G communication system, the unified data management 134 may still be a UDM, or may have another name. This is not limited in embodiments of this application.

The uncrewed aerial system function 135 is a control plane function that is provided by an operator and that serves an uncrewed aerial system, and is responsible for exposing a network-supported uncrewed aerial vehicle service capability to an external network. For example, the uncrewed aerial system function 135 may expose an uncrewed aerial vehicle authentication/authorization service, an uncrewed aerial vehicle flight authorization service, authorization for pairing between an uncrewed aerial vehicle and a remote control, uncrewed aerial vehicle re-authentication/authorization/revocation, position information reporting of the uncrewed aerial vehicle, quality of service (quality of service, QoS) control of the uncrewed aerial vehicle, traffic filtering for command and control (command and control, C2) communication, and the like. The uncrewed aerial system function 135 may be an instance (instance) generated by the network exposure function 131, or may be a sub-function of the common network exposure function 131, or may be an independent function specially used to provide an uncrewed aerial vehicle service, and therefore is usually marked as a UAS NF/NEF. However, embodiments of this application are not limited thereto.

The authentication server function 136 is a control plane function provided by an operator, and is usually for primary authentication, that is, network authentication between the terminal device 110 (the subscriber) and the PLMN. After receiving an authentication request initiated by the subscriber, the authentication server function 136 may perform authentication and/or authorization on the subscriber by using authentication information and/or authorization information stored in the unified data management 134, or generate authentication information and/or authorization information of the subscriber by using the unified data management 134. The authentication server function 136 may feed back the authentication information and/or the authorization information to the subscriber. For example, in a 5G communication system, the authentication server function 136 may be an AUSF, as shown in FIG. 1. In a future communication system such as a 6G communication system, the authentication server function 136 may still be an AUSF, or may have another name. This is not limited in embodiments of this application.

The access and mobility management function 137 is a control plane network function provided by the PLMN, and is responsible for access control and mobility management for the terminal device 110 to access the PLMN, for example, including functions such as mobility status management, allocation of a temporary user identity, and user authentication and authorization. For example, in a 5G communication system, the access and mobility management function 137 may be an AMF, as shown in FIG. 1. In a future communication system such as a 6G communication system, the access and mobility management function 137 may still be an AMF, or may have another name. This is not limited in embodiments of this application.

The session management function 138 is a control plane network function provided by the PLMN, and is responsible for managing a protocol data unit (protocol data unit, PDU) of the terminal device 110. A PDU session is a channel for transmitting the PDU, and the terminal device and the DN 120 needs to transmit data to each other through the PDU session. The session management function 138 may be responsible for establishment, maintenance, deletion, and the like the PDU session. The session management function 138 includes session-related functions such as session management (such as session establishment, modification, and release, including tunnel maintenance between the user plane function 139 and the AN 140), selection and control of the user plane function 139, service and session continuity (service and session continuity, SSC) mode selection, and roaming. For example, in a 5G communication system, the session management function 138 may be an SMF, as shown in FIG. 1. In a future communication system such as a 6G communication system, the session management function 138 may still be an SMF, or may have another name. This is not limited in embodiments of this application.

The user plane function 139 is a gateway provided by the PLMN for communication with the data network DN 120. The user plane function 139 includes user plane-related functions such as data packet routing and transmission, data packet detection, service usage reporting, quality of service (quality of service, QoS) processing, lawful interception, uplink data packet detection, and downlink data packet storage. For example, in a 5G communication system, the user plane function 139 may be a UPF, as shown in FIG. 1. In a future communication system such as a 6G communication system, the user plane function 139 may still be a UPF, or may have another name. This is not limited in embodiments of this application.

The application function 141 is a control plane function, and may be deployed by an operator or may be deployed by an external third party. The application function 141 interacts with another network function of a core network to support services such as traffic routing control, interaction with the policy control function 133, and access network function exposure. For example, in a 5G communication system, the application function 141 may be an AF, as shown in FIG. 1. In a future communication system such as a 6G communication system, the application function 141 may still be an AF, or may have another name. This is not limited in embodiments of this application.

The network slice specific authentication and authorization function 142 is a control plane network function provided by the PLMN, and is configured to support slice authentication performed between the terminal device 110 and the data network 120. For example, in a 5G communication system, the network slice specific authentication and authorization function 142 may be an NSSAAF, as shown in FIG. 1. In a future communication system such as a 6G communication system, the network slice specific authentication and authorization function NSSAAF may still be an SMF, or may have another name. This is not limited in embodiments of this application.

The network functions in the PLMN may be network elements implemented on dedicated hardware, or may be software instances running on dedicated hardware, or may be instances of virtualization functions on an appropriate platform. For example, the virtualization platform may be a cloud platform. In addition, each network function in the PLMN may also be referred to as a network element, a function entity, or a device. For example, the access and mobility management function may also be referred to as an access and mobility management function network element, an access and mobility management function entity, an access and mobility management function device, or the like, and the session management function may also be referred to as a session management function network element, a session management function entity, a session management function device, or the like. Details are not listed one by one herein.

The network functions in the PLMN shown in FIG. 1 may further include another network function. For example, the PLMN further includes a unified data repository (unified data repository, UDR) or the like (not shown in FIG. 1). The another network function included in the PLMN is not limited in embodiments of this application. In addition, a name of the network function shown in FIG. 1 is merely used as an example for description herein, and is not intended to limit a network function included in a network architecture to which the method in embodiments of this application is applicable. Names of devices that implement a network function in systems of different access technologies may be different. This is not limited in embodiments of this application.

In FIG. 1, Nnef, Nnrf, Npcf, Nudm, Nausf, Namf, Nsmf, Nnssaaf, Naf, N1, N2, N3, N4, and N6 are interface serial numbers. For example, for meanings of the interface serial numbers, refer to meanings defined in the 3GPP standard protocol. The meanings of the interface serial numbers are not limited in this application. It should be noted that a name of an interface between the network functions in FIG. 1 is merely an example. In specific implementation, the name of the interface in the system architecture may alternatively be another name. This is not limited in this application.

It should be noted that the network architecture shown in FIG. 1 does not constitute a limitation on a communication system to which embodiments of this application are applicable. The network architecture shown in FIG. 1 is a 5G system architecture. Optionally, in addition to a 5G system, the technical solutions provided in embodiments of this application may be further applied to a 4th generation mobile communication technology (the 4th generation, 4G) system, for example, an LTE system, or may be further applied to a next generation mobile communication system or another similar communication system. This is not specifically limited.

Based on the network architecture shown in FIG. 1, FIG. 2 is a diagram in which a 5G mobile network and an uncrewed aerial system are combined. As shown in FIG. 2, a network entity of an uncrewed aerial system service supplier (UAS service suppliers, USS) 121 is added in FIG. 2. The network entity usually does not belong to an operator network, but is deployed in a third-party data network 120. However, embodiments of this application are not limited thereto. The uncrewed aerial system service 121 communicates with the uncrewed aerial system function 135 in a 3GPP network through an N33 interface.

The uncrewed aerial system service 121 may store related information of the UAS, for example, authentication information of the UAS. Based on the information, the uncrewed aerial system service 121 may perform identity authentication, flight authorization, and the like on an uncrewed aerial vehicle. A UAS supervision department may further supervise operation of the UAS by using the uncrewed aerial system service 121, to ensure safety of flight control of the uncrewed aerial vehicle and public safety. The uncrewed aerial system service 121 may further establish a channel with another supervision or safe flight department to obtain flight-related information. In some application scenarios, in addition to communicating with an uncrewed aerial vehicle/a remote control through the operator network, the uncrewed aerial system service 121 may further have a function of remotely controlling flight of the uncrewed aerial vehicle. This is not limited herein. It should be noted that the uncrewed aerial system service 121 may further represent an uncrewed aerial system traffic management (UAS traffic management, UTM) entity or an entity integrating a USS and a UTM. This is not limited in this application.

In the mobile communication network-based remote control UAS shown in FIG. 2, the uncrewed aerial vehicle may play two roles at the same time: a terminal in the operator network (that is, a PLMN, or referred to as a mobile communication network), and an uncrewed aerial vehicle that can fly in the UAS. In terms of a service provided by the operator network, the operator network may not only provide the uncrewed aerial vehicle with a service (such as multimedia communication, a data service, or the internet) enjoyed by a common terminal, but also provide the uncrewed aerial vehicle with a service specific to the uncrewed aerial vehicle, such as authentication and authorization for an uncrewed aerial vehicle type (including dedicated uncrewed aerial vehicle authentication and authorization, flight route authorization, or the like), C2 communication, remote uncrewed aerial vehicle identification, remote positioning, a no-fly fence, and flight map download. For ease of description, in the following, a service specific to an uncrewed aerial vehicle is referred to as an uncrewed aerial vehicle service, and a service not specific to an uncrewed aerial vehicle is referred to as a non-uncrewed aerial vehicle service. For details, refer to the foregoing term explanation part. Details are not described herein again.

Because the uncrewed aerial vehicle can play two roles at the same time, the uncrewed aerial vehicle is prone to a potential safety risk of a denial of service (denial of service, DoS) attack. Specifically, during flight of the uncrewed aerial vehicle, an attacker may use a non-uncrewed aerial vehicle service of the uncrewed aerial vehicle to send a large quantity of videos, internet data, and the like that are irrelevant to the uncrewed aerial vehicle service to the uncrewed aerial vehicle, to maliciously consume resources (network resources, computing resources, battery resources, and the like) of the uncrewed aerial vehicle, and occupy resources required by the uncrewed aerial vehicle to perform the uncrewed aerial vehicle service, thereby affecting normal working of the uncrewed aerial vehicle (for example, delaying the uncrewed aerial vehicle in responding to a C2 communication instruction, or causing fast battery exhaustion). Consequently, the uncrewed aerial vehicle deviates from a flight direction and cannot arrive as expected, or even encounters a safety accident of a crash.

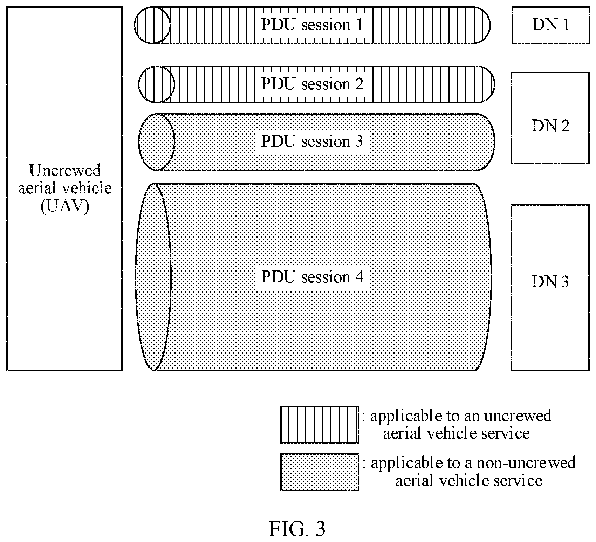

FIG. 3 is used as an example. FIG. 3 is a diagram of a relationship between a PDU session and a DN. As shown in FIG. 3, a DN 1 is a DN specially used for an uncrewed aerial vehicle service, and supports only a session (a PDU session 1) of the uncrewed aerial vehicle service. A DN 2 is a DN used for an uncrewed aerial vehicle service and a non-uncrewed aerial vehicle service, and supports both a PDU session (a PDU session 2) of the uncrewed aerial vehicle service and a PDU session (a PDU session 3) of the non-uncrewed aerial vehicle service. A DN 3 is a DN specially used for a non-uncrewed aerial vehicle service, and supports only a PDU session (a PDU session 4) of the non-uncrewed aerial vehicle service. As shown in FIG. 3, in a flight process of an uncrewed aerial vehicle, a large quantity of resources of the uncrewed aerial vehicle are consumed on the non-uncrewed aerial vehicle service, and consequently, a large quantity of battery resources of the uncrewed aerial vehicle are consumed, failing to ensure sufficient battery resources for the uncrewed aerial vehicle to reach a destination. In addition, the non-uncrewed aerial vehicle service occupies a large quantity of computing resources of the uncrewed aerial vehicle. Consequently, a computing result of the uncrewed aerial vehicle service is delayed, causing failure of a normal and quick response to an instruction of a remote control. As a result, potential risks such as an error in an actual flight route, delayed arrival of the uncrewed aerial vehicle, and a flight accident occur.

In view of this, embodiments of this application provide a communication method and apparatus. In the method, if determining that a condition is met, a first device restricts a non-uncrewed aerial vehicle service of a terminal device and/or restricts a first control plane procedure of the terminal device. The first control plane procedure is not a procedure specific to an uncrewed aerial vehicle service. The first condition includes at least one of the following: The terminal device is authorized for the uncrewed aerial vehicle service, the terminal device initiates establishment of a 1^{st} session corresponding to the uncrewed aerial vehicle service, or the terminal device is in a flying state. In this way, the first device conditionally restricts the non-uncrewed aerial vehicle service of the terminal device, to reduce attacks carried out by an attack on the terminal device by using the non-uncrewed aerial vehicle service, and prevent the non-uncrewed aerial vehicle service from occupying a resource of the uncrewed aerial vehicle service. In addition, the first device conditionally restricts the first control plane procedure, and releases a resource required for performing the first control plane procedure, so that more available resources can be reserved for the uncrewed aerial vehicle service, thereby avoiding a problem that the terminal device cannot work normally or even crashes due to insufficient resources or the like.

To better describe embodiments of this application, the following describes methods provided in embodiments of this application with reference to the accompanying drawings. In the accompanying drawings corresponding to embodiments of this application, all optional steps are represented by dashed lines. All methods provided in embodiments of this application may be applied to the communication system shown in FIG. 1 or FIG. 2.

It should be noted that in embodiments of this application, an uncrewed aerial vehicle service and a non-uncrewed aerial vehicle service of a terminal device are used as an example. The non-uncrewed aerial vehicle service and/or a first control plane procedure are/is restricted, to prevent the non-uncrewed aerial vehicle service from occupying a resource of the uncrewed aerial vehicle service, and reserve more available resources for the uncrewed aerial vehicle service. It should be understood that the uncrewed aerial vehicle service may be replaced with a first-type service of the terminal device, and the non-uncrewed aerial vehicle service may be replaced with a second-type service of the terminal device. This is also applicable to embodiments of this application. In other words, in embodiments of this application, the first-type service is not limited to the uncrewed aerial vehicle service, and the second-type service is not limited to the non-uncrewed aerial vehicle service. For example, the first-type service is a service that has a high reliability requirement and a low delay requirement, and the second-type service is a service that does not have a high reliability requirement or a low delay requirement. A procedure specific to the second-type service and/or not specific to the first-type service is restricted, to prevent the second-type service from occupying a resource of the first-type service, and reserve more available resources for the first-type service, thereby ensuring normal execution of the first-type service. For another example, the first-type service is a high-priority service, and the second-type service is a low-priority service.

It should be noted that embodiments of this application relate to a first device, a second device, a third device, and a fourth device. The first device may be a session management function device, a short message service-service center (short message service-service center, SMS-SC), a terminal device, a security anchor function (security anchor function, SEAF) device, an access and mobility management function device, a unified data management device, an authentication server function device, or an authentication credential repository and processing function (authentication credential repository and processing function, ARPF) device, or may be another device including a function of the foregoing device, or may be a component (such as a chip or a functional module) in the foregoing device. A specific implementation form of the first device is not limited in embodiments of this application.

The second device may be a unified data management device, a unified data repository device, or a policy control function device, or may be another device including a function of the foregoing device, or may be a component (such as a chip or a functional module) in the foregoing device. A specific implementation form of the second device is not limited in embodiments of this application.

The third device may be a security anchor function device, an access and mobility management function device, a unified data management device, a network slice specific authentication and authorization function device, an authentication, authorization and accounting server (authentication, authorization and accounting-server, AAA-S), or a data network, or may be another device including a function of the foregoing device, or may be a component (such as a chip or a functional module) in the foregoing device. A specific implementation form of the third device is not limited in embodiments of this application.

The fourth device may be a terminal device, an access network device, an uncrewed aerial system service, or an uncrewed aerial system function device, or may be another device including a function of the foregoing device, or may be a component (such as a chip or a functional module) in the foregoing device. A specific implementation form of the fourth device is not limited in embodiments of this application.

For ease of description, in the following embodiments, the session management function device is replaced with an SMF, the short message service-service center is replaced with an SMS-SC, the terminal device is replaced with UE, the security anchor function device is replaced with an SEAF, the access and mobility management function device is replaced with an AMF, the unified data management device is replaced with a UDM, the authentication server function device is replaced with an AUSF, the authentication credential repository and processing function device is replaced with an ARPF, the unified data repository device is replaced with a UDR, the policy control function device is replaced with a PCF, the network slice specific authentication and authorization function device is replaced with an NSSAAF, the authentication, authorization and accounting server is replaced with anAAA-S, the data network is replaced with a DN, the access network device is replaced with a RAN, the uncrewed aerial system service is replaced with a USS, the uncrewed aerial system function device is replaced with a UAS NF/NEF or a UAS NF, and the application function device is replaced with an AF.

It should be noted that, in embodiments of this application, a plurality of session management function devices may be supported in simultaneously managing sessions of UE. For ease of understanding, in embodiments of this application, an example in which a first session management function device and a second session management function device can simultaneously manage sessions of UE is used. For ease of description, in the following embodiments, the first session management function device is replaced with an SMF 1, and the second session management function device is replaced with an SMF 2. In addition, the session in embodiments of this application may be a PDU session, or may be another session. A specific implementation form of the session is not limited in embodiments of this application.

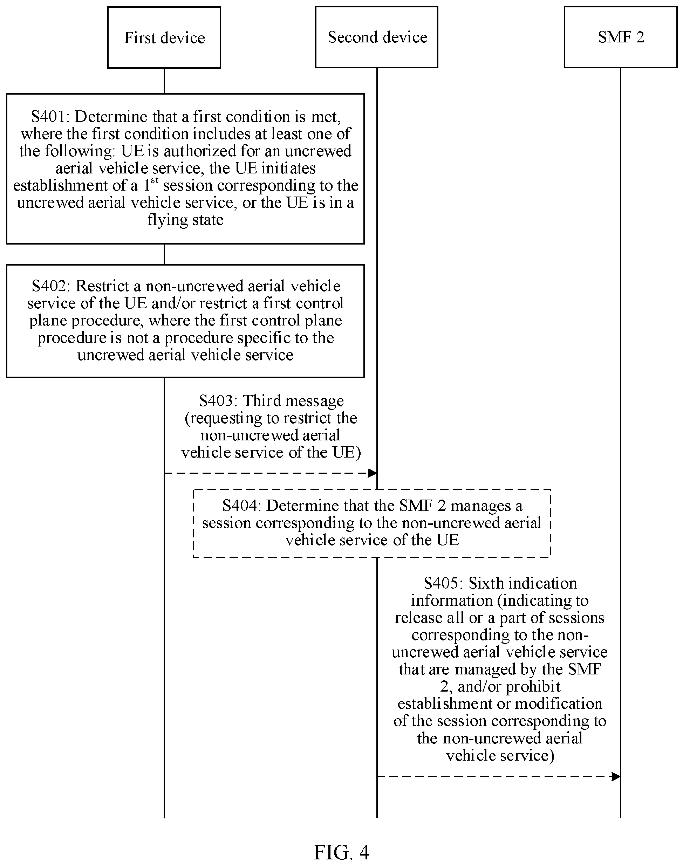

FIG. 4 is a schematic flowchart of a communication method according to an embodiment of this application. As shown in FIG. 4, the method may include the following content.

S401: A first device determines that a first condition is met.

The first condition includes one or more of the following conditions: UE is authorized for an uncrewed aerial vehicle service, the UE initiates establishment of a 1^{st} session corresponding to the uncrewed aerial vehicle service, or the UE is in a flying state.

In an example, the first device may determine that the UE is authorized for the uncrewed aerial vehicle service. That the UE is authorized for the uncrewed aerial vehicle service may be understood as one or more of registration authorization for the UE serving as an uncrewed aerial vehicle, session authorization corresponding to the uncrewed aerial vehicle service, pairing authorization, or flight authorization. However, embodiments of this application are not limited thereto.

The registration authorization for the UE serving as the uncrewed aerial vehicle may be understood as that the UE serving as the uncrewed aerial vehicle obtains authorization from a USS in a registration procedure. The session authorization corresponding to the uncrewed aerial vehicle service may be understood as that the UE obtains authorization from a USS in a session establishment or modification procedure in which the UE serves as an uncrewed aerial vehicle. The pairing authorization may be understood as that a USS authorizes a pairing relationship between the UE and a corresponding remote control, to allow communication between the UE and the remote control having the pairing relationship, for example, transmission of C2 information between the UE and the remote control. It should be understood that the pairing authorization may be performed in a session establishment or modification procedure, or may be performed in another procedure. This is not limited in this application. The flight authorization means that a USS authorizes flight-related information such as a flight route and a flight plan of the UE. The flight authorization may be performed in a session establishment or modification procedure, or may be performed in another procedure. This is not limited in this application.

After the UE is authorized for the uncrewed aerial vehicle service, the USS may notify a network of an authorization result indicating that the UE is authorized for the uncrewed aerial vehicle service. Therefore, a device, for example, the first device, in the network may obtain the authorization result.

For example, that the UE is authorized for the uncrewed aerial vehicle service is the registration authorization for the UE serving as the uncrewed aerial vehicle. In a registration procedure in which the UE serves as the uncrewed aerial vehicle, an AMF initiates an authentication and authorization procedure between the uncrewed aerial vehicle and the USS to the USS (through a UAS NF). The USS completes authentication and authorization for the UE (that is, completes registration authorization for the uncrewed aerial vehicle), and may send, to the UAS NF and/or the AMF in the network, an authorization result indicating that registration authorization for the UE serving as the uncrewed aerial vehicle succeeds. Optionally, the AMF or the UAS NF may send the authorization result to an SMF. Therefore, the first device (such as an SMF or an AMF) in the network may determine, based on the authorization result, that the UE has obtained registration authorization from the USS, and store the authorization result.

For example, that the UE is authorized for the uncrewed aerial vehicle service is the session authorization corresponding to the uncrewed aerial vehicle service. In a session establishment or modification procedure in which the UE serves as the uncrewed aerial vehicle, an SMF initiates a session authorization procedure of the uncrewed aerial vehicle service between the uncrewed aerial vehicle and the USS to the USS (through a UAS NF). The USS completes session authorization for the UE, and may send an authorization result to the UAS NF and/or the SMF. Optionally, the SMF or the UAS NF may send, to an AMF, the authorization result indicating that a session corresponding to the uncrewed aerial vehicle service is authorized. Therefore, the first device (such as an SMF or an AMF) may determine, based on the authorization result, that the UE has obtained uncrewed aerial vehicle session authorization from the USS, and store the authorization result.

For example, that the UE is authorized for the uncrewed aerial vehicle service is the pairing authorization. In a session establishment or modification procedure in which the UE serves as the uncrewed aerial vehicle, an SMF initiates a session authorization procedure of the uncrewed aerial vehicle service between the uncrewed aerial vehicle and the USS to the USS (through a UAS NF). The USS determines, based on pairing information in a message sent by the SMF or pairing information stored in the USS, whether to authorize the UE to perform pairing with a corresponding remote control, and sends a pairing authorization result to the UAS NF and/or the SMF. Optionally, the SMF or the UAS NF may send the pairing authorization result to an AMF. Therefore, the first device (such as an SMF or an AMF) may determine, based on the pairing authorization result, that the UE has obtained pairing authorization of the USS for the UE and the corresponding remote control, and store the pairing authorization result.

For example, that the UE is authorized for the uncrewed aerial vehicle service is the flight authorization. In a session establishment or modification procedure in which the UE serves as the uncrewed aerial vehicle, an SMF initiates a session authorization procedure of the uncrewed aerial vehicle service between the uncrewed aerial vehicle and the USS to the USS (through a UAS NF). The USS determines, based on information of a flight route (and/or information such as a flight plan) of the UE, whether to authorize the flight route (and/or the flight plan) of the UE, and sends a flight authorization result to the UAS NF and/or the SMF. The information such as the flight route and/or the flight plan may be information from the UE, or may be information stored in the USS. This is not limited in embodiments of this application. Optionally, the SMF or the UAS NF may send the flight authorization result to an AMF. Therefore, the first device (such as an SMF or an AMF) may determine, based on the flight authorization result, that the UE has obtained flight authorization of the USS for the uncrewed aerial vehicle, and store the flight authorization result.

It should be noted that the foregoing authorization procedure may be a procedure initiated by a network side (such as an SMF or an AMF), or may be a procedure initiated by the USS. This is not limited in this application. In addition, that the foregoing pairing authorization or flight authorization is performed in a session establishment or modification procedure is used as an example. However, embodiments of this application are not limited thereto. For example, the pairing authorization or flight authorization may alternatively be performed in a registration procedure. In addition, the foregoing description is used as an example to describe a specific implementation process in which the first device determines that the UE is authorized for the uncrewed aerial vehicle service. However, it should be understood that, in this embodiment of this application, a specific method and a specific procedure in which the UE is authorized for the uncrewed aerial vehicle service and the first device determines that the UE is authorized for the uncrewed aerial vehicle service are not limited thereto.

In another example, the first device may determine that the UE initiates establishment of the 1^{st} session corresponding to the uncrewed aerial vehicle service. For example, the first device is an SMF 1, and the SMF 1 may determine, based on stored UE information (such as context information of the UE), whether the UE initiates establishment of the 1^{st} session corresponding to the uncrewed aerial vehicle service. The context information of the UE may include sessions that correspond to different services and that have been established by the UE. For example, the SMF 1 receives, from the UE, a message (for example, denoted as a second message, where the second message is used to request to establish a first session) used to request to establish a session. The SMF 1 may determine, based on the context information of the UE, whether the first session is the 1^{st} session corresponding to the uncrewed aerial vehicle service of the UE. For example, the SMF 1 may determine whether the first session belongs to a session corresponding to the uncrewed aerial vehicle service, and when determining that the first session belongs to the session corresponding to the uncrewed aerial vehicle service, determine, based on the context information of the UE, whether the first session is the 1^{st} session corresponding to the uncrewed aerial vehicle service of the UE. For example, if the first session belongs to a session corresponding to a non-uncrewed aerial vehicle service, or the first session belongs to the session corresponding to the uncrewed aerial vehicle service but the context information of the UE includes another session corresponding to the uncrewed aerial vehicle service, the SMF 1 may determine that the second message is not a message used to establish the 1^{st} session corresponding to the uncrewed aerial vehicle service. For another example, if the first session belongs to the session corresponding to the uncrewed aerial vehicle service, and the context information of the UE does not include the session corresponding to the uncrewed aerial vehicle service, the SMF 1 may determine that the second message is used to request to establish the 1^{st} session corresponding to the uncrewed aerial vehicle service of the UE, that is, determine that the UE initiates establishment of the 1^{st} session corresponding to the uncrewed aerial vehicle service.

Optionally, the SMF 1 may determine whether the first session belongs to the session corresponding to the uncrewed aerial vehicle service. For example, the SMF 1 may determine, based on the second message, whether the first session belongs to the session corresponding to the uncrewed aerial vehicle service. The second message may include one or more of the following information: type indication information of the UE, a UAV identifier (identity, ID), a data network name (DN name, DNN), USS address information, a USS ID, a single network slice selection assistance information (single network slice selection assistance information, S-NSSAI) identifier, an AF ID, a session service type, or the like. It should be understood that the information may be included in the second message and sent to the SMF 1, or may be included in another message and sent to the SMF 1. This is not limited in this embodiment of this application. The following describes the information.
(1) The type indication information of the UE may indicate that the UE is an uncrewed aerial vehicle or common UE. For example, the second message includes the type indication information of the UE, and the type indication information of the UE indicates that the UE is an uncrewed aerial vehicle. The SMF 1 may determine, based on the second message, that the first session belongs to the session corresponding to the uncrewed aerial vehicle service. For another example, the second message includes the type indication information of the UE, and the type indication information of the UE indicates that the UE is common UE. The SMF 1 may determine, based on the second message, that the first session belongs to the session corresponding to the non-uncrewed aerial vehicle service.
(2) The UAV ID may be an ID of an uncrewed aerial vehicle registered by the UE, or an ID allocated by the USS to the UE as an uncrewed aerial vehicle. If the second message includes the UAV ID, the SMF 1 may determine, based on the second message, that the first session belongs to the session corresponding to the uncrewed aerial vehicle service.
(3) The DNN may indicate a DN corresponding to the first session. The DN may be a DN related to the uncrewed aerial vehicle service, or may be a DN related to the non-uncrewed aerial vehicle service. This is not limited in this embodiment of this application. For example, the second message includes the DNN, and the DN indicated by the DNN is a DN related to the uncrewed aerial vehicle service. The SMF 1 may determine, based on the second message, that the first session belongs to the session corresponding to the uncrewed aerial vehicle service. For another example, the second message includes the DNN, and the DN indicated by the DNN is a DN related to the non-uncrewed aerial vehicle service. The SMF 1 may determine, based on the second message, that the first session belongs to the session corresponding to the non-uncrewed aerial vehicle service.
(4) The USS address information or the USS ID may indicate a USS that provides a service for the first session. If the second message includes the USS address information and/or the USS ID, the SMF 1 may determine, based on the second message, that the first session belongs to the session corresponding to the uncrewed aerial vehicle service.
(5) The S-NSSAI identifier may indicate a slice service type corresponding to the first session. The slice service type may be a slice service corresponding to the uncrewed aerial vehicle service or a slice service corresponding to the non-uncrewed aerial vehicle service. This is not limited in this embodiment of this application. For example, the second message includes the S-NSSAI, and the S-NSSAI indicates a slice service corresponding to the uncrewed aerial vehicle service. The SMF 1 may determine, based on the second message, that the first session belongs to the session corresponding to the uncrewed aerial vehicle service. For another example, the second message includes the S-NSSAI, and the S-NSSAI indicates a slice service corresponding to the non-uncrewed aerial vehicle service. The SMF 1 may determine, based on the second message, that the first session belongs to the session corresponding to the non-uncrewed aerial vehicle service.
(6) The AF ID may indicate a corresponding AF that initiates establishment of the first session. The AF may be an AF related to the uncrewed aerial vehicle service, or an AF related to the non-uncrewed aerial vehicle service. This is not limited in this embodiment of this application. For example, the second message includes the AF ID, and the AF indicated by the AF ID is an AF related to the uncrewed aerial vehicle service. The SMF 1 may determine, based on the second message, that the first session belongs to the session corresponding to the uncrewed aerial vehicle service. For another example, the second message includes the AF ID, and the AF indicated by the AF ID is an AF related to the non-uncrewed aerial vehicle service. The SMF 1 may determine, based on the second message, that the first session belongs to the session corresponding to the non-uncrewed aerial vehicle service.
(7) The session service type may indicate a service type corresponding to the first session. The service type may be, for example, the uncrewed aerial vehicle service or the non-uncrewed aerial vehicle service. This is not limited in this embodiment of this application. For example, the second message includes the session service type, and the session service type indicates the uncrewed aerial vehicle service. The SMF 1 may determine, based on the second message, that the first session belongs to the session corresponding to the uncrewed aerial vehicle service. For another example, the second message includes the session service type, and the session service type indicates the non-uncrewed aerial vehicle service. The SMF 1 may determine, based on the second message, that the first session belongs to the session corresponding to the non-uncrewed aerial vehicle service.

It should be noted that the SMF 1 may alternatively determine, based on a combination of the foregoing information, whether the first session belongs to the session corresponding to the uncrewed aerial vehicle service. For example, the second message includes the DNN and the S-NSSAI, and a combination of the DNN and the S-NSSAI indicates the uncrewed aerial vehicle service. The SMF 1 may determine, based on the second message, that the first session belongs to the session corresponding to the uncrewed aerial vehicle service. For another example, the second message includes the DNN and the S-NSSAI, and a combination of the DNN and the S-NSSAI indicates the non-uncrewed aerial vehicle service. The SMF 1 may determine, based on the second message, that the first session belongs to the session corresponding to the non-uncrewed aerial vehicle service. In addition, the SMF 1 may alternatively determine, based on a combination of two or more other types of information in the foregoing information, whether the first session belongs to the session corresponding to the uncrewed aerial vehicle service. Details are not listed one by one in this embodiment of this application.

In the foregoing example, the first device is the SMF 1, and the SMF 1 may determine, based on the UE information (such as the context information of the UE) stored in the SMF 1, whether the UE initiates establishment of the 1^{st} session corresponding to the uncrewed aerial vehicle service. Certainly, the first device may alternatively be an SMF 2 or another SMF. For an implementation thereof, refer to related content in which the first device is the SMF 1. Details are not described herein again. In another possible implementation, the first device is not an SMF, and the first device may determine, from an SMF, whether the UE initiates establishment of the 1^{st} session corresponding to the uncrewed aerial vehicle service. For example, the first device may subscribe to session information of the UE from the SMF, or send, to the SMF, a message used to request to obtain session information of the UE. After the SMF determines that the UE initiates establishment of the 1^{st} session corresponding to the uncrewed aerial vehicle service, the SMF may send, to the first device, indication information indicating that the UE initiates establishment of the 1^{st} session corresponding to the uncrewed aerial vehicle service. The first device receives the indication information, and determines, based on the indication information, that the UE initiates establishment of the 1^{st} session corresponding to the uncrewed aerial vehicle service.

The foregoing describes how the first device determines that the UE is authorized for the uncrewed aerial vehicle service, and determines that the UE initiates establishment of the 1^{st} session corresponding to the uncrewed aerial vehicle service. The following describes how the first device determines that the UE is in a flying state.

In an example, the first device is the UE, and the first device may determine, based on mobility information, or fifth indication information from an application layer, or mobility information and fifth indication information that is from an application layer, that the UE is in a flying state. The mobility information may include a height and/or a movement speed. For example, the UE may measure a horizontal height of the UE. If a measured horizontal height is greater than or equal to a height threshold, the UE may determine that the UE is in a flying state. The height threshold may be preset. This is not limited in this embodiment of this application. For another example, the UE may measure a movement speed of the UE. If a measured movement speed is greater than or equal to a speed threshold, the UE may determine that the UE is in a flying state. The speed threshold may be preset. This is not limited in this embodiment of this application. The fifth indication information may indicate that the UE enters a flight mode.

In another example, the first device is an AMF, and the first device may maintain a status of the UE. The status of the UE includes the flying state and/or a non-flying state. For example, the first device may periodically or aperiodically obtain the status of the UE. For example, the first device may receive fourth indication information from a fourth device, where the fourth indication information indicates that the UE is in a flying state. Further, the first device may determine, based on the fourth indication information, that the UE is in a flying state. The fourth device may actively send the fourth indication information to the first device, or may send the fourth indication information to the first device after receiving a message that is of the first device and that is used to request the status of the UE. This is not limited in this embodiment of this application. For another example, the first device may determine, based on mobility information of the UE, or flight information of the UE, or mobility information of the UE and flight information of the UE, that the UE is in a flying state. For example, the first device may obtain the mobility information of the UE from a device such as a base station, a gateway mobile location center (gateway mobile location center, GMLC), or a location management function (location management function, LMF) device. For example, if a movement speed (or a height) in the mobility information of the UE is greater than or equal to a device threshold, the first device determines that the UE is in a flying state. On the contrary, the first device determines that the UE is in a non-flying state. For example, the first device may obtain the flight information of the UE from the USS. The flight information may include a flight path, a flight schedule, and the like. For example, the first device may determine whether current time and a current position of the UE match the flight path and the flight schedule. If the current time and the current position of the UE match the flight path and the flight schedule, the first device determines that the UE is in a flying state; or if the current time and the current position of the UE do not match the flight path and the flight schedule, the first device determines that the UE is in a non-flying state.

In another example, the first device may obtain the status of the UE from an AMF. For example, the first device may receive third indication information from the AMF, where the third indication information indicates that the UE is in a flying state. Further, the first device may determine, based on the third indication information, that the UE is in a flying state. For example, the AMF may actively push the status of the UE to the first device, or the AMF may send the status of the UE to the first device after receiving a message (for example, denoted as a sixth message) that is sent by the first device and that is used to subscribe to (or request) the status of the UE. This is not limited in this embodiment of this application.

S402: The first device restricts a non-uncrewed aerial vehicle service of the UE and/or restricts a first control plane procedure of the UE.

In S402, the first device restricts the non-uncrewed aerial vehicle service of the UE, or restricts the first control plane procedure of the UE, or restricts the non-uncrewed aerial vehicle service of the UE and restricts the first control plane procedure of the UE. For example, the first device may restrict the non-uncrewed aerial vehicle service of the UE in one or more of the following manners.

Manner 1: The first device is an SMF 1, and the first device releases a session that corresponds to the non-uncrewed aerial vehicle service of the UE and that is managed by the SMF 1, or prohibits (or rejects) establishment or modification of a session corresponding to the non-uncrewed aerial vehicle service of the UE, or releases a session that corresponds to the non-uncrewed aerial vehicle service of the UE and that is managed by the SMF 1 and prohibits establishment or modification of a session corresponding to the non-uncrewed aerial vehicle service of the UE.

For example, the first device may release all sessions corresponding to the non-uncrewed aerial vehicle service of the UE that are managed by the SMF 1, or the first device may release a part of sessions corresponding to the non-uncrewed aerial vehicle service of the UE that are managed by the SMF 1. The SMF 1 may actively trigger a release procedure of the session corresponding to the non-uncrewed aerial vehicle service. For example, the SMF 1 releases an IP address allocated to the session corresponding to the non-uncrewed aerial vehicle service, or sends, to a UPF, a session release message used to release the session corresponding to the non-uncrewed aerial vehicle service, so that the UPF releases a resource related to the session corresponding to the non-uncrewed aerial vehicle service (for example, discards a remaining data packet corresponding to the session corresponding to the non-uncrewed aerial vehicle service, and releases a corresponding tunnel (tunnel) resource and a stored context). Further, the SMF 1 notifies a corresponding AMF, so that the AMF releases a resource (such as a session ID or an SMF ID) related to the session corresponding to the non-uncrewed aerial vehicle service, and notifies an AN to release an AN resource related to the session corresponding to the non-uncrewed aerial vehicle service. It should be understood that a specific implementation solution in which the SMF releases the session corresponding to the non-uncrewed aerial vehicle service is not limited in this embodiment of this application.

According to the claims, the first device determines that N is greater than M, and determines to release all or a part of sessions corresponding to the non-uncrewed aerial vehicle service of the UE that are managed by the SMF 1. N may be a quantity of sessions corresponding to the non-uncrewed aerial vehicle service of the UE that are managed by the SMF 1. For example, the first device may determine N based on the context information of the UE stored in the first device, or obtain N from a UDM, a UDR, or an AMF. A manner of obtaining N is not limited in this embodiment of this application. M may be a quantity of sessions corresponding to the non-uncrewed aerial vehicle service that are allowed to be established on the SMF 1 when the UE performs the uncrewed aerial vehicle service. M may be preset, or may be configured by a PCF, or may be obtained from a UDM, a UDR, or an AMF. An implementation of M is not limited in this embodiment of this application. The first device determines to release H sessions corresponding to the non-uncrewed aerial vehicle service, where H may be a positive integer greater than or equal to (N-M).

For another example, the first device may prohibit establishment of a part of or all sessions corresponding to the non-uncrewed aerial vehicle service of the UE (including prohibiting modification of a part of sessions corresponding to the uncrewed aerial vehicle service of the UE to sessions corresponding to the non-uncrewed aerial vehicle service) or prohibit modification of a part of or all sessions corresponding to the non-uncrewed aerial vehicle service of the UE.

That the first device prohibits establishment or modification of a session corresponding to the non-uncrewed aerial vehicle service of the UE may be understood as that the first device rejects a message that is from the UE and that is used to request to establish or modify a session corresponding to the non-uncrewed aerial vehicle service; or may be understood as that the first device rejects a message that is from the UE and that is used to request to modify a session corresponding to the uncrewed aerial vehicle service to a session corresponding to the non-uncrewed aerial vehicle service; or may be understood as that the first device does not respond to or rejects a message that is from an AF and that is used to request to establish or modify a session corresponding to the non-uncrewed aerial vehicle service; or may be understood as that the first device does not respond to or rejects a message that is from an AF and that is used to request to modify a session corresponding to the uncrewed aerial vehicle service to a session corresponding to the non-uncrewed aerial vehicle service; or may be understood as that the first device deletes or discards a message that is from the UE or an AF and that is used to request to establish or modify a session corresponding to the non-uncrewed aerial vehicle service; or may be understood as that the first device deletes or discards a message that is from the UE or an AF and that is used to request to modify a session corresponding to the uncrewed aerial vehicle service to a session corresponding to the non-uncrewed aerial vehicle service; or the like. Embodiments of this application are not limited thereto. For example, the first device receives, from the UE or the AF, a message used to request to establish or modify a session, and determines whether the session that the message requests to establish or modify belongs to the session corresponding to the uncrewed aerial vehicle service. If the session that the message requests to establish or modify belongs to the session corresponding to the uncrewed aerial vehicle service (it should be noted that, according to the foregoing understanding, modifying a session corresponding to the uncrewed aerial vehicle service in this application further includes modifying a session corresponding to the non-uncrewed aerial vehicle service to a session corresponding to the uncrewed aerial vehicle service, and repeated descriptions are not provided below), the first device continues to perform a session establishment or modification procedure based on the message. If the session that the message requests to establish or modify belongs to the session corresponding to the non-uncrewed aerial vehicle service (it should be noted that, according to the foregoing understanding, modifying a session corresponding to the non-uncrewed aerial vehicle service in this application further includes modifying a session corresponding to the uncrewed aerial vehicle service to a session corresponding to the non-uncrewed aerial vehicle service, and repeated descriptions are not provided below), the first device rejects the request or does not respond to the message. For determining, by the first device, whether the session belongs to the session corresponding to the uncrewed aerial vehicle service, refer to related content in S401. Details are not described herein again.

Manner 2: The first device is an AMF or another device (for example, a UDM or a PCF). The first device triggers or notifies an SMF to release all or a part of sessions corresponding to the non-uncrewed aerial vehicle service of the UE that are managed by the SMF, or prohibits (or rejects) establishment or modification of all or a part of sessions corresponding to the non-uncrewed aerial vehicle service of the UE.

For example, the first device determines to restrict the non-uncrewed aerial vehicle service of the UE, determines an SMF (for example, an SMF 1 and/or an SMF 2) that manages a session of the UE, and sends, to the SMF, a notification message for releasing all or a part of sessions corresponding to the non-uncrewed aerial vehicle service of the UE that are managed by the SMF. Optionally, the first device determines an SMF that manages a session corresponding to the non-uncrewed aerial vehicle service of the UE, and sends the notification message to the SMF. For a specific implementation of releasing the session corresponding to the non-uncrewed aerial vehicle service of the UE, refer to related descriptions in the foregoing manner 1. Details are not described herein.

Manner 3: The first device is an SMS-SC, and the first device does not send or suspends sending, to the UE, a message (for example, denoted as a first message) used to request to establish or modify a session corresponding to the non-uncrewed aerial vehicle service.

The first message may be, for example, an SMS message. However, a specific implementation form of the first message is not limited in this embodiment of this application. The first message may be from an AF. For example, the AF may determine, based on an application requirement (for example, actively pushing a video or data to the UE), an application requirement of the UE, or the like, that a session corresponding to the non-uncrewed aerial vehicle service of the UE needs to be established or modified, generate the first message, and send the first message to the SMS-SC (so that after receiving the first message, the SMS-SC notifies the UE, and the UE sends a request message for establishing or modifying the session corresponding to the non-uncrewed aerial vehicle service of the UE). After receiving the first message, the SMS-SC determines that the first condition is met, and does not send or suspends sending the first message to the UE.

Manner 4: The first device is the UE, and the first device does not send or suspends sending a first message to the SMF 1. The first message is used to request to establish or modify a session corresponding to the non-uncrewed aerial vehicle service.

For example, an AF may determine, based on an application requirement (for example, actively pushing video data or image data to the UE), an application requirement of the UE, or the like, that a session corresponding to the non-uncrewed aerial vehicle service of the UE needs to be established or modified, generate a request message used to trigger the UE to request to establish or modify the session corresponding to the non-uncrewed aerial vehicle service of the UE, and send the request message to an SMS-SC. After receiving the request message, the SMS-SC forwards the request message to the UE. After receiving the request message, the UE determines that the first condition is met, and does not send or suspends sending the first message to the SMF 1. In this manner, the first message is used to request to establish or modify a session corresponding to the non-uncrewed aerial vehicle service.

Manner 5: The first device may send second indication information to the UE. The second indication information may indicate that establishment of a session corresponding to the non-uncrewed aerial vehicle service is prohibited. In this way, based on the second indication information, the UE may not initiate establishment or modification of a session corresponding to the non-uncrewed aerial vehicle service.

The foregoing describes how the first device restricts the non-uncrewed aerial vehicle service of the UE. The following describes how the first device restricts the first control plane procedure of the UE.

The first control plane procedure is not a procedure specific to the uncrewed aerial vehicle service. That the first control plane procedure is not a procedure specific to the uncrewed aerial vehicle service may be understood as that non-execution of the first control plane procedure does not adversely affect the uncrewed aerial vehicle service of the UE; or may be understood as that non-execution of the first control plane procedure does not affect normal execution of the uncrewed aerial vehicle service of the UE; or may be understood as that the first control plane procedure is not a necessary procedure for normal execution of the uncrewed aerial vehicle service of the UE; or may be understood as that execution of the first control plane procedure not only affects the uncrewed aerial vehicle service of the UE, but also affects the non-uncrewed aerial vehicle service of the UE; or may be understood as that execution of the first control plane procedure is not only a necessary procedure for normal execution of the uncrewed aerial vehicle service of the UE, but also a necessary procedure for normal execution of the non-uncrewed aerial vehicle service of the UE; or the like. This is not limited in this embodiment of this application.

For example, the first control plane procedure may include one or more of the following procedures: a primary (primary) authentication procedure, a deregistration procedure, a slice authentication procedure, a secondary authentication procedure, or the like. This is not limited in this embodiment of this application.

For example, the first device may implement restriction on the first control plane procedure by suspending or terminating the first control plane procedure. For example, the first device receives a fourth message from a third device, where the fourth message is used to request to perform the first control plane procedure; and the first device determines that the first condition is met, and may suspend or terminate the first control plane procedure. Optionally, the first device may send a fifth message to the third device, where the fifth message includes a reason for not performing (or not executing) the first control plane procedure. For example, the reason for not performing the first control plane procedure may be that the first condition is met, or a timeout occurs. This is not limited in this embodiment of this application. Optionally, after suspending the first control plane procedure, the first device may start a first timer, and determine whether the UE meets the first condition during running of the first timer (or when the running ends). If the first device determines that the UE meets the first condition during running of the first timer (or when the running ends), the first device may terminate the first control plane procedure when the running of the first timer ends. If the first device determines that the UE does not meet the first condition during running of the first timer, the first device may perform the first control plane procedure.

In a possible implementation, in S401, the first condition determined by the first device includes that the UE is authorized for the uncrewed aerial vehicle service and/or the UE is in a flying state. Further, the first device may further receive the second message from the UE, and determine whether the first session requested to be established by using the second message belongs to the session corresponding to the uncrewed aerial vehicle service. If the first device determines that the first session belongs to the session corresponding to the uncrewed aerial vehicle service, the first device may perform content shown in S402; or if the first device determines that the first session belongs to the session corresponding to the non-uncrewed aerial vehicle service, the first device may not perform content shown in S402. For determining, by the first device, whether the first session belongs to the session corresponding to the uncrewed aerial vehicle service, refer to related content in S401. Details are not described herein again. In this implementation, when the UE is authorized for the uncrewed aerial vehicle service and/or the UE is in a flying state, if the first session that is requested to be established by using the second message belongs to the session corresponding to the uncrewed aerial vehicle service, it means that the UE is to perform the uncrewed aerial vehicle service. The first device restricts the non-uncrewed aerial vehicle service of the UE and/or restricts the first control plane procedure of the UE, so that the non-uncrewed aerial vehicle service can be prevented from occupying a resource of the uncrewed aerial vehicle service, and more available resources can be reserved for the uncrewed aerial vehicle service. Alternatively, if the first session that is requested to be established by using the second message belongs to the session corresponding to the non-uncrewed aerial vehicle service, it means that the UE has not performed the uncrewed aerial vehicle service. In this case, the first device allows execution of the non-uncrewed aerial vehicle service and allows execution of the first control plane procedure, so that resource utilization and compatibility can be improved.

In another possible implementation, in S401, the first condition determined by the first device includes that the UE is authorized for the uncrewed aerial vehicle service and/or the UE is in a flying state. Further, the first device may further receive the second message from the UE, and determine whether the first session requested to be established by using the second message belongs to the session corresponding to the uncrewed aerial vehicle service. If the first device determines that the first session belongs to the session corresponding to the uncrewed aerial vehicle service, the first device may not perform content shown in S402. For another example, if the first device determines that the first session belongs to the session corresponding to the non-uncrewed aerial vehicle service, the first device may reject a request for establishing the first session. For determining, by the first device, whether the first session belongs to the session corresponding to the uncrewed aerial vehicle service, refer to related content in S401. Details are not described herein again. In this implementation, when the UE is authorized for the uncrewed aerial vehicle service and/or the UE is in a flying state, if the first session requested to be established by using the second message belongs to the session corresponding to the uncrewed aerial vehicle service, although the first device does not perform S402, when the first session belongs to the session corresponding to the non-uncrewed aerial vehicle service, the first device rejects establishment of the session corresponding to the non-uncrewed aerial vehicle service. In this way, an existing (or a currently performed) non-uncrewed aerial vehicle service and the first control plane procedure can be performed when the uncrewed aerial vehicle service is performed, so that resource utilization can be improved. In addition, rejecting establishment of a new session corresponding to the non-uncrewed aerial vehicle service can prevent an attacker from attacking the UE by using the new non-uncrewed aerial vehicle service.

In another possible implementation, in S401, the first condition determined by the first device includes that the UE is authorized for the uncrewed aerial vehicle service and/or the UE is in a flying state. Further, the first device may further receive the second message from the UE, and determine whether the first session requested to be established by using the second message is the 1^{st} session that corresponds to the uncrewed aerial vehicle service and that is initiated by the UE. For example, the first device may determine, based on the context information of the UE stored in the first device, whether the first session is the 1^{st} session that corresponds to the uncrewed aerial vehicle service and that is initiated by the UE. For example, if the first device has stored session information corresponding to the uncrewed aerial vehicle service, the first device may determine that the first session is not the 1^{st} session that corresponds to the uncrewed aerial vehicle service and that is initiated by the UE; or if the first device has not stored session information corresponding to the uncrewed aerial vehicle service, the first device may determine that the first session is the 1^{st} session that corresponds to the uncrewed aerial vehicle service and that is initiated by the UE. Optionally, the first device may send a request to an SMF, a UDR, or a UDM, to obtain information about whether the UE has established a session corresponding to the uncrewed aerial vehicle service. If the UE has established a session corresponding to the uncrewed aerial vehicle service, it may be determined that the first session is not the 1^{st} session that corresponds to the uncrewed aerial vehicle service and that is initiated by the UE; or if the UE has not established a session corresponding to the uncrewed aerial vehicle service, it may be determined that the first session is the 1^{st} session that corresponds to the uncrewed aerial vehicle service and that is initiated by the UE. If the first session is not the 1^{st} session that corresponds to the uncrewed aerial vehicle service and that is initiated by the UE, it means that before the first device receives a first session establishment request (that is, when the 1^{st} session corresponding to the uncrewed aerial vehicle service is established), a session corresponding to the non-uncrewed aerial vehicle service of the UE has been released. In this case, the first device does not need to repeatedly request to restrict the non-uncrewed aerial vehicle service and/or restrict the first control plane procedure, thereby avoiding unnecessary message exchange and improving resource utilization. To be specific, if the first device determines that the first session is not the 1^{st} session that corresponds to the uncrewed aerial vehicle service and that is initiated by the UE, the first device may not perform content shown in S402; or if the first device determines that the first session is the 1^{st} session that corresponds to the uncrewed aerial vehicle service and that is initiated by the UE, the first device may perform content shown in S402.

In a possible implementation, the first device may send, to a second device, a message (for example, denoted as a third message) used to request (or notify) to restrict the non-uncrewed aerial vehicle service of the UE, that is, perform content shown in S403.

S403: The first device sends the third message to the second device. Correspondingly, the second device receives the third message.

S403 is an optional step. The third message may be used to request (or notify) to restrict the non-uncrewed aerial vehicle service of the UE.

S404: The second device determines that an SMF 2 manages a session corresponding to the non-uncrewed aerial vehicle service of the UE.

S404 is an optional step. For example, after receiving the third message, the second device may determine an SMF that manages a session of the UE. Optionally, the second device determines an SMF that manages a session corresponding to the non-uncrewed aerial vehicle service of the UE. For example, the second device may determine, based on stored context information of the UE and/or context information of the UE that is obtained from a UDM, a UDR, or a PCF, the SMF that manages the session of the UE or the SMF that manages the session corresponding to the non-uncrewed aerial vehicle service of the UE. For example, the PCF may send, to the UDM (or the UDR), a message used to request session information of the UE or association information of the SMF; and receive the session information (including the association information of the SMF) of the UE or the association information of the SMF from the UDM (or the UDR). The context information of the UE may include information about an association between the UE and the SMF. The information about the association between the UE and the SMF may include an identifier of the SMF that manages the session corresponding to the non-uncrewed aerial vehicle service of the UE or an identifier of the SMF that manages the session of the UE. Optionally, the information about the association between the UE and the SMF may further include an identifier of an SMF that manages a session corresponding to the uncrewed aerial vehicle service of the UE. In this embodiment of this application, an example in which both the SMF 1 and the SMF 2 manage sessions of the non-uncrewed aerial vehicle service of the UE is used. In this case, in S404, the second device may determine that the SMF 2 manages the session corresponding to the non-uncrewed aerial vehicle service of the UE.

S405: The second device sends sixth indication information to the SMF 2. Correspondingly, the SMF 2 receives the sixth indication information.

S405 is an optional step. The sixth indication information indicates to release the session that corresponds to the non-uncrewed aerial vehicle service of the UE and that is managed by the SMF 2, or indicates to prohibit establishment or modification of the session corresponding to the non-uncrewed aerial vehicle service of the UE, or indicates to release the session that corresponds to the non-uncrewed aerial vehicle service of the UE and that is managed by the SMF 2 and prohibit establishment or modification of the session corresponding to the non-uncrewed aerial vehicle service of the UE. Optionally, the sixth indication information may indicate to release all or a part of sessions corresponding to the non-uncrewed aerial vehicle service of the UE that are managed by the SMF 2.

In S402, the first device determines to release all or a part of sessions corresponding to the non-uncrewed aerial vehicle service of the UE that are managed by the SMF 1. In another possible implementation, the first device receives first indication information from the second device, and releases, based on the first indication information, one or more sessions corresponding to the non-uncrewed aerial vehicle service of the UE that are managed by the SMF 1. The first indication information may indicate to release the one or more sessions corresponding to the non-uncrewed aerial vehicle service. For example, after receiving the third message, the second device determines the SMF that manages the session corresponding to the non-uncrewed aerial vehicle service of the UE, and determines a quantity of sessions corresponding to the non-uncrewed aerial vehicle service of the UE that are to be released by the SMF. The SMF 1 is used as an example. The second device receives N from the SMF 1, and determines, based on a quantity of sessions corresponding to the non-uncrewed aerial vehicle service that have been established by the UE, N, and M, that the SMF 1 needs to release one or more sessions corresponding to the non-uncrewed aerial vehicle service, or determines a quantity of sessions corresponding to the non-uncrewed aerial vehicle service of the UE that need to be (or are to be) released by the SMF 1.

In a possible implementation, the first device may cancel restriction on the non-uncrewed aerial vehicle service and/or cancel restriction on the first control plane procedure. For example, if the first device determines that a second condition is met, the first device may cancel restriction on the non-uncrewed aerial vehicle service and/or cancel restriction on the first control plane procedure. For example, the first device is an SMF 1, and the first device determines that the second condition is met, receives a seventh message from the UE, and establishes or modifies, based on the seventh message, a session corresponding to the non-uncrewed aerial vehicle service, where the seventh message is used to request to establish or modify the session corresponding to the non-uncrewed aerial vehicle service. For another example, the first device is an SMS-SC, and the first device determines that the second condition is met, receives an eighth message from an AF, and sends the eighth message to the UE, where the eighth message is used to request to establish or modify a session corresponding to the non-uncrewed aerial vehicle service. For another example, the first device is the UE, and the first device determines that the second condition is met, receives an eighth message from an SMS-SC, and sends the eighth message to an SMF 1, where the eighth message is used to request to establish or modify a session corresponding to the non-uncrewed aerial vehicle service. For another example, the first device determines that the second condition is met, receives, from the third device, a message (for example, denoted as a fourth message) that is used to request to perform the first control plane procedure, and performs the first control plane procedure.

The second condition includes one or more of the following conditions: Authorization for the uncrewed aerial vehicle service is revoked from the UE, the UE is not authorized for the uncrewed aerial vehicle service, the uncrewed aerial vehicle service of the UE is deregistered, the UE releases a last session corresponding to the uncrewed aerial vehicle service, or the like. For example, when the USS prepares to revoke authorization for the uncrewed aerial vehicle service from the UE, the USS may send a revocation request to an AMF (or an SMF) (through a UAS NF), and the AMF (or the SMF) continues to perform an authorization revocation procedure for the uncrewed aerial vehicle service of the UE. A revocation result is sent to the UE through the AMF (or the SMF). The AMF and the SMF may mutually subscribe to the authorization information, that is, may receive an authorization revocation result from each other. Therefore, the first device (for example, the UE, the SMF, or the AMF) may determine that authorization for the uncrewed aerial vehicle service is revoked from the UE. However, embodiments of this application are not limited thereto. For example, when the UE needs to be deregistered, the AMF receives a deregistration request, and performs a deregistration procedure with the UE. Therefore, the AMF and the UE may obtain information indicating that the deregistration procedure is completed. In addition, the SMF may obtain deregistration information of the UE through the AMF (the SMF subscribes to a notification service of related information). However, embodiments of this application are not limited thereto. For example, the first device is an SMF, and the first device may determine, based on stored context information of the UE, whether the UE releases the last session corresponding to the uncrewed aerial vehicle service. For another example, the first device is not an SMF, and the first device may learn, from an SMF, whether the UE releases the last session corresponding to the uncrewed aerial vehicle service.

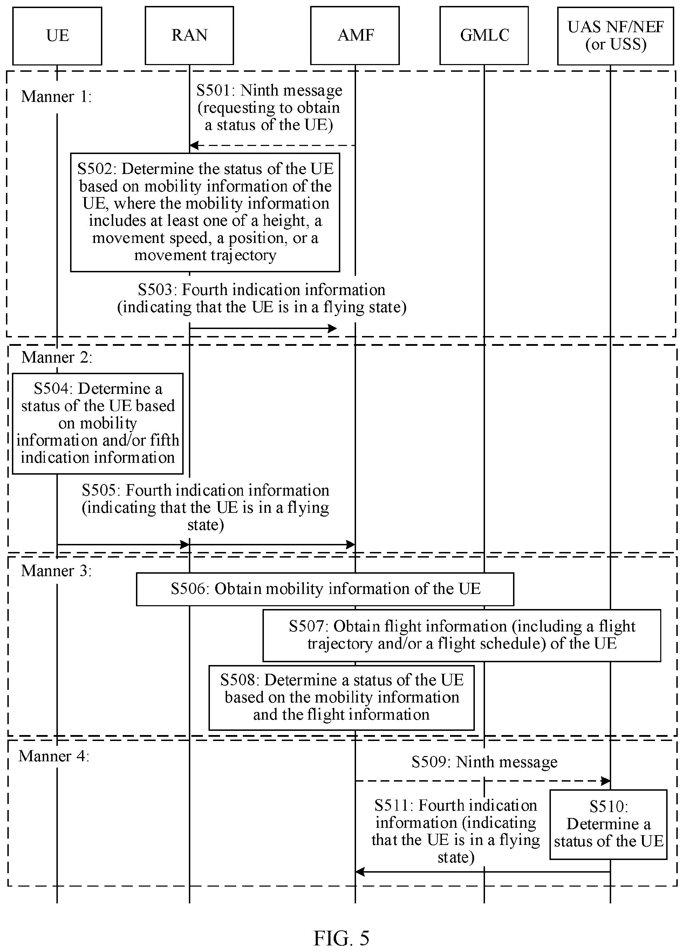

In S401, the AMF may maintain the status of the UE. With reference to FIG. 5, the following describes an implementation in which the AMF obtains the status of the UE.

FIG. 5 is a schematic flowchart of a communication method according to an embodiment of this application. In this embodiment, a first device is an AMF, and a fourth device is a RAN, or UE, or a USS, or a UAS NF/NEF. The AMF may obtain a status of the UE in one or more of four manners shown in FIG. 5. Manner 1 includes steps S501 to S503, manner 2 includes S504 and S505, manner 3 includes steps S506 to S508, and manner 4 includes steps S509 to S511. As shown in FIG. 5, the method may further include the following procedure.

S501: The AMF sends a ninth message to a RAN, and correspondingly, the RAN receives the ninth message from the AMF.

S501 is an optional step. For example, the AMF may send the ninth message to the RAN, to obtain the status of the UE; or the RAN may actively report the status of the UE to the AMF. This is not limited in this embodiment of this application.

S502: The RAN determines the status of the UE based on mobility information of the UE.

The mobility information includes one or more of a height, a movement speed, a position, or a movement trajectory. For example, the RAN may measure the UE to obtain the mobility information of the UE. For another example, the RAN may receive the mobility information from the UE. It should be understood that a specific implementation in which the RAN obtains the mobility information is not limited in this embodiment of this application. Further, the RAN may determine, based on the mobility information of the UE, whether the UE is in a flying state or a non-flying state. For example, if the height is greater than or equal to a height threshold, the RAN may determine that the UE is in a flying state. The height threshold may be preset. This is not limited in this embodiment of this application. For another example, if the movement speed is greater than or equal to a speed threshold, the RAN may determine that the UE is in a flying state. The speed threshold may be preset. This is not limited in this embodiment of this application.

S503: The RAN sends fourth indication information to the AMF, and correspondingly, the AMF receives the fourth indication information from the RAN.

The fourth indication information may indicate that the UE is in a flying state, or indicate that the UE is in a non-flying state. The RAN may send the fourth indication information to the AMF, to indicate the status of the UE. For ease of understanding, in FIG. 5, an example in which the fourth indication information indicates that the UE is in a flying state is used.

In this way, the AMF completes obtaining the status of the UE in manner 1. The following describes how the AMF obtains the status of the UE in manner 2.

S504: The UE determines the status of the UE based on mobility information and/or fifth indication information.

For example, the UE may measure one or more of a height, a moving speed, a position, or a movement trajectory of the UE, or may measure a received radio signal from a RAN, to calculate the mobility information of the UE. For descriptions of the mobility information and descriptions of determining, by the UE, the status of the UE based on the mobility information, refer to the descriptions of S502. Details are not described herein again. The fifth indication information may be from an application layer of the UE. For example, the application layer triggers the UE to enter a flight mode. The application layer may generate the fifth indication information, and the fifth indication information indicates that the UE enters the flight mode. Further, the UE determines, based on the fifth indication information, that the UE is in a flying state.

S505: The UE sends fourth indication information to the AMF, and correspondingly, the AMF receives the fourth indication information from the UE.

For a specific implementation process of S505, refer to S503. Details are not described herein again.

In this way, the AMF completes obtaining the status of the UE in manner 2. The following describes how the AMF obtains the status of the UE in manner 3.

S506: The AMF obtains mobility information of the UE.

For example, the AMF may obtain the mobility information of the UE from a RAN and/or a GMLC (or an LMF). For example, the RAN may actively report the mobility information of the UE to the AMF; or the RAN may send the mobility information of the UE to the AMF after receiving a message that is from the AMF and that is used to request to obtain the mobility information of the UE. For another example, the GMLC (or the LMF) may actively push the mobility information of the UE to the AMF; or the GMLC (or the LMF) may send the mobility information of the UE to the AMF after receiving a message that is from the AMF and that is used to request to obtain the mobility information of the UE. It should be understood that a specific implementation in which the AMF obtains the mobility information of the UE is not limited in this embodiment of this application.

S507: The AMF obtains flight information of the UE.

The flight information may include, for example, a flight route and/or flight time. For example, the AMF may obtain the flight information of the UE from a UAS NF/NEF (or a USS). For example, the UAS NF/NEF (or the USS) may actively push the flight information of the UE to the AMF; or the UAS NF/NEF (or the USS) may send the flight information of the UE to the AMF after receiving a message that is from the AMF and that is used to request the flight information of the UE. A specific implementation in which the AMF obtains the flight information of the UE is not limited in this embodiment of this application.

S508: The AMF determines the status of the UE based on the mobility information and the flight information.

For example, the AMF may determine whether current time and a current position of the UE match the flight path and a flight schedule. If the current time and the current position of the UE match the flight path and the flight schedule, the AMF determines that the UE is in a flying state; or if the current time and the current position of the UE do not match the flight path and the flight schedule, the AMF determines that the UE is in a non-flying state. For another example, the AMF may determine the status of the UE based on the mobility information. For example, if a height is greater than or equal to a height threshold, the AMF may determine that the UE is in a flying state; or if a movement speed is greater than or equal to a speed threshold, the AMF may determine that the UE is in a flying state. For another example, the AMF may send, to another device (for example, a network data analytics function (network data analytics function, NWDAF) device), a request message for obtaining the status of the UE. The NWDAF may determine the status of the UE based on collected UE-related information (such as the mobility information and/or the flight information), and send the status of the UE to the AMF. Optionally, the AMF may send, to the NWDAF, the mobility information and/or the flight information obtained by the AMF. The NWDAF determines the status of the UE based on the received mobility information and/or flight information, and sends the status of the UE to the AMF. In FIG. 5, an example in which the AMF determines the status of UE based on the mobility information and the flight information is used.

In this way, the AMF completes obtaining the status of the UE in manner 3. The following describes how the AMF obtains the status of the UE in manner 4.

S509: The AMF sends a ninth message to a UAS NF/NEF, and correspondingly, the UAS NF/NEF receives the ninth message from the AMF.

S509 is an optional step. For example, the AMF may send the ninth message to the UAS NF/NEF (or a USS), to obtain the status of the UE; or the UAS NF/NEF (or a USS) may actively push the status of the UE to the AMF. This is not limited in this embodiment of this application.

It should be noted that a part performed by the UAS NF/NEF may alternatively be performed by the USS.

S510: The UAS NF/NEF determines the status of the UE.

For example, the UAS NF/NEF may obtain the status of the UE that is locally stored, or the UAS NF/NEF may obtain the status of the UE from the USS, for example, send, to the USS, a request message for obtaining the status of the UE. The USS may obtain the status of the UE based on content of communication between the USS and the UE, or the USS may determine the status of the UE based on flight authorization information, a flight schedule, and/or the like of the UE. For example, there is a dedicated communication channel (for example, C2 communication) between the USS and the UE used as an uncrewed aerial vehicle, and the USS may obtain the status of the UE based on content of communication on the communication channel. For another example, the USS may determine the status of the UE based on stored information such as the flight authorization information and/or the flight schedule of the UE.

S511: The UAS NF/NEF sends fourth indication information to the AMF, and correspondingly, the AMF receives the fourth indication information from the UAS NF/NEF.

For a specific implementation process of S511, refer to S503. Details are not described herein again.

In this way, the AMF completes obtaining the status of the UE in manner 4.

In the procedure shown in FIG. 5, the AMF may determine the status of the UE based on the mobility information and the flight information, or may obtain the status of the UE from the RAN, the UE, the UAS NF/NEF, or the USS. An implementation is flexible and has strong adaptability. Further, the AMF may maintain (or store) the status of the UE, and send the status of the UE to another device (such as an SMF, an SMS-SC, a UDM, an AUSF, an ARPF, or an NSSAAF), so that the another device determines whether the UE is in a flying state.

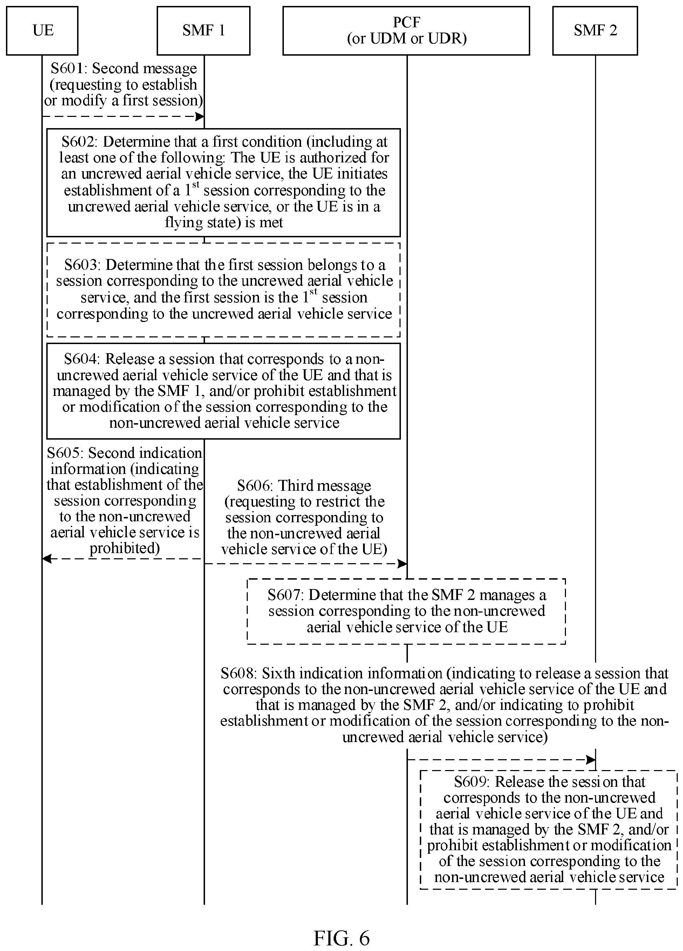

FIG. 5 shows that the AMF obtains the status of the UE in a plurality of manners. The following describes the procedure shown in FIG. 4 with reference to FIG. 6 to FIG. 13.

FIG. 6 is another schematic flowchart of a communication method according to an embodiment of this application. In this embodiment, a first device is an SMF 1, and the SMF 1 releases all sessions corresponding to a non-uncrewed aerial vehicle service of UE that are managed by the SMF 1. A second device is a PCF, a UDM, a UDR, or an AMF. As shown in FIG. 6, the method may include the following procedure.

S601: The UE sends a second message to the SMF 1, and correspondingly, the SMF 1 receives the second message from the UE.

S601 is an optional step. To be specific, the SMF 1 may determine, in response to the second message, whether a first condition is met, or the SMF 1 may periodically or aperiodically determine whether a first condition is met. This is not limited in this embodiment of this application. The second message is used to request to establish a first session, and the second message may be, for example, a PDU session establishment request (PDU session establishment request) message. Alternatively, the second message may be used to request to modify a first session, and the second message may be, for example, a PDU session modification request (PDU session modification request) message. A name of the second message is not limited in this embodiment of this application.

S602: The SMF 1 determines that the first condition is met.

The first condition includes one or more of the following conditions: The UE is authorized for an uncrewed aerial vehicle service, the UE initiates establishment of a 1^{st} session corresponding to the uncrewed aerial vehicle service, or the UE is in a flying state. In S602, the SMF 1 may determine whether the first condition is met. For example, the SMF 1 may determine, based on stored context information of the UE, whether the UE is authorized for the uncrewed aerial vehicle service. For example, the SMF 1 may learn, from an AMF, whether the UE is authorized for the uncrewed aerial vehicle service (a service of the AMF about an uncrewed aerial vehicle authorization status of the UE is subscribed, and when an uncrewed aerial vehicle is authorized, the AMF notifies the SMF 1; or the SMF 1 sends a request message to the AMF, to obtain the uncrewed aerial vehicle service authorization status of the UE). For another example, the SMF 1 may determine, based on the context information of the UE, whether the first session is a 1^{st} session that corresponds to the uncrewed aerial vehicle service and that is initiated by the UE for establishment. For another example, the SMF 1 may obtain a status of the UE from the AMF, and determine, based on the status of the UE, whether the UE is in a flying state. For a specific implementation process of S602, refer to related content of S401. Details are not described herein again. In FIG. 6, an example in which the SMF 1 meets the first condition is used.

S603: The SMF 1 determines that the first session belongs to a session corresponding to the uncrewed aerial vehicle service, and determines that the first session is the 1^{st} session corresponding to the uncrewed aerial vehicle service of the UE.

S603 is an optional step. For example, the first condition determined by the SMF 1 in S602 includes that the UE is authorized for the uncrewed aerial vehicle service and/or the UE is in a flying state. After performing S602, the SMF 1 may perform S603, or may not perform S603. For another example, if the first condition determined by the SMF 1 in S602 includes that the UE initiates establishment of the 1^{st} session corresponding to the uncrewed aerial vehicle service, S603 and S602 may be understood as one step, and the SMF 1 does not need to perform S603.

In an example, the second message is used to request to create the first session. The SMF 1 determines that the first session belongs to the session corresponding to the uncrewed aerial vehicle service, and determines whether the first session is the 1^{st} session corresponding to the uncrewed aerial vehicle service. If the first session is the 1^{st} session corresponding to the uncrewed aerial vehicle service, the SMF 1 may perform content shown in S604 to S609; or if the first session is not the 1^{st} session corresponding to the uncrewed aerial vehicle service, the SMF 1 does not perform content shown in S604 to S609.

In another example, the second message is used to request to modify the first session. The SMF 1 may determine that the first session belongs to a session corresponding to the non-uncrewed aerial vehicle service, and determines whether a modified first session is the 1^{st} session corresponding to the uncrewed aerial vehicle service. If the modified first session is the 1^{st} session corresponding to the uncrewed aerial vehicle service, the SMF 1 performs content shown in S604 to S609; or if the modified first session is not the 1^{st} session corresponding to the uncrewed aerial vehicle service, the SMF 1 does not perform content shown in S604 to S609.

In another example, the second message is used to request to modify the first session. The SMF 1 determines that the first session belongs to the session corresponding to the uncrewed aerial vehicle service. Further, the SMF 1 may further determine whether the second message requests to modify the session corresponding to the uncrewed aerial vehicle service to a session corresponding to the non-uncrewed aerial vehicle service. If the second message requests to modify the session corresponding to the uncrewed aerial vehicle service to the session corresponding to the non-uncrewed aerial vehicle service, the SMF 1 performs content shown in S604 to S609; or if the second message does not request to modify the session corresponding to the uncrewed aerial vehicle service to the session corresponding to the non-uncrewed aerial vehicle service, the SMF 1 does not perform content shown in S604 to S609.

For a specific implementation process of S603, refer to related content of S401. Details are not described herein again. In addition, in FIG. 6, an example in which the first session belongs to the session corresponding to the uncrewed aerial vehicle service and the first session is the 1^{st} session corresponding to the uncrewed aerial vehicle service is used.

S604: The SMF 1 releases a session that corresponds to the non-uncrewed aerial vehicle service of the UE and that is managed by the SMF 1, and/or prohibits establishment or modification of a session corresponding to the non-uncrewed aerial vehicle service.

In this embodiment, the SMF 1 may release all sessions corresponding to non-uncrewed aerial vehicle service of the UE that are managed by the SMF 1, or prohibit establishment or modification of the session corresponding to the non-uncrewed aerial vehicle service, or release all sessions corresponding to non-uncrewed aerial vehicle service of the UE that are managed by the SMF 1 and prohibit establishment or modification of the session corresponding to the non-uncrewed aerial vehicle service. For example, the SMF 1 may initiate a session release procedure, and notify a related NF, a network element (such as a UPF, an AMF, or a RAN), the UE, and the like to release a resource related to the session.

Optionally, the SMF 1 may configure a policy for prohibiting establishment or modification of the session corresponding to the non-uncrewed aerial vehicle service. If the SMF 1 receives, from the UE, a request message used to establish or modify a session, the SMF 1 may determine whether the session belongs to the session corresponding to the non-uncrewed aerial vehicle service. If the session belongs to the session corresponding to the uncrewed aerial vehicle service, the SMF 1 establishes or modifies the session; or if the session belongs to the session corresponding to the non-uncrewed aerial vehicle service, the SMF 1 may suspend or terminate establishment or modification of the session. Optionally, after the SMF 1 suspends establishment or modification of the session, if the SMF 1 determines that a second condition is met, the SMF 1 continues to establish or modify the session.

If it is determined in step S603 that the first session belongs to the session corresponding to the non-uncrewed aerial vehicle service, the SMF 1 may reject the request for establishing the first session or the request for modifying the first session. Optionally, if the second message is a request for modifying the first session to a session corresponding to the uncrewed aerial vehicle service, the SMF 1 may not reject the request. The SMF 1 determines whether the first session is the 1^{st} session corresponding to the uncrewed aerial vehicle service. If the first session is the 1^{st} session corresponding to the uncrewed aerial vehicle service, content shown in S605 to S609 may be performed; or if the first session is not the 1^{st} session corresponding to the uncrewed aerial vehicle service, content shown in S605 to S609 is not performed.

If it is determined in step S603 that the first session belongs to the session corresponding to the uncrewed aerial vehicle service and the second message is used to request to create the first session, the SMF 1 determines whether the first session is the 1^{st} session corresponding to the uncrewed aerial vehicle service. If the first session is the 1^{st} session corresponding to the uncrewed aerial vehicle service, content shown in S605 to S609 may be performed; or if the first session is not the 1^{st} session corresponding to the uncrewed aerial vehicle service, content shown in S605 to S609 is not performed.

If it is determined in step S603 that the first session belongs to the session corresponding to the uncrewed aerial vehicle service and the second message is used to request to modify the first session, the SMF 1 determines whether the request is to modify the session corresponding to the uncrewed aerial vehicle service to a session corresponding to the non-uncrewed aerial vehicle service. If the request is to modify the session corresponding to the uncrewed aerial vehicle service to a session corresponding to the non-uncrewed aerial vehicle service, the SMF 1 rejects the request; or if the request is not to modify the session corresponding to the uncrewed aerial vehicle service to a session corresponding to the non-uncrewed aerial vehicle service, the SMF 1 may perform content shown in S605 to S609.

S605: The SMF 1 sends second indication information to the UE, and correspondingly, the UE receives the second indication information from the SMF 1.

S605 is an optional step. The SMF 1 may send the second indication information to the UE, where the second indication information may indicate that establishment of a session corresponding to the non-uncrewed aerial vehicle service of the UE is prohibited, or may indicate that establishment of a session corresponding to the non-uncrewed aerial vehicle service of the UE is prohibited on the SMF 1. In this way, after receiving the second indication information, before initiating session establishment, the UE may first determine whether the session belongs to the session corresponding to the uncrewed aerial vehicle service. If the session belongs to the session corresponding to the uncrewed aerial vehicle service, the UE initiates a procedure of establishing the session; or if the session belongs to the session corresponding to the non-uncrewed aerial vehicle service, the UE may suspend initiating a procedure of establishing the session. For example, if the UE receives, from the SMF 1, indication information indicating that establishment of a session corresponding to the non-uncrewed aerial vehicle service is allowed, the UE may initiate a procedure of establishing the session. For determining, by the UE, whether the session belongs to the session corresponding to the uncrewed aerial vehicle service, refer to related content of determining, by the SMF 1, whether the first session belongs to the session corresponding to the uncrewed aerial vehicle service. Details are not described herein again.

The second indication information sent by the SMF 1 may further indicate that modification from a session corresponding to the uncrewed aerial vehicle service to a session corresponding to the non-uncrewed aerial vehicle service is prohibited. In this way, after receiving the second indication information, before initiating a session modification procedure, the UE may first determine whether the session modification request is to modify a session corresponding to the uncrewed aerial vehicle service to a session corresponding to the non-uncrewed aerial vehicle service. If the session modification request is not to modify a session corresponding to the uncrewed aerial vehicle service to a session corresponding to the non-uncrewed aerial vehicle service, the UE initiates the session modification procedure; or if the session modification request is to modify a session corresponding to the uncrewed aerial vehicle service to a session corresponding to the non-uncrewed aerial vehicle service, the UE may suspend initiating the session modification procedure. For example, if the UE receives, from the SMF 1, indication information indicating that establishment of a session corresponding to the non-uncrewed aerial vehicle service is allowed, the UE may initiate the session modification procedure. For determining, by the UE, whether the session belongs to the session corresponding to the uncrewed aerial vehicle service, refer to related content of determining, by the SMF 1, whether the first session belongs to the session corresponding to the uncrewed aerial vehicle service. Details are not described herein again.

In this way, the SMF 1 completes restriction on the non-uncrewed aerial vehicle service. Optionally, the SMF 1 may further perform content shown in S606.

S606: The SMF 1 sends a third message to a PCF, and correspondingly, the PCF receives the third message from the SMF 1.

The third message may be used to request or notify to restrict the session corresponding to the non-uncrewed aerial vehicle service of the UE. It should be noted that, in this embodiment, a step performed by the PCF may alternatively be performed by a UDM, a UDR, or an AMF.

S607: The PCF determines that an SMF 2 manages a session corresponding to the non-uncrewed aerial vehicle service of the UE.

After receiving the third message, the PCF may determine an SMF that manages the session corresponding to the non-uncrewed aerial vehicle service of the UE, or the PCF determines an SMF that manages a session of the UE (in FIG. 6, an example in which the PCF determines that the SMF 2 manages the session corresponding to the non-uncrewed aerial vehicle service of the UE is used). For example, the PCF may determine, based on the context information of the UE and/or information about an association between the UE and the SMF that is obtained from a UDM or a UDR, the SMF that manages the session corresponding to the non-uncrewed aerial vehicle service of the UE. Optionally, the PCF may determine, based on the context information of the UE and/or information about an association between the UE and the SMF that is obtained from a UDM or a UDR, the SMF that manages the session of the UE. It should be noted that, if the PCF determines that the SMF 2 manages the session of the UE, and does not determine whether the SMF 2 manages the session corresponding to the non-uncrewed aerial vehicle service of the UE, the SMF 2 may determine, in step S609, whether the SMF 2 manages the session corresponding to the non-uncrewed aerial vehicle service of the UE, and perform a corresponding operation.

For a specific implementation process of S607, refer to S404. Details are not described herein again.

S608: The PCF sends sixth indication information to the SMF 2, and correspondingly, the SMF 2 receives the sixth indication information from the PCF.

In this embodiment, the sixth indication information may indicate (or notify) to release all sessions corresponding to the non-uncrewed aerial vehicle service of the UE that are managed by the SMF 2, or indicate to prohibit establishment or modification of the session corresponding to the non-uncrewed aerial vehicle service, or indicate to release all sessions corresponding to the non-uncrewed aerial vehicle service of the UE that are managed by the SMF 2 and prohibit establishment or modification of the session corresponding to the non-uncrewed aerial vehicle service.

S609: The SMF 2 releases a session that corresponds to the non-uncrewed aerial vehicle service of the UE and that is managed by the SMF 2, and/or prohibits establishment or modification of a session corresponding to the non-uncrewed aerial vehicle service.

The SMF 2 may release, based on the sixth indication information, all sessions corresponding to the non-uncrewed aerial vehicle service of the UE that are managed by the SMF 2 and/or prohibit establishment or modification of the session corresponding to the non-uncrewed aerial vehicle service. For a specific implementation process, refer to S604. Details are not described herein again. Optionally, the SMF 2 may send, to the UE, indication information indicating that establishment of a session corresponding to the non-uncrewed aerial vehicle service is prohibited (or prohibited on the SMF 2).

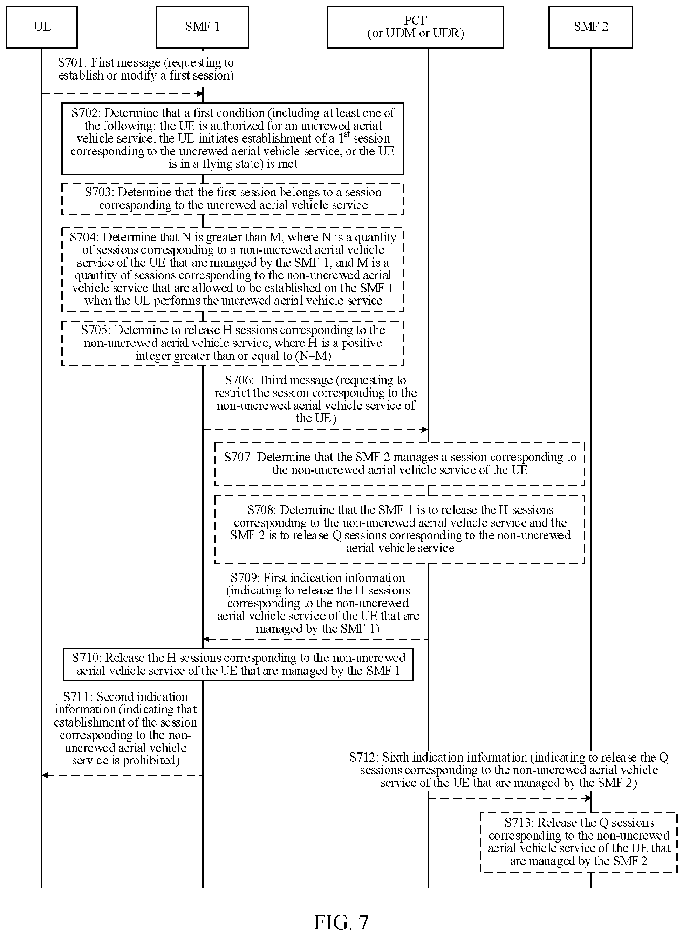

FIG. 7 is another schematic flowchart of a communication method according to an embodiment of this application. In this embodiment, a first device is an SMF 1, and the SMF 1 releases a part of sessions corresponding to a non-uncrewed aerial vehicle service of UE that are managed by the SMF 1. A second device is a PCF, a UDM, a UDR, or an AMF. As shown in FIG. 6, the method may include the following procedure.

S701 to S703, S706, S707, and S711 in FIG. 7 are respectively the same as S601 to S603, S606, S607, and S605 in FIG. 6. A difference is as follows:
S704: The SMF 1 determines that N is greater than M.

For example, the SMF 1 may determine, based on N and M, a quantity of to-be-released sessions corresponding to the non-uncrewed aerial vehicle service of the UE, that is, perform content shown in S704 and S705. Alternatively, the SMF 1 may determine, based on first indication information from a PCF, a quantity of to-be-released sessions corresponding to the non-uncrewed aerial vehicle service of the UE, that is, perform content shown in S706, S708, and S709.

N is a quantity of sessions corresponding to the non-uncrewed aerial vehicle service of the UE that are managed by the SMF 1. For example, the first device may determine N based on context information of the UE, or obtain N from a UDM or a UDR. is a quantity of sessions corresponding to the non-uncrewed aerial vehicle service that are allowed to be established on the SMF 1 when the UE performs the uncrewed aerial vehicle service. M may be preset, or may be configured by a PCF, or may be obtained from a UDM or a UDR.

In S704, the SMF 1 determines whether N is greater than M. If N is less than or equal to M and step S701 is performed, a procedure of establishing or modifying a first session is performed. If N is less than or equal to M and step S701 is not performed, the procedure ends. If N is greater than M, the SMF 1 performs content shown in S705.

S705: The SMF 1 determines to release H sessions corresponding to the non-uncrewed aerial vehicle service.

H is a positive integer greater than or equal to (N-M). For example, the SMF 1 may determine to release H sessions corresponding to the non-uncrewed aerial vehicle service in the N sessions corresponding to the non-uncrewed aerial vehicle service. For example, the SMF 1 may randomly select, from the N sessions corresponding to the non-uncrewed aerial vehicle service, the H sessions corresponding to the non-uncrewed aerial vehicle service. For another example, the SMF 1 may select, based on priorities of the N sessions corresponding to the non-uncrewed aerial vehicle service, the H sessions corresponding to the non-uncrewed aerial vehicle service, for example, H low-priority sessions corresponding to the non-uncrewed aerial vehicle service in the N sessions corresponding to the non-uncrewed aerial vehicle service. For another example, the SMF 1 may select, from the N sessions corresponding to the non-uncrewed aerial vehicle service based on session establishment duration and/or resources consumed by the sessions, the H sessions corresponding to the non-uncrewed aerial vehicle service, for example, H sessions corresponding to the non-uncrewed aerial vehicle service with relatively long (or relatively short) establishment duration, or H sessions corresponding to the non-uncrewed aerial vehicle service with relatively large (or relatively small) resource consumption. It should be understood that selection of the H sessions corresponding to the non-uncrewed aerial vehicle service is not limited in this embodiment of this application.

S708: The PCF determines that the SMF 1 is to release the H sessions corresponding to the non-uncrewed aerial vehicle service and the SMF 2 is to release Q sessions corresponding to the non-uncrewed aerial vehicle service.

In a possible implementation, the SMF 1 may send N to the PCF, for example, include N in a third message and send the third message to the PCF. The PCF may determine, based on N and M, that N is greater than M, and determine that the SMF 1 is to release the H sessions corresponding to the non-uncrewed aerial vehicle services of the UE.

In another possible implementation, the PCF maintains a quantity of sessions corresponding to the non-uncrewed aerial vehicle service that have been established by the UE. For example, the PCF receives N from the SMF 1 and receives, from the SMF 2, a quantity of sessions corresponding to the non-uncrewed aerial vehicle service of the UE that are managed by the SMF 2. The PCF may determine, based on the quantity (for example, denoted as X, where X is a positive integer) of sessions corresponding to the non-uncrewed aerial vehicle service that have been established by the UE and a quantity (for example, denoted as Y, where Y is a positive integer) of sessions corresponding to the non-uncrewed aerial vehicle service that are allowed to be established when the UE performs the uncrewed aerial vehicle service, whether the SMF is to release a session corresponding to the non-uncrewed aerial vehicle service of the UE. Y may be predefined. This is not limited in this embodiment of this application. If X is less than or equal to Y, the PCF determines that the SMF is not to release the session corresponding to the non-uncrewed aerial vehicle service of the UE; or if X is greater than Y, the PCF may determine that the SMF is to release (X-Y) or more sessions corresponding to the non-uncrewed aerial vehicle service of the UE. Further, the PCF may determine that the SMF 1 is to release one or more (for example, denoted as H) sessions corresponding to the non-uncrewed aerial vehicle service of the UE that are managed by the SMF 1, and determine that the SMF 2 is to release Q (Q is a positive number) sessions corresponding to the non-uncrewed aerial vehicle service of the UE that are managed by the SMF 2. For example, the PCF may determine, based on X, Y, N, and M, that the SMF 1 is to release H sessions corresponding to the non-uncrewed aerial vehicle service of the UE that are managed by the SMF 1.

It should be noted that, for determining, by the PCF, that the SMF 2 is to release the Q sessions corresponding to the non-uncrewed aerial vehicle service, refer to an implementation process in which the PCF determines that the SMF 1 is to release the H sessions corresponding to the non-uncrewed aerial vehicle service. Details are not described herein again. In addition, the quantity that is of to-be-released sessions corresponding to the non-uncrewed aerial vehicle service and that is determined by the SMF 1 based on N and M may be the same as or different from the quantity that is of to-be-released sessions corresponding to the non-uncrewed aerial vehicle service and that is determined by the PCF based on N and M or based on X, Y, N, and M. This is not limited in this embodiment of this application.

It should be noted that, a step performed by the PCF may alternatively be performed by a UDM, a UDR, or an AMF.

S709: The PCF sends the first indication information to the SMF 1, and correspondingly, the SMF 1 receives the first indication information from the PCF.

In this embodiment, the first indication information indicates to release H sessions corresponding to the non-uncrewed aerial vehicle service of the UE.

S710: The SMF 1 releases the H sessions corresponding to the non-uncrewed aerial vehicle service of the UE that are managed by the SMF 1.

In S710, the SMF 1 releases the H sessions corresponding to the non-uncrewed aerial vehicle service of the UE that are managed by the SMF 1, and/or prohibits establishment or modification of a session corresponding to the non-uncrewed aerial vehicle service. For a specific implementation process, refer to related descriptions of S604. Details are not described herein again. For ease of description, in FIG. 7, an example in which the SMF 1 releases the H sessions corresponding to the non-uncrewed aerial vehicle service of the UE that are managed by the SMF 1 is used.

S712: The PCF sends sixth indication information to the SMF 2, and correspondingly, the SMF 2 receives the sixth indication information from the PCF.

The sixth indication information may indicate to release the Q sessions corresponding to the non-uncrewed aerial vehicle service of the UE that are managed by the SMF 2, and/or indicate to prohibit establishment or modification of a session corresponding to the non-uncrewed aerial vehicle service. For ease of description, in FIG. 7, an example in which the sixth indication information indicates to release the Q sessions corresponding to the non-uncrewed aerial vehicle service of the UE that are managed by the SMF 2 is used.

S713: The SMF 2 releases the Q sessions corresponding to the non-uncrewed aerial vehicle service of the UE that are managed by the SMF 2, and/or prohibits establishment or modification of a session corresponding to the non-uncrewed aerial vehicle service.

In S713, the SMF 2 releases the Q sessions corresponding to the non-uncrewed aerial vehicle service of the UE that are managed by the SMF 2, and/or prohibits establishment or modification of a session corresponding to the non-uncrewed aerial vehicle service. For a specific implementation process, refer to related descriptions of S604. Details are not described herein again. For ease of description, in FIG. 7, an example in which the SMF 2 releases the Q sessions corresponding to the non-uncrewed aerial vehicle service of the UE that are managed by the SMF 2 is used.

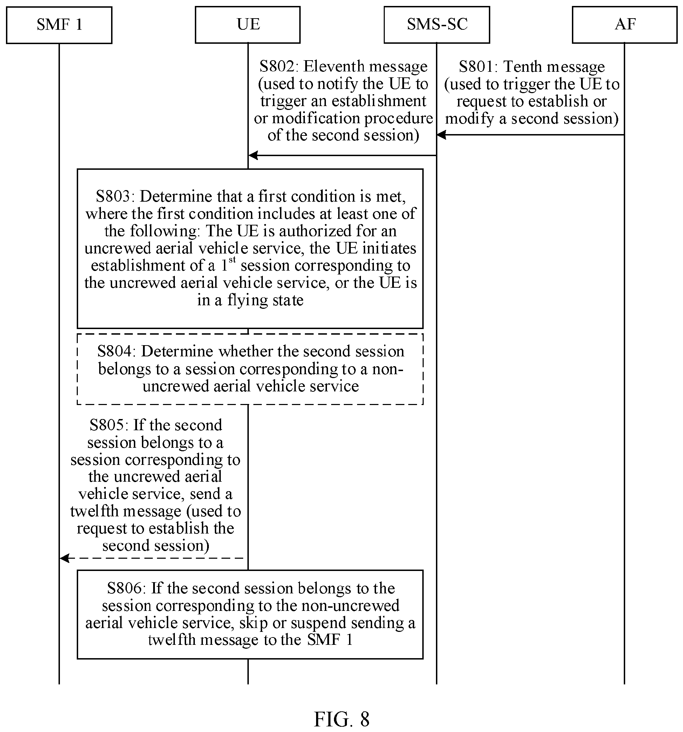

FIG. 8 is another schematic flowchart of a communication method according to an embodiment of this application. In this embodiment, a first device is UE, and the UE does not send or suspends sending, to an SMF 1, a request for establishing or modifying a session corresponding to a non-uncrewed aerial vehicle service. As shown in FIG. 8, the method may include the following procedure.

S801: An AF sends a tenth message to an SMS-SC. Correspondingly, the SMS-SC receives the tenth message from the AF.

The tenth message is used to trigger the UE to request to establish or modify a second session. The tenth message may be, for example, an SMS message. However, a specific implementation form of the tenth message is not limited in this embodiment of this application. For example, the AF may determine to trigger the UE to initiate establishment or modification of the second session, generate the tenth message, and send the tenth message to the SMS-SC. For example, the AF may determine, based on an application requirement (for example, actively pushing video data to the UE), an application requirement of the UE, or the like, to trigger the UE to initiate a procedure of establishing or modifying the second session.

Optionally, the AF sends the tenth message to the SMS-SC, and the tenth message may reach the SMS-SC through an NEF and a UDM. The NEF and the UDM may verify the AF, to determine that a receiving end device of the tenth message is the SMS-SC. It should be understood that a transmission path of the tenth message is not limited in this embodiment of this application.

S802: The SMS-SC sends an eleventh message to the UE. Correspondingly, the UE receives the eleventh message from the SMS-SC.

After receiving the tenth message, the SMS-SC sends the eleventh message to the UE, where the eleventh message is used to notify the UE to trigger a procedure of establishing or modifying the second session.

Optionally, the SMS-SC may send a response message to the AF, where the response message indicates that the eleventh message has been sent to the UE.

S803: The UE determines that a first condition is met.

The first condition may include one or more of the following conditions: The UE is authorized for an uncrewed aerial vehicle service, the UE initiates establishment of a 1^{st} session corresponding to the uncrewed aerial vehicle service, or the UE is in a flying state. For example, the UE may determine, based on stored context information or an uncrewed aerial vehicle authorization status, whether the UE is authorized for the uncrewed aerial vehicle service. For another example, the UE may determine, based on stored context information or a session status, that to-be-initiated session establishment is for the 1^{st} session corresponding to the uncrewed aerial vehicle service. For another example, the UE may determine, based on mobility information and/or fifth indication information, that the UE is in a flying state. For a specific implementation process of S803, refer to related content of S401. Details are not described herein again.

S804: The UE determines whether the second session belongs to a session corresponding to the non-uncrewed aerial vehicle service.

S804 is an optional step. For example, after determining that the first condition is met, the UE may not send or suspend sending a twelfth message to the SMF 1, where the twelfth message is used to request to establish or modify the second session. For another example, the UE may determine, based on the eleventh message, whether the second session belongs to the session corresponding to the non-uncrewed aerial vehicle service. The eleventh message may include one or more of the following information: type indication information of the UE, a UAV ID, a DNN, USS address information, a USS ID, an S-NSSAI identifier, an AF ID, a session service type, or the like. For an implementation in which the UE determines, based on the eleventh message, whether the second session belongs to the session corresponding to the non-uncrewed aerial vehicle service, refer to related descriptions in S401. Details are not described herein again.

Optionally, the eleventh message may include a UE identifier (for example, a generic public subscription identifier (generic public subscription identifier, GPSI), an SUPI, or a UAV ID) and/or an AF identifier. The UE may determine a service type of the second session based on the UE identifier and/or the AF identifier. For example, if the UE identifier is a common terminal identifier instead of an uncrewed aerial vehicle identifier (for example, a UAV ID), the UE may determine that the second session belongs to the session corresponding to the non-uncrewed aerial vehicle service. For another example, if an AF indicated by the AF identifier is an AF of the non-uncrewed aerial vehicle service or the AF is not an AF of the uncrewed aerial vehicle service (not belonging to a USS), the UE may determine that the second session belongs to the session corresponding to the non-uncrewed aerial vehicle service.

If the UE determines that the second session belongs to the session corresponding to the uncrewed aerial vehicle service, the UE performs content shown in S805; or if the UE determines that the second session belongs to the session corresponding to the non-uncrewed aerial vehicle service, the UE performs content shown in S806. In another optional implementation, if the UE determines that the second session belongs to the session corresponding to the uncrewed aerial vehicle service, and is to trigger modification of the session to a session corresponding to the non-uncrewed aerial vehicle service, content shown in S806 is performed; or if the UE determines that the second session belongs to the session corresponding to the non-uncrewed aerial vehicle service, and is to trigger modification of the session to a session corresponding to the uncrewed aerial vehicle service, content shown in S805 is performed.

S805: The UE sends the twelfth message to the SMF 1, and correspondingly, the SMF 1 receives the twelfth message from the UE.

In S805, the second session belongs to the session corresponding to the uncrewed aerial vehicle service, and the UE may trigger modification or establishment of the second session, that is, trigger modification or establishment of a session corresponding to the uncrewed aerial vehicle service. For example, the UE sends the twelfth message to the SMF 1.

S806: The UE does not send or suspends sending the twelfth message to the SMF 1.

In S806, the second session belongs to the session corresponding to the non-uncrewed aerial vehicle service, and the UE does not trigger modification or establishment of the second session, that is, the UE does not trigger modification or establishment of a session corresponding to the non-uncrewed aerial vehicle service. For example, the UE does not send or suspends sending the twelfth message to the SMF 1. Optionally, if the UE suspends sending the twelfth message to the SMF 1, the UE may start a second timer. Further, if the first condition is met during running of the second timer (or when the running ends), the UE does not send the twelfth message to the SMF 1; or if a second condition is met during running of the second timer, the UE sends the twelfth message to the SMF 1. For descriptions about the second condition, refer to related content in FIG. 4. Details are not described herein again.

In the procedure shown in FIG. 8, after receiving, by using the SMS-SC, the eleventh message that is used to request to establish or modify the second session and that is from the AF, the UE may determine that the first condition is met, and when determining that the second session belongs to the session corresponding to the non-uncrewed aerial vehicle service, the UE does not send or suspends sending the twelfth message to the SMF 1. This avoids initiating establishment or modification of the session corresponding to the non-uncrewed aerial vehicle service, thereby reducing attacks carried out by an attacker on the UE by using the non-uncrewed aerial vehicle service, and preventing the non-uncrewed aerial vehicle service from occupying a resource of the uncrewed aerial vehicle service.

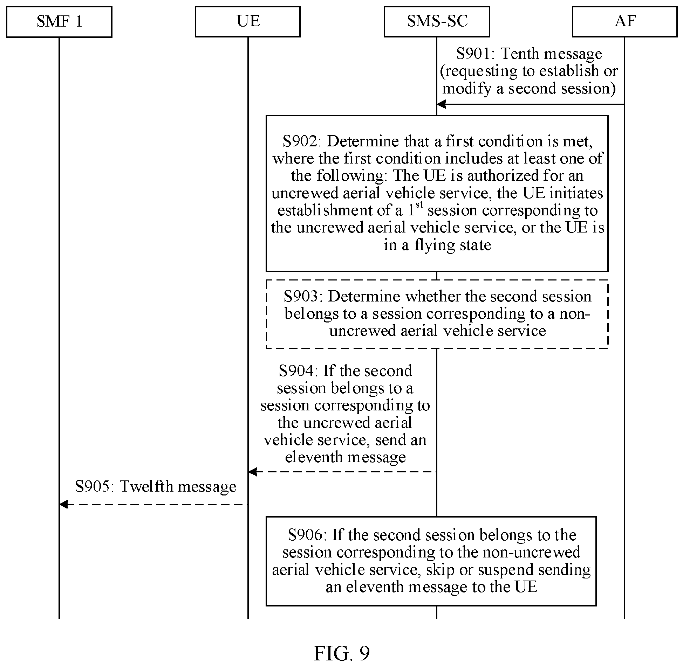

FIG. 9 is another schematic flowchart of a communication method according to an embodiment of this application. In this embodiment, a first device is an SMS-SC, and the SMS-SC does not send or suspends sending, to UE, a request for establishing or modifying a session corresponding to a non-uncrewed aerial vehicle service. As shown in FIG. 9, the method may include the following procedure.

S901: An AF sends a tenth message to the SMS-SC. Correspondingly, the SMS-SC receives the tenth message from the AF.

For a specific implementation process of S901, refer to S801. Details are not described herein again.

S902: The SMS-SC determines that a first condition is met.

The first condition may include one or more of the following conditions: The UE is authorized for an uncrewed aerial vehicle service, the UE initiates establishment of a 1^{st} session corresponding to the uncrewed aerial vehicle service, or the UE is in a flying state. For example, the SMS-SC may subscribe to a service of an AMF (or an SMF or a UAS NF) related to an uncrewed aerial vehicle authorization status or a flight status of the UE. For example, when the UE is authorized for the uncrewed aerial vehicle service, the AMF (or the SMF or the UAS NF) may notify the SMS-SC that the UE is authorized for the uncrewed aerial vehicle service; or the SMS-SC may send a request message to the AMF (or the SMF or the UAS NF), to obtain the uncrewed aerial vehicle authorization status or the flight status of the UE. For another example, the SMS-SC may subscribe to a service related to a session status from the AMF (or the SMF, a UDR, or a UDM). For example, when a quantity of sessions corresponding to the uncrewed aerial vehicle service of the UE changes, the AMF (or the SMF, the UDR, or the UDM) may notify the SMS-SC of a quantity of existing sessions corresponding to the uncrewed aerial vehicle service of the UE, so that the SMS-SC may determine whether a second session is a 1^{st} session that corresponds to the uncrewed aerial vehicle service and that is initiated by the UE for establishment; or the SMS-SC may send a request message to the AMF (or the SMF, the UDR, or the UDM), to obtain a quantity of sessions corresponding to the uncrewed aerial vehicle service of the UE, to determine whether a session (that is, the second session) that is initiated by the UE for establishment is a 1^{st} session corresponding to the uncrewed aerial vehicle service. For another example, the SMS-SC may locally store context information of the UE, and the context information of the UE includes the uncrewed aerial vehicle authorization status and the flight status of the UE. In this way, the SMS-SC may determine the uncrewed aerial vehicle authorization status or the flight status of the UE based on the locally stored context information of the UE. For a specific implementation process of S902, refer to related content of S401. Details are not described herein again.

S903: The SMS-SC determines whether the second session belongs to a session corresponding to the non-uncrewed aerial vehicle service.

S903 is an optional step. For example, after determining that the first condition is met, the SMS-SC may not send or suspend sending an eleventh message to the UE. The eleventh message is used to trigger the UE to request to establish or modify the second session. For another example, the SMS-SC may determine, based on the tenth message, whether the second session belongs to the session corresponding to the non-uncrewed aerial vehicle service. The tenth message may include one or more of the following information: type indication information of the UE, a UAV ID, a DNN, USS address information, a USS ID, an S-NSSAI identifier, an AF ID, a session service type, or the like. For an implementation in which the SMS-SC determines, based on the tenth message, whether the second session belongs to the session corresponding to the non-uncrewed aerial vehicle service, refer to related descriptions in S401. Details are not described herein again.

Optionally, if the tenth message is used to modify the second session, the SMS-SC may send, to another device (for example, the SMF, the UDM, or the UDR), a message used to request whether the second session belongs to the session corresponding to the non-uncrewed aerial vehicle service (that is, learn, from the another device, whether the second session belongs to the session corresponding to the non-uncrewed aerial vehicle service).

Optionally, the tenth message may include a UE identifier (for example, a generic public subscription identifier (generic public subscription identifier, GPSI), an SUPI, or a UAV ID) and/or an AF identifier. The SMS-SC may determine a service type of the second session based on the UE identifier and/or the AF identifier. For example, if the UE identifier is a common terminal identifier instead of an uncrewed aerial vehicle identifier (for example, a UAV ID), the UE may determine that the second session belongs to the session corresponding to the non-uncrewed aerial vehicle service. For another example, if an AF indicated by the AF identifier is an AF of the non-uncrewed aerial vehicle service or the AF is not an AF of the uncrewed aerial vehicle service (not belonging to a USS), the UE may determine that the second session belongs to the session corresponding to the non-uncrewed aerial vehicle service.

If the SMS-SC determines that the second session belongs to the session corresponding to the uncrewed aerial vehicle service, the SMS-SC performs content shown in S904 and S905; or if the SMS-SC determines that the second session belongs to the session corresponding to the non-uncrewed aerial vehicle service, the SMS-SC performs content shown in S906. In another optional implementation, if the SMS-SC determines that the second session belongs to the session corresponding to the uncrewed aerial vehicle service, and is to trigger modification of the session to a session corresponding to the non-uncrewed aerial vehicle service, content shown in S906 is performed; or if the SMS-SC determines that the second session belongs to the session corresponding to the non-uncrewed aerial vehicle service, and is to trigger modification of the session to a session corresponding to the uncrewed aerial vehicle service, content shown in S904 and S905 is performed.

S904: The SMS-SC sends an eleventh message to the UE, and correspondingly, the UE receives the eleventh message from the SMS-SC.

In S904, the second session belongs to the session corresponding to the uncrewed aerial vehicle service or is to be modified to a session corresponding to the uncrewed aerial vehicle service, and the SMS-SC may send the eleventh message to the UE.

S905: The UE sends a twelfth message to the SMF 1, and correspondingly, the SMF 1 receives the twelfth message from the UE.

After receiving the eleventh message, the UE triggers modification or establishment of a session corresponding to the uncrewed aerial vehicle service, and sends the twelfth message to the SMF 1. The twelfth message is used to request to establish or modify the second session.

S906: The SMS-SC does not send or suspends sending the eleventh message to the UE.

In S906, the second session belongs to the session corresponding to the non-uncrewed aerial vehicle service, and the SMS-SC does not send or suspends sending the eleventh message to the UE. Optionally, if the SMS-SC suspends sending the eleventh message to the UE, the SMS-SC may start a second timer. Further, if the first condition is met during running of the second timer (or when the running ends), the SMS-SC does not send the eleventh message to the UE; or if a second condition is met during running of the second timer, the SMS-SC sends the eleventh message to the UE. For descriptions about the second condition, refer to related content in FIG. 4. Details are not described herein again.

In the procedure shown in FIG. 9, after receiving the tenth message that is from the AF and that is used to request to establish or modify the second session, the SMS-SC may determine that the first condition is met, and when determining that the second session belongs to the session corresponding to the non-uncrewed aerial vehicle service, the SMS-SC does not send or suspends sending the eleventh message to the UE. This avoids establishing or modifying the session corresponding to the non-uncrewed aerial vehicle service, thereby reducing attacks carried out by an attacker on the UE by using the non-uncrewed aerial vehicle service, and preventing the non-uncrewed aerial vehicle service from occupying a resource of the uncrewed aerial vehicle service.

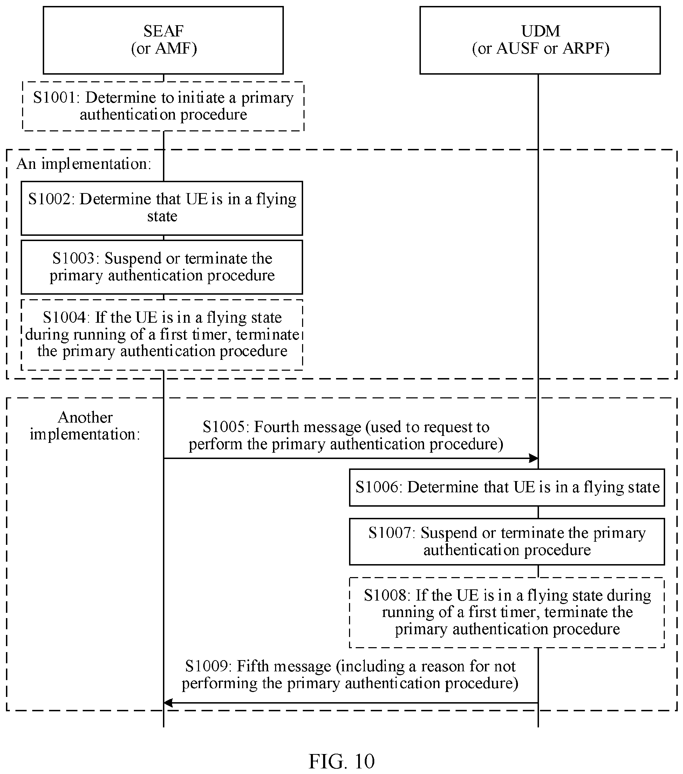

FIG. 10 is another schematic flowchart of a communication method according to an embodiment of this application. In this embodiment, a first control plane procedure is a primary authentication procedure. The primary authentication procedure may be initiated by an SEAF, an AMF, or a UDM. In addition, in this embodiment, a first device may be an SEAF or an AMF, or a first device may be a UDM, an AUSF, or an ARPF. In addition, when the first device is a UDM, an AUSF, or an ARPF, a third device may be an SEAF or an AMF. As shown in FIG. 10, the method includes two implementations. One implementation includes content shown in steps S1002 to S1004, and the other implementation includes content shown in steps S1005 to S1009.

S1001: The SEAF determines to initiate a primary authentication procedure.

S 1001 is an optional step. The SEAF may initiate a primary authentication procedure of UE. For example, when the UE is registered with a network for the first time or the SEAF does not store a security context of the UE, the SEAF may initiate the primary authentication procedure of the UE. For another example, the SEAF may periodically or aperiodically initiate the primary authentication procedure of the UE based on a network configuration. It should be understood that a reason and time for initiating the primary authentication procedure by the SEAF are not limited in this embodiment of this application.

It should be noted that, in this embodiment, a step performed by the SEAF may alternatively be performed by an AMF.

Before the SEAF initiates the primary authentication procedure, the SEAF may perform content shown in S1002 to S1004, or perform content shown in S1005.

S1002: The SEAF determines that the UE is in a flying state.

The SEAF may determine a status of the UE by using an AMF. In an implementation, the SEAF and the AMF are combined in a same network function, and the AMF stores the status of the UE. In this way, the SEAF can read the status of the UE. In another implementation, the SEAF and the AMF are network functions independent of each other, and the SEAF may obtain the status of the UE from the AMF. For example, the SEAF may send, to the AMF, a message used to request the status of the UE. After receiving the message, the AMF sends, to the SEAF, indication information indicating whether the UE is in a flying state or a non-flying state. For another example, the SEAF may subscribe to the status of the UE from the AMF. When the status of the UE is updated (for example, the UE switches from a flying state to a non-flying state, or the UE switches from a non-flying state to a flying state), the AMF may push the status of the UE to the SEAF. For obtaining, by the AMF, the status of the UE, refer to related content in FIG. 5. Details are not described herein again. If the SEAF determines that the UE is in a flying state, the SEAF performs content shown in S1003. If the SEAF determines that the UE is in a non-flying state, the SEAF performs the primary authentication procedure, for example, sends, to a UDM (or an AUSF or an ARPF), a message used to request (or notify) to perform the primary authentication procedure. In FIG. 10, an example in which the SEAF determines that the UE is in a flying state is used.

It should be understood that, in FIG. 10, that the SEAF determines that the UE is in a flying state is used as an example. In another possible implementation, S1002 may be replaced with that the SEAF determines that a first condition is met. For a specific implementation process, refer to S401. Details are not described herein again.

S1003: The SEAF suspends or terminates the primary authentication procedure.

When determining that the UE is in a flying state, the SEAF may suspend or terminate the primary authentication procedure.

S1004: If the UE is in a flying state during running of a first timer (or when the running ends), the SEAF terminates the primary authentication procedure.

S1004 is an optional step. For example, the SEAF suspends the primary authentication procedure, and the SEAF may start the first timer and determine a status of the UE during running of the first timer. For example, the SEAF obtains the status of the UE from the AMF during running of the timer. For a specific implementation, refer to content in S1002. Details are not described herein again. If the SEAF learns, from the AMF, that the UE is in a non-flying state during running of the first timer, the SEAF may end running of the first timer, and prepare to initiate the primary authentication procedure, for example, send, to the UDM (or the AUSF or the ARPF), a message used to request (or notify) to perform the primary authentication procedure. If the UE is in a flying state during running of the first timer (or when the running ends) (for example, the SEAF does not receive, from the AMF during running of the first timer, information indicating that the UE is in a non-flying state), the SEAF may terminate the primary authentication procedure, for example, terminate the primary authentication procedure when the running of the first timer ends. FIG. 10 shows an example in which the UE is in a flying state during running of the first timer.

S1005: The SEAF sends a fourth message to a UDM, and correspondingly, the UDM receives the fourth message from the SEAF.

In this embodiment, the fourth message may be, for example, an authentication request (authenticate request) message. However, a name of the fourth message is not limited in this embodiment of this application. The fourth message may be used to request (or notify) to perform the primary authentication procedure.

It should be noted that, in this embodiment, a step performed by the UDM may alternatively be performed by an AUSF or an ARPF.

S1006: The UDM determines that the UE is in a flying state.

The UDM may determine the status of the UE. For example, the UDM may obtain the status of the UE from the AMF. For a specific implementation, refer to the description that the SEAF obtains the status of the UE from the AMF. Details are not described herein again. If the UDM determines that the UE is in a flying state, content shown in S1007 is performed. If the UDM determines that the UE is in a non-flying state, the primary authentication procedure is performed, for example, an authentication vector of the UE is generated based on the fourth message, and step S1009 is performed. In FIG. 10, an example in which the UDM determines that the UE is in a flying state is used.

It should be understood that, in FIG. 10, that the UDM determines that the UE is in a flying state is used as an example. In another possible implementation, S1006 may be replaced with that the UDM determines that a first condition is met. For a specific implementation process, refer to S401. Details are not described herein again.

S1007: The UDM suspends or terminates the primary authentication procedure.

When determining that the UE is in a flying state, the UDM may suspend or terminate the primary authentication procedure.

S1008: If the UE is in a flying state during running of a first timer, the UDM terminates the primary authentication procedure.

S1008 is an optional step. For example, the UDM suspends the primary authentication procedure, and the UDM may start the first timer, and determine a status of the UE during running of the first timer. For a specific implementation process, refer to related content in S1004. Details are not described herein again. If the UDM learns, from the AMF, that the UE is in a non-flying state during running of the first timer (or when the running ends), the UDM may end running of the first timer, and perform the primary authentication procedure. If the UE is in a flying state during running of the first timer (or when the running ends) (for example, the UDM does not receive, from the AMF during running of the first timer, information indicating that the UE is in a non-flying state), the UDM may terminate the primary authentication procedure, for example, terminate the primary authentication procedure when the running of the first timer ends. FIG. 10 shows an example in which the UE is in a flying state during running of the first timer.

It should be noted that the timer started by the SEAF in S1004 may be the same as or different from the timer started by the UDM in S1008. This is not limited in this embodiment of this application.

S1009: The UDM sends a fifth message to the SEAF, and correspondingly, the SEAF receives the fifth message from the UDM.

In this embodiment, the fifth message may be, for example, an authentication response (authenticate response) message. However, a name of the fifth message is not limited in this embodiment of this application. When the primary authentication procedure is performed, the fifth message may include the authentication vector in step S1006. When the primary authentication procedure is not performed, the fifth message may indicate that the primary authentication procedure is not performed. Optionally, the fifth message may include a reason for not performing the primary authentication procedure. For example, the reason for not performing the primary authentication procedure may be a timeout, and/or that the UE is in a flying state.

In the procedure shown in FIG. 10, before performing (or initiating) the primary authentication procedure of the UE, the first device may determine the status of the UE, and when determining that the UE is in a flying state, suspend or terminate the primary authentication procedure of the UE. This can avoid a problem that power consumption of the UE increases by performing the primary authentication procedure of the UE during flight of the UE, and consequently power of the UE is exhausted in advance and a flight task cannot be completed. In addition, suspension or termination of the primary authentication procedure can release a resource required for performing the primary authentication procedure, so that more available resources can be provided for the UE in flight to perform the uncrewed aerial vehicle service.

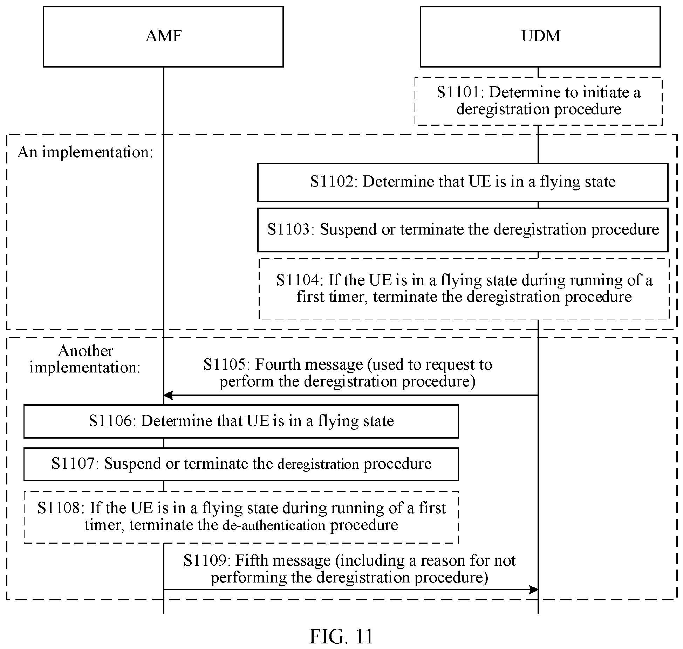

FIG. 11 is another schematic flowchart of a communication method according to an embodiment of this application. In this embodiment, a first control plane procedure is a deregistration procedure, and the deregistration procedure may be initiated by a UDM, or may be initiated by an AMF. In addition, in this embodiment, a first device may be a UDM, or a first device may be an AMF. In addition, when the first device is an AMF, a third device may be a UDM. As shown in FIG. 11, the method includes two implementations. One implementation includes content shown in steps S1102 to S1104, and the other implementation includes content shown in steps S1105 to S1109. When the deregistration procedure is initiated by the AMF, steps S1101 to S1105 are not performed.

S1101: The UDM determines to initiate a deregistration procedure.

S1101 is an optional step. The UDM may initiate a deregistration procedure of UE. For example, the UDM may determine, based on an operation requirement (for example, subscription information of the UE changes, or subscription of the UE does not support a current usage status or a usage region), to initiate the deregistration procedure of the UE. It should be understood that a reason and time for initiating the deregistration procedure by the UDM are not limited in this embodiment of this application.

Before the UDM initiates the deregistration procedure, the UDM may perform content shown in S1102 to S1104, or perform content shown in S1105.

S1102: The UDM determines that the UE is in a flying state.

The UDM may determine the status of the UE. For example, the UDM may obtain the status of the UE from an AMF or a UDR. For a specific implementation process, refer to related content in FIG. 10 in which the SEAF obtains the status of the UE from the AMF. Details are not described herein again. If the UDM determines that the UE is in a flying state, the UDM performs content shown in S1103. If the UDM determines that the UE is in a non-flying state, the UDM performs the deregistration procedure, for example, sends, to the AMF, a message used to request (or notify) to perform the deregistration procedure. In FIG. 11, an example in which the UDM determines that the UE is in a flying state is used.

It should be understood that, in FIG. 11, that the UDM determines that the UE is in a flying state is used as an example. In another possible implementation, S1102 may be replaced with that the UDM determines that a first condition is met. For a specific implementation process, refer to S401. Details are not described herein again.

S1103: The UDM suspends or terminates the deregistration procedure.

When determining that the UE is in a flying state, the UDM may suspend or terminate the deregistration procedure.

S1104: If the UE is in a flying state during running of a first timer, the UDM terminates the deregistration procedure.

S1104 is an optional step. For example, the UDM suspends the deregistration procedure, and the UDM may start the first timer, and determine a status of the UE during running of the first timer. For a specific implementation process, refer to related content in S1004. Details are not described herein again. If the UDM learns, from the AMF, that the UE is in a non-flying state during running of the first timer, the UDM may end running of the first timer, and prepare to initiate the deregistration procedure, for example, send, to the AMF, a message used to request (or notify) to perform the deregistration procedure. If the UE is in a flying state during running of the first timer (for example, the UDM does not receive, from the AMF during running of the first timer, information indicating that the UE is in a non-flying state), the UDM may terminate the deregistration procedure, for example, terminate the deregistration procedure when the running of the first timer ends. FIG. 11 shows an example in which the UE is in a flying state during running of the first timer.

S1105: The UDM sends a fourth message to the AMF, and correspondingly, the AMF receives the fourth message from the UDM.

In this embodiment, the fourth message may be, for example, a deregistration notification (deregistration notification) message. However, a name of the fourth message is not limited in this embodiment of this application. The fourth message may be used to request (or notify) to perform the deregistration procedure.

S1106: The AMF determines that the UE is in a flying state.

The AMF may determine the status of the UE. For a specific implementation process, refer to content in FIG. 5. Details are not described herein again. If the AMF determines that the UE is in a flying state, the AMF performs content shown in S1107. If the AMF determines that the UE is in a non-flying state, the AMF performs the deregistration procedure, for example, initiates a procedure of releasing all sessions of the UE. Optionally, the AMF may send a request message for deregistration to the UE. In FIG. 11, an example in which the AMF determines that the UE is in a flying state is used.

It should be understood that, in FIG. 11, that the AMF determines that the UE is in a flying state is used as an example. In another possible implementation, S1106 may be replaced with that the AMF determines that a first condition is met. For a specific implementation process, refer to S401. Details are not described herein again.

It should be noted that, in the deregistration procedure initiated by the AMF, S1101 to S1105 are not performed, but S1106 is performed. For example, according to an operation or management requirement for the AMF, the AMF cannot support expiration of an allowed or predetermined deregistration time of the UE. It should be understood that a reason and time for initiating the deregistration procedure by the AMF are not limited in this embodiment of this application.

S1107: The AMF suspends or terminates the deregistration procedure.

When determining that the UE is in a flying state, the AMF may suspend or terminate the deregistration procedure.

S1108: If the UE is in a flying state during running of a first timer, the AMF terminates the deregistration procedure.

S1108 is an optional step. For example, the AMF suspends the deregistration procedure, and the AMF may start the first timer, and determine a status of the UE during running of the first timer. For a specific implementation process, refer to related content in S1104. Details are not described herein again. If the UE is in a non-flying state during running of the first timer, the AMF may end running of the first timer, and perform the deregistration procedure. If the UE is in a flying state during running of the first timer, the AMF may terminate the deregistration procedure, for example, terminate the deregistration procedure when the running of the first timer ends. FIG. 11 shows an example in which the UE is in a flying state during running of the first timer.

It should be noted that the timer started by the UDM in S1104 may be the same as or different from the timer started by the AMF in S1108. This is not limited in this embodiment of this application.

S1109: The AMF sends a fifth message to the UDM, and correspondingly, the UDM receives the fifth message from the AMF.

In this embodiment, the fifth message may be, for example, a deregistration notification response (deregistration notification response) message. However, a name of the fifth message is not limited in this embodiment of this application. If the deregistration procedure is not performed, the fifth message may indicate that the deregistration procedure is not performed. If the deregistration procedure is performed in S1106 (the UE is not in a flying state or does not meet the first condition), the fifth message may be used to acknowledge that the fourth message is received. Optionally, the fifth message may include a reason for not performing the deregistration procedure. For example, the reason for not performing the deregistration procedure may be a timeout, and/or that the UE is in a flying state.

In the procedure shown in FIG. 11, before performing (or initiating) the deregistration procedure of the UE, the first device may determine the status of the UE, and suspend or terminate the deregistration procedure of the UE when determining that the UE is in a flying state. This can avoid a problem that the UE cannot communicate with a mobile communication network because a connection between the UE and the mobile communication network is disconnected due to completion of the deregistration procedure of the UE during flight of the UE, and consequently the UE cannot respond to a control instruction of a remote control and cannot perform an uncrewed aerial vehicle service. In addition, suspension or termination of the deregistration procedure can release a resource required for performing the deregistration procedure, so that more available resources can be provided for the UE in flight to perform the uncrewed aerial vehicle service.

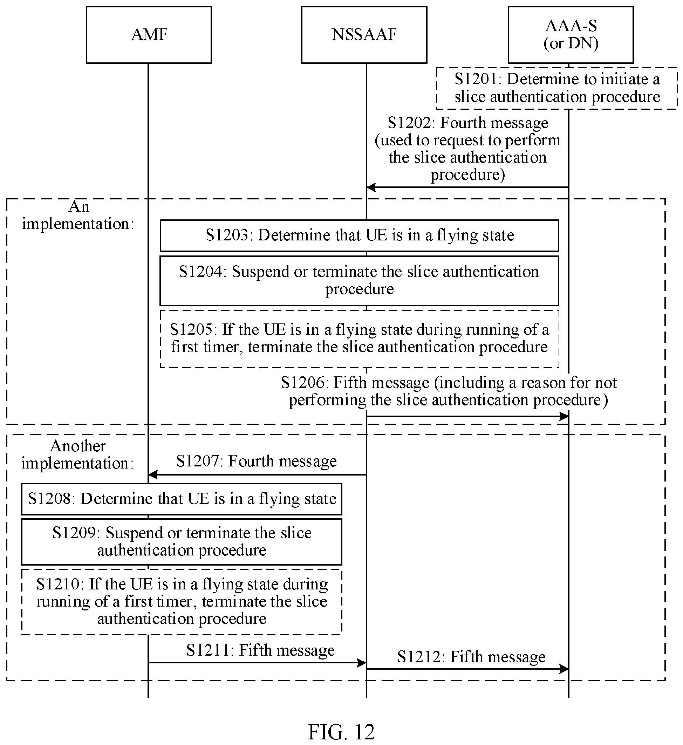

FIG. 12 is another schematic flowchart of a communication method according to an embodiment of this application. In this embodiment, a first control plane procedure is a slice authentication procedure. The slice authentication procedure may be initiated by an AAA-S, or may be initiated by aDN, or may be initiated by an AMF. In addition, in this embodiment, a first device may be an NSSAAF, or a first device may be an AMF. In addition, when the first device is an NSSAAF, a third device is an AAA-S or a DN; or when the first device is an AMF, a third device may be an NSSAAF. As shown in FIG. 12, when the slice authentication procedure is initiated by an AAA-S (or a DN), the method includes two implementations. One implementation includes content shown in steps S1203 to S1206, and the other implementation includes content shown in steps S1207 to S1212. When the slice authentication procedure is initiated by the AMF, an implementation includes content shown in steps S1208 to S1212.

S1201: The AAA-S determines to initiate a slice authentication procedure or a slice re-authentication procedure.

In FIG. 12, an example in which the AAA-S determines to initiate a slice authentication procedure is used.

S1201 is an optional step. The AAA-S may initiate a slice authentication procedure of UE. For example, the AAA-S may determine, based on that the AAA-S detects that a slice usage status of the UE is abnormal, to initiate the slice authentication procedure of the UE. For another example, the AAA-S may periodically or aperiodically initiate the slice authentication procedure of the UE. It should be understood that a reason and time for initiating the slice authentication procedure by the AAA-S are not limited in this embodiment of this application.

It should be noted that, in this embodiment, a step performed by the AAA-S may alternatively be performed by a DN.

S1202: The AAA-S sends a fourth message to an NSSAAF, and correspondingly, the NSSAAF receives the fourth message from the AAA-S.

In this embodiment, the fourth message may be, for example, an authentication request message or a re-authentication request (re-authenticate request) message. However, a name of the fourth message is not limited in this embodiment of this application. The fourth message may be used to request (or notify) to perform the slice authentication procedure.

After the NSSAAF receives the fourth message, the NSSAAF may perform content shown in S1203 to S1206, or perform content shown in S1207.

S1203: The NSSAAF determines that the UE is in a flying state.

The NSSAAF may determine a status of the UE. For example, the NSSAAF may obtain the status of the UE from an AMF. For a specific implementation process, refer to related content in FIG. 10 in which the SEAF obtains the status of the UE from the AMF. Details are not described herein again. If the NSSAAF determines that the UE is in a flying state, content shown in S1204 is performed. If the NSSAAF determines that the UE is in a non-flying state, the slice authentication procedure is performed, for example, a message used to request (or notify) to perform the slice authentication procedure is sent to the AMF. In FIG. 12, an example in which the NSSAAF determines that the UE is in a flying state is used.

It should be understood that, in FIG. 12, that the NSSAAF determines that the UE is in a flying state is used as an example. In another possible implementation, S1202 may be replaced with that the NSSAAF determines that a first condition is met. For a specific implementation process, refer to S401. Details are not described herein again.

S1204: The NSSAAF suspends or terminates the slice authentication procedure.

When determining that the UE is in a flying state, the NSSAAF may suspend or terminate the slice authentication procedure.

S1205: If the UE is in a flying state during running of a first timer, the NSSAAF terminates the slice authentication procedure.

S1205 is an optional step. For example, the NSSAAF suspends the slice authentication procedure, and the NSSAAF may start the first timer, and determine a status of the UE during running of the first timer. For a specific implementation process, refer to related content in S1004. Details are not described herein again. If the NSSAAF learns, from the AMF, that the UE is in a non-flying state during running of the first timer, the NSSAAF may end running of the first timer, and perform the slice authentication procedure, for example, send, to the AMF, a message used to request (or notify) to perform the slice authentication procedure. If the UE is in a flying state during running of the first timer (for example, the NSSAAF does not receive, from the AMF during running of the first timer, information indicating that the UE is in a non-flying state), the NSSAAF may terminate the slice authentication procedure, for example, terminate the slice authentication procedure when the running of the first timer ends. FIG. 12 shows an example in which the UE is in a flying state during running of the first timer.

S1206: The NSSAAF sends a fifth message to an AAA-S, and correspondingly, the AAA-S receives the fifth message from the NSSAAF.

In this embodiment, the fifth message may be, for example, an authentication response or a re-authentication response (re-authenticate response) message. However, a name of the fifth message is not limited in this embodiment of this application. The fifth message may indicate that the slice authentication procedure is not performed. Optionally, the fifth message may include a reason for not performing the slice authentication procedure. For example, the reason for not performing the slice authentication procedure may be a timeout, and/or that the UE is in a flying state.

S1207: The NSSAAF sends a fourth message to the AMF, and correspondingly, the AMF receives the fourth message from the NSSAAF.

For descriptions of the fourth message, refer to content of S 1202. Details are not described herein again.

S1208: The AMF determines that the UE is in a flying state.

It should be noted that, in the slice authentication procedure initiated by the AMF, S1201 to S1207 are not performed, but S1208 is directly performed. For example, the AMF may determine, based on a received registration request message of the UE, that slice authentication needs to be performed on the UE, to prepare to initiate slice authentication. For another example, after the UE performs primary authentication again or the UE moves to a new PLMN (for example, roams), the AMF determines that slice authentication needs to be initiated. It should be understood that a reason and time for initiating the slice authentication procedure by the AMF are not limited in this embodiment of this application.

The AMF may determine the status of the UE. For a specific implementation process, refer to content in FIG. 5. Details are not described herein again.

If the AMF determines that the UE is in a flying state, the AMF performs content shown in S1209.

If the AMF determines that the UE is in a non-flying state, steps S1209 to S 1212 are not performed, but the slice authentication procedure is performed. If the slice authentication is initiated by the AAA-S, the AMF may send a response message for the fourth message to the NSSAAF. Optionally, before sending the response message for the fourth message, the AMF may send a slice authentication message to the UE. Further, if the AMF initiates the slice authentication procedure, the AMF may further send a slice authentication request message to the AAA-S (through the NSSAAF). FIG. 12 does not show a step of performing slice authentication. In addition, in FIG. 12, an example in which the AMF determines that the UE is in a flying state is used.

It should be understood that, in FIG. 12, that the AMF determines that the UE is in a flying state is used as an example. In another possible implementation, S1208 may be replaced with that the AMF determines that a first condition is met. For a specific implementation process, refer to S401. Details are not described herein again.

S1209: The AMF suspends or terminates the slice authentication procedure.

When determining that the UE is in a flying state, the AMF may suspend or terminate the slice authentication procedure.

S1210: If the UE is in a flying state during running of a first timer, the AMF terminates the slice authentication procedure.

S1210 is an optional step. For example, the AMF suspends the slice authentication procedure, and the AMF may start the first timer, and determine a status of the UE during running of the first timer. For a specific implementation process, refer to related content in S1205. Details are not described herein again. If the UE is in a non-flying state during running of the first timer, the AMF may end running of the first timer, and perform the slice authentication procedure. If the UE is in a flying state during running of the first timer, the AMF may terminate the slice authentication procedure, for example, terminate the slice authentication procedure when the running of the first timer ends. FIG. 12 shows an example in which the UE is in a flying state during running of the first timer.

It should be noted that the timer started by the NSSAAF in S1205 may be the same as or different from the timer started by the AMF in S1210. This is not limited in this embodiment of this application.

S1211: The AMF sends a fifth message to the NSSAAF, and correspondingly, the NSSAAF receives the fifth message from the AMF.

For descriptions of the fifth message, refer to the content of S1206. Details are not described herein again.

S1212: The NSSAAF sends a fifth message to an AAA-S, and correspondingly, the AAA-S receives the fifth message from the NSSAAF.

After receiving the fifth message, the NSSAAF may forward the fifth message to the AAA-S. For details, refer to related descriptions of S1206. Details are not described herein again.

In the procedure shown in FIG. 12, before performing the slice authentication procedure of the UE, the first device may determine the status of the UE, and when determining that the UE is in a flying state, suspend or terminate the slice authentication procedure of the UE. This can avoid a problem that power consumption of the UE increases by performing the slice authentication procedure of the UE during flight of the UE, and consequently power of the UE is exhausted in advance and a flight task cannot be completed. In addition, suspension or termination of the slice authentication procedure can release a resource required for performing the slice authentication procedure, so that more available resources can be provided for the UE in flight to perform the uncrewed aerial vehicle service.

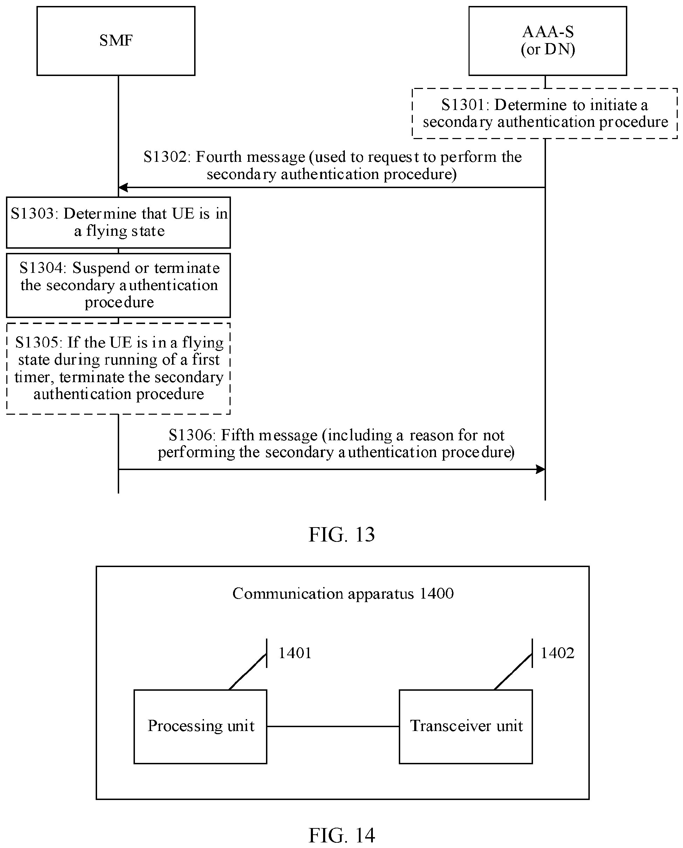

FIG. 13 is another schematic flowchart of a communication method according to an embodiment of this application. In this embodiment, a first control plane procedure is a secondary authentication procedure. The secondary authentication procedure may be initiated by an AAA-S, or may be initiated by a DN, or may be initiated by an SMF. In addition, in this embodiment, a first device is an SMF, and a third device is an AAA-S or a DN. As shown in FIG. 13, the method includes the following steps.

S1301: The AAA-S determines to initiate a secondary authentication procedure or a re-authentication procedure of secondary authentication.

In FIG. 13, an example in which the AAA-S determines to initiate a secondary authentication procedure is used.

S1301 is an optional step. The AAA-S may initiate a secondary authentication procedure of UE. For example, the AAA-S may determine, based on that the AAA-S detects that a session of the UE is abnormal, to initiate the secondary authentication procedure of the UE. For another example, the AAA-S may periodically or aperiodically initiate the secondary authentication procedure of the UE. It should be understood that a reason and time for initiating the secondary authentication procedure by the AAA-S are not limited in this embodiment of this application.

It should be noted that, in this embodiment, a step performed by the AAA-S may alternatively be performed by a DN.

S1302: The AAA-S sends a fourth message to an SMF, and correspondingly, the SMF receives the fourth message from the AAA-S.

In this embodiment, the fourth message may be, for example, a re-authentication request (re-authenticate request) or an authentication request message. However, a name of the fourth message is not limited in this embodiment of this application. The fourth message may be used to request (or notify) to perform the secondary authentication procedure.

S1303: The SMF determines that the UE is in a flying state.

It should be noted that in the secondary authentication procedure initiated by the SMF, the SMF does not perform S1301 and S1302, but directly initiates S1303. For example, the SMF may determine, based on a received session establishment request message of the UE, that the UE needs secondary authentication. It should be understood that a reason and time for initiating the secondary authentication procedure by the SMF are not limited in this embodiment of this application.

The SMF may determine a status of the UE. For example, the SMF may obtain the status of the UE from an AMF. For a specific implementation process, refer to related content in FIG. 10 in which the SEAF obtains the status of the UE from the AMF. Details are not described herein again. If the SMF determines that the UE is in a flying state, the SMF performs content shown in S1304. If the SMF determines that the UE is in a non-flying state, the SMF performs the secondary authentication procedure (the secondary authentication procedure initiated by the AAA-S) or initiates the secondary authentication procedure (the secondary authentication procedure initiated by the AMF). The secondary authentication procedure is not shown in FIG. 13. In FIG. 13, an example in which the SMF determines that the UE is in a flying state is used.

It should be understood that, in FIG. 13, that the SMF determines that the UE is in a flying state is used as an example. In another possible implementation, S1302 may be replaced with that the SMF determines that a first condition is met. For a specific implementation process, refer to S401. Details are not described herein again.

S1304: The SMF suspends or terminates the secondary authentication procedure.

When determining that the UE is in a flying state, the SMF may suspend or terminate the secondary authentication procedure.

S1305: If the UE is in a flying state during running of a first timer, the SMF terminates the secondary authentication procedure.

S1305 is an optional step. For example, the SMF suspends the secondary authentication procedure, and the SMF may start the first timer, and determine a status of the UE during running of the first timer. For a specific implementation process, refer to related content in S1004. Details are not described herein again. If the SMF learns, from the AMF, that the UE is in a non-flying state during running of the first timer, the SMF may end running of the first timer, and prepare to initiate the secondary authentication procedure, for example, send, to the AMF, a message used to request (or notify) to perform the secondary authentication procedure. If the UE is in a flying state during the running of the first timer (for example, the SMF does not receive, from the AMF during running of the first timer, information indicating that the UE is in a non-flying state), the SMF may terminate the secondary authentication procedure, for example, terminate the secondary authentication procedure when the running of the first timer ends. FIG. 13 shows an example in which the UE is in a flying state during running of the first timer.

S1306: The SMF sends a fifth message to an AAA-S, and correspondingly, the AAA-S receives the fifth message from the SMF.

In this embodiment, the fifth message may be, for example, a re-authentication response (re-authenticate response) message. However, a name of the fifth message is not limited in this embodiment of this application. The fifth message may indicate that the secondary authentication procedure is not performed. Optionally, the fifth message may include a reason for not performing the secondary authentication procedure. For example, the reason for not performing the secondary authentication procedure may be a timeout, and/or that the UE is in a flying state.

In the procedure shown in FIG. 13, before performing the secondary authentication procedure of the UE, the first device may determine the status of the UE, and when determining that the UE is in a flying state, suspend or terminate the secondary authentication procedure of the UE. This can avoid a problem that power consumption of the UE increases by performing the secondary authentication procedure of the UE during flight of the UE, and consequently power of the UE is exhausted in advance and a flight task cannot be completed. In addition, suspension or termination of the secondary authentication procedure can release a resource required for performing the secondary authentication procedure, so that more available resources can be provided for the UE in flight to perform the uncrewed aerial vehicle service.

In the foregoing embodiments provided in this application, the methods provided in embodiments of this application are separately described from a perspective of interaction between the first device and the second device. To implement functions in the foregoing methods provided in embodiments of this application, the first device or the second device may include a hardware structure and/or a software module, and implement the foregoing functions in a form of the hardware structure, the software module, or a combination of the hardware structure and the software module.

The following describes communication apparatuses for implementing the foregoing methods in embodiments of this application with reference to the accompanying drawings. Therefore, all the foregoing content may be used in the following embodiments. Repeated content is not described again.

FIG. 14 is a diagram of a structure of a communication apparatus 1400. The communication apparatus 1400 may correspondingly implement functions or steps implemented by the first device or the second device in the foregoing method embodiments. The communication apparatus may include a processing unit 1401 and a transceiver unit 1402. Optionally, the communication apparatus 1400 may further include a storage unit (not shown in FIG. 14). The storage unit may be configured to store instructions (code or a program) and/or data. The processing unit 1401 and the transceiver unit 1402 may be coupled to the storage unit. For example, the processing unit 1401 may read the instructions (the code or the program) and/or the data in the storage unit, to implement a corresponding method. The foregoing units may be independently disposed, or may be partially or completely integrated. For example, the transceiver unit 1402 may include a sending unit and a receiving unit.

In an example, the communication apparatus 1400 may implement functions or steps implemented by the first device in the foregoing method embodiments.

The processing unit 1401 is configured to determine that a first condition is met, where the first condition includes one or more of the following conditions: a terminal device is authorized for an uncrewed aerial vehicle service, the terminal device initiates establishment of a 1^{st} session corresponding to the uncrewed aerial vehicle service, or the terminal device is in a flying state; and restrict a non-uncrewed aerial vehicle service of the terminal device and/or restrict a first control plane procedure of the terminal device, where the first control plane procedure is not a procedure specific to the uncrewed aerial vehicle service.

In a possible implementation, when restricting the non-uncrewed aerial vehicle service of the terminal device, the processing unit 1401 may be specifically configured to:
with the first device being a first session management function device, release all or a part of sessions corresponding to the non-uncrewed aerial vehicle service that are managed by the first device, and/or prohibit establishment or modification of a session corresponding to the non-uncrewed aerial vehicle service; or
with the first device being a short message service-service center, skip or suspend sending a first message to the terminal device, where the first message is used to request to establish or modify a session corresponding to the non-uncrewed aerial vehicle service; or
with the first device being the terminal device, skip or suspend sending a first message to a first session management function device, where the first message is used to request to establish or modify a session corresponding to the non-uncrewed aerial vehicle service.

In a possible implementation, if the first device determines that the terminal device is authorized for the uncrewed aerial vehicle service, and/or the terminal device is in a flying state, before the first device restricts the non-uncrewed aerial vehicle service of the terminal device and/or restricts the first control plane procedure, the transceiver unit 1402 is configured to receive a second message from the terminal device, where the second message is used to request to establish a first session; and the processing unit 1401 is further configured to determine, based on the second message, that the first session belongs to a session corresponding to the uncrewed aerial vehicle service.

In a possible implementation, the transceiver unit 1402 is further configured to send a third message to a second device, where the third message is used to request to restrict the non-uncrewed aerial vehicle service of the terminal device.

In a possible implementation, the transceiver unit 1402 is further configured to receive first indication information from the second device, where the first indication information indicates to release one or more sessions corresponding to the non-uncrewed aerial vehicle service. When the non-uncrewed aerial vehicle service of the terminal device is restricted, the processing unit 1401 is specifically configured to release, based on the first indication information, the one or more sessions corresponding to the non-uncrewed aerial vehicle service.

In another possible implementation, that the first device restricts a non-uncrewed aerial vehicle service of the terminal device includes that the first device releases all or a part of sessions corresponding to the non-uncrewed aerial vehicle service that are managed by the first device, and the processing unit 1401 is further configured to determine that N is greater than M, where N is a quantity of sessions corresponding to the non-uncrewed aerial vehicle service that are managed by the first device, and M is a quantity of sessions corresponding to the non-uncrewed aerial vehicle service that are allowed to be established on the first device when the terminal device performs the uncrewed aerial vehicle service; and determine to release H sessions corresponding to the non-uncrewed aerial vehicle service, where H is a positive integer greater than or equal to (N-M).

In a possible implementation, when the non-uncrewed aerial vehicle service of the terminal device is restricted, the transceiver unit 1402 is configured to send second indication information to the terminal device, where the second indication information indicates that establishment of the session corresponding to the non-uncrewed aerial vehicle service is prohibited.

In a possible implementation, the first control plane procedure includes one or more of a primary authentication procedure, a deregistration procedure, a slice authentication procedure, or a secondary authentication procedure.

In a possible implementation, when the first control plane procedure of the terminal device is restricted, the processing unit 1401 is configured to suspend or terminate the first control plane procedure.

In a possible implementation, after the first device suspends the first control plane procedure, the processing unit 1401 is further configured to start a first timer; determine that the terminal device meets the first condition during running of the first timer; and terminate the first control plane procedure when the running of the first timer ends.

In a possible implementation, the transceiver unit 1402 is further configured to receive a fourth message from a third device, where the fourth message is used to request to perform the first control plane procedure; and send a fifth message to the third device, where the fifth message includes a reason for not performing the first control plane procedure.

In a possible implementation, when determining that the terminal device is in a flying state, the transceiver unit 1402 is configured to receive third indication information from an access and mobility management function device, where the third indication information indicates that the terminal device is in a flying state.

Optionally, the transceiver unit 1402 is further configured to send a sixth message to the access and mobility management function network element, where the sixth message is used to obtain a status of the terminal device, and the status of the terminal device includes the flying state and/or a non-flying state.

In a possible implementation, the first device is an access and mobility management function device; and when determining that the terminal device is in a flying state, the transceiver unit 1402 is configured to receive fourth indication information from a fourth device, where the fourth indication information indicates that the terminal device is in a flying state; or the processing unit 1401 is configured to determine, based on mobility information of the terminal device and/or flight information of the terminal device, that the terminal device is in a flying state.

In a possible implementation, the first device is the terminal device; and when determining that the terminal device is in a flying state, the processing unit 1401 is configured to determine, based on mobility information and/or fifth indication information that is from an application layer, that the terminal device is in a flying state, where the fifth indication information indicates that the terminal device enters a flight mode.

In a possible implementation, the processing unit 1401 is further configured to determine that a second condition is met, where the second condition includes one or more of the following conditions: authorization for the uncrewed aerial vehicle service is revoked from the terminal device, the terminal device is not authorized for the uncrewed aerial vehicle service, the uncrewed aerial vehicle service of the terminal device is deregistered, or the terminal device releases a last session corresponding to the uncrewed aerial vehicle service.

With the first device being the first session management function device, the transceiver unit 1402 is further configured to receive a seventh message from the terminal device, and the processing unit 1401 is further configured to establish or modify, based on the seventh message, a session corresponding to the non-uncrewed aerial vehicle service, where the seventh message is used to request to establish or modify the session corresponding to the non-uncrewed aerial vehicle service.

Alternatively, with the first device being the short message service-service center, the transceiver unit 1402 is further configured to send an eighth message to the terminal device, where the eighth message is used to request to establish or modify a session corresponding to the non-uncrewed aerial vehicle service.

Alternatively, with the first device being the terminal device, the transceiver unit 1402 is further configured to send an eighth message to the first session management function device, where the eighth message is used to request to establish or modify a session corresponding to the non-uncrewed aerial vehicle service.

In a possible implementation, the processing unit 1401 is further configured to determine that the second condition is met, where the second condition includes one or more of the following conditions: authorization for the uncrewed aerial vehicle service is revoked from the terminal device, the terminal device is not authorized for the uncrewed aerial vehicle service, the uncrewed aerial vehicle service of the terminal device is deregistered, or the terminal device releases the last session corresponding to the uncrewed aerial vehicle service; the transceiver unit 1402 is further configured to receive the fourth message from the third device, where the fourth message is used to request to perform the first control plane procedure; and the processing unit 1401 is further configured to perform the first control plane procedure.

In another example, the communication apparatus 1400 may implement functions or steps implemented by the second device in the foregoing method embodiments.

The transceiver unit 1402 is configured to receive a message that is from a first session management function device and that is used to request to restrict a non-uncrewed aerial vehicle service of the terminal device.

The processing unit 1401 is configured to determine, based on the message, that a second session management function device manages a session corresponding to the non-uncrewed aerial vehicle service of the terminal device.

The transceiver unit 1402 is further configured to send indication information to the second session management function device, where the indication information indicates to release all or a part of sessions corresponding to the non-uncrewed aerial vehicle service that are managed by the second session management function device, and/or indicates to prohibit establishment or modification of the session corresponding to the non-uncrewed aerial vehicle service.

In a possible implementation, the transceiver unit 1402 is further configured to send first indication information to the first session management function device, where the first indication information indicates to release one or more sessions corresponding to the non-uncrewed aerial vehicle service.

In a possible implementation, the transceiver unit 1402 is further configured to receive N from the first session management function device, where N is a quantity of sessions corresponding to the non-uncrewed aerial vehicle service that are managed by the first session management function device; and the processing unit 1401 is further configured to determine, based on a quantity of sessions corresponding to the non-uncrewed aerial vehicle service that have been established by the terminal device, N, and M, that the first session management function device needs to release one or more sessions corresponding to the non-uncrewed aerial vehicle service, where M is a quantity of sessions corresponding to the non-uncrewed aerial vehicle service that are allowed to be established on the first session management function device when the terminal device performs the uncrewed aerial vehicle service.

For more detailed descriptions of the processing unit 1401 and the transceiver unit 1402, directly refer to related descriptions in the method embodiment shown in any one of FIG. 4 to FIG. 13. Details are not described herein again.

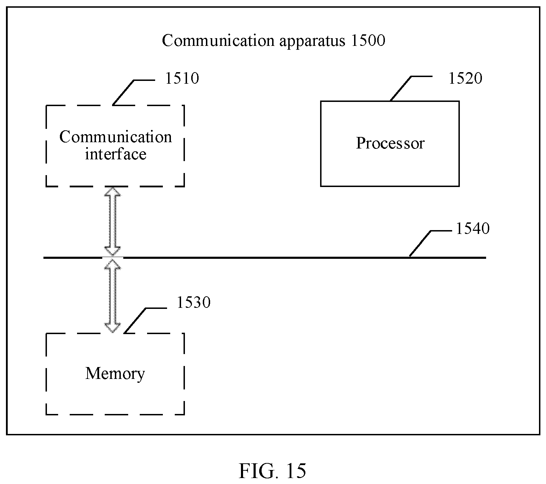

FIG. 15 shows a communication apparatus 1500 according to an embodiment of this application. The communication apparatus 1500 may be a first device, and can implement functions of the first device in the method provided in embodiments of this application. Alternatively, the communication apparatus 1500 may be a second device, and can implement functions of the second device in the method provided in embodiments of this application. Alternatively, the communication apparatus 1500 may be an apparatus that can support the first device in implementing the corresponding functions in the method provided in embodiments of this application, or an apparatus that can support the second device in implementing the corresponding functions in the method provided in embodiments of this application. The communication apparatus 1500 may be a chip system. In this embodiment of this application, the chip system may include a chip, or may include a chip and another discrete component.

The communication apparatus 1500 includes at least one processor 1520, configured to implement or support the communication apparatus 1500 in implementing the functions of the first device or the second device in the method provided in embodiments of this application. For details, refer to detailed descriptions in the method examples. Details are not described herein again.

Optionally, the communication apparatus 1500 may further include at least one memory 1530, configured to store program instructions and/or data. The memory 1530 is coupled to the processor 1520. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1520 may cooperate with the memory 1530. The processor 1520 may execute the program instructions and/or the data stored in the memory 1530, to enable the communication apparatus 1500 to implement a corresponding method. At least one of the at least one memory may be included in the processor. The memory 1530 may exist independently, for example, may be an off-chip memory, and is connected to the processor 1520 through a communication bus (represented by a bold line 1540 in FIG. 15). The memory 1530 may alternatively be integrated with the processor 1520.

Optionally, the communication apparatus 1500 may further include a communication interface 1510, configured to communicate with another device by using a transmission medium, so that an apparatus used in the communication apparatus 1500 can communicate with the another device. For example, when the communication apparatus is the first device, the another device is the second device or the third device. The processor 1520 may send and receive data through the communication interface 1510. The communication interface 1510 may be specifically a transceiver.

In a hardware implementation, the transceiver unit 1402 may be a transceiver, and the transceiver is integrated into the communication apparatus 1500 to form the communication interface 1510.

A specific connection medium between the communication interface 1510, the processor 1520, and the memory 1530 is not limited in this embodiment of this application. In this embodiment of this application, in FIG. 15, the memory 1530, the processor 1520, and the communication interface 1510 are connected through the communication bus 1540. A manner of connection between other components is merely an example for description, and is not limited thereto. The communication bus 1540 may be classified into an address bus, a data bus, a control bus, or the like. For ease of representation, only one bold line is used for representation in FIG. 15, but this does not mean that there is only one communication bus or only one type of communication bus.

In embodiments of this application, the processor 1520 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In embodiments of this application, the memory 1530 may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

An example of this application further provides a communication system. Specifically, the communication system includes a first device and/or a second device.

An example of this application further provides a computer-readable storage medium, including instructions. When the instructions are run on a computer, the computer is enabled to perform the methods in the foregoing embodiments.

An example of this application further provides a computer program product, including instructions. When the computer program product runs on a computer, the computer is enabled to perform the methods in the foregoing embodiments.

An example of this application provides a chip system. The chip system includes a processor, may further include a memory, and is configured to implement the function of the first device or the second device in the foregoing methods. The chip system may include a chip, or may include a chip and another discrete component.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application.

## Claims

1. A communication method, wherein the method comprises:
determining (S401), by a first device, that a first condition is met, wherein the first condition comprises one or more of the following conditions: a terminal device is authorized for an uncrewed aerial vehicle service, the terminal device initiates establishment of a 1^{st} session corresponding to the uncrewed aerial vehicle service, or the terminal device is in a flying state; and
restricting (S402), by the first device, a non-uncrewed aerial vehicle service of the terminal device;
wherein the restricting (S402), by the first device, a non-uncrewed aerial vehicle service of the terminal device comprises the releasing, by the first device, all or a part of sessions corresponding to the non-uncrewed aerial vehicle service that are managed by the first device, **characterized in that** the method further comprises:
determining, by the first device, that N is greater than M, wherein N is a quantity of sessions corresponding to the non-uncrewed aerial vehicle service that are managed by the first device, and M is a quantity of sessions corresponding to the non-uncrewed aerial vehicle service that are allowed to be established on the first device when the terminal device performs the uncrewed aerial vehicle service; and
determining, by the first device, to release H sessions corresponding to the non-uncrewed aerial vehicle service, wherein H is a positive integer greater than or equal to (N-M).

2. The method according to claim 1, wherein the restricting (S402), by the first device, a non-uncrewed aerial vehicle service of the terminal device comprises:
with the first device being a first session management function device, releasing, by the first device, all or a part of sessions corresponding to the non-uncrewed aerial vehicle service that are managed by the first device, and/or prohibiting establishment or modification of a session corresponding to the non-uncrewed aerial vehicle service; or
with the first device being a short message service-service center, skipping or suspending, by the first device, sending a first message to the terminal device, wherein the first message is used to request to establish or modify a session corresponding to the non-uncrewed aerial vehicle service; or
with the first device being the terminal device, skipping or suspending, by the first device, sending a first message to a first session management function device, wherein the first message is used to request to establish or modify a session corresponding to the non-uncrewed aerial vehicle service.

3. The method according to claim 1 or 2, wherein if the first device determines that the terminal device is authorized for the uncrewed aerial vehicle service, and/or the terminal device is in a flying state,
before the restricting (S402), by the first device, a non-uncrewed aerial vehicle service of the terminal device and/or restricting a first control plane procedure, the method further comprises:
receiving, by the first device, a second message from the terminal device, wherein the second message is used to request to establish a first session; and
determining, by the first device based on the second message, that the first session belongs to a session corresponding to the uncrewed aerial vehicle service.

4. The method according to any one of claims 1 to 3, wherein the method further comprises:
sending (S403), by the first device, a third message to a second device, wherein the third message is used to request to restrict the non-uncrewed aerial vehicle service of the terminal device.

5. The method according to any one of claims 1 to 4, wherein the restricting (S402), by the first device, a non-uncrewed aerial vehicle service of the terminal device comprises:
sending, by the first device, second indication information to the terminal device, wherein the second indication information indicates that establishment of the session corresponding to the non-uncrewed aerial vehicle service is prohibited.

6. The method according to any one of claims 1 to 5, wherein determining (S401), by the first device, that the terminal device is in a flying state comprises:
receiving, by the first device, third indication information from an access and mobility management function device, wherein the third indication information indicates that the terminal device is in a flying state.

7. The method according to claim 6, wherein the method further comprises:
sending, by the first device, a sixth message to the access and mobility management function device, wherein the sixth message is used to obtain a status of the terminal device, and the status of the terminal device comprises the flying state and/or a non-flying state.

8. The method according to any one of claims 1 to 5, wherein the first device is the terminal device; and
determining (S401), by the first device, that the terminal device is in a flying state comprises:
determining, by the first device based on mobility information and/or fifth indication information that is from an application layer, that the terminal device is in a flying state, wherein the fifth indication information indicates that the terminal device enters a flight mode.

9. The method according to any one of claims 1 to 8, wherein the method further comprises:
determining, by the first device, that a second condition is met, wherein the second condition comprises one or more of the following conditions: authorization for the uncrewed aerial vehicle service is revoked from the terminal device, the terminal device is not authorized for the uncrewed aerial vehicle service, the uncrewed aerial vehicle service of the terminal device is deregistered, or the terminal device releases a last session corresponding to the uncrewed aerial vehicle service; and
with the first device being the first session management function device, receiving, by the first device, a seventh message from the terminal device, and establishing or modifying, based on the seventh message, a session corresponding to the non-uncrewed aerial vehicle service, wherein the seventh message is used to request to establish or modify the session corresponding to the non-uncrewed aerial vehicle service; or
with the first device being the short message service-service center, sending, by the first device, an eighth message to the terminal device, wherein the eighth message is used to request to establish or modify a session corresponding to the non-uncrewed aerial vehicle service; or
with the first device being the terminal device, sending, by the first device, an eighth message to the first session management function device, wherein the eighth message is used to request to establish or modify a session corresponding to the non-uncrewed aerial vehicle service.

10. A communication method, comprising:
receiving (S403), by a second device, a message that is from a first device and that is used to request to restrict a non-uncrewed aerial vehicle service of a terminal device, wherein the first device is a first session management function device;
determining (S404), by the second device based on the message, that a second session management function device manages a session corresponding to the non-uncrewed aerial vehicle service of the terminal device; and
sending (S405), by the second device, indication information to the second session management function device, wherein the indication information indicates to release all or a part of sessions corresponding to the non-uncrewed aerial vehicle service that are managed by the second session management function device;
**characterized in that** the method further comprises:
sending (S405), by the second device, first indication information to the first session management function device, wherein the first indication information indicates to release one or more sessions corresponding to the non-uncrewed aerial vehicle service;
receiving, by the second device, N from the first session management function device, wherein N is a quantity of sessions corresponding to the non-uncrewed aerial vehicle service that are managed by the first session management function device; and
determining, by the second device based on a quantity of sessions corresponding to the non-uncrewed aerial vehicle service that have been established by the terminal device, N, and M, that the first session management function device needs to release one or more sessions corresponding to the non-uncrewed aerial vehicle service, wherein M is a quantity of sessions corresponding to the non-uncrewed aerial vehicle service that are allowed to be established on the first session management function device when the terminal device performs the uncrewed aerial vehicle service.

11. A communication apparatus (1400, 1500), configured to perform the method of any one of claims 1 to 9 or 10.

## Patentansprüche

1. Kommunikationsverfahren, wobei das Verfahren Folgendes umfasst:
Bestimmen (S401), durch eine erste Vorrichtung, dass eine erste Bedingung erfüllt ist, wobei die erste Bedingung eine oder mehrere der folgenden Bedingungen umfasst: eine Endgerätevorrichtung ist autorisiert für einen unbemannten Luftfahrzeugdienst, wobei die Endgerätevorrichtung die Einrichtung einer 1. Sitzung entsprechend dem unbemannten Luftfahrzeugdienst initiiert oder sich die Endgerätevorrichtung in einem fliegenden Zustand befindet; und
Einschränken (S402), durch die erste Vorrichtung, eines nicht-unbemannten Luftfahrzeugdienstes der Endgerätevorrichtung;
wobei das Einschränken (S402), durch die erste Vorrichtung, eines nicht-unbemannten Luftfahrzeugdienstes der Endgerätevorrichtung das Freigeben, durch die erste Vorrichtung, aller oder eines Teils der Sitzungen umfasst, die durch die erste Vorrichtung verwaltet werden, **dadurch gekennzeichnet, dass** das Verfahren ferner Folgendes umfasst:
Bestimmen, durch die erste Vorrichtung, dass N größer als M ist, wobei N eine Quantität von Sitzungen entsprechend dem nicht-unbemannten Luftfahrzeugdienst ist, die durch die erste Vorrichtung verwaltet werden, und M eine Quantität von Sitzungen entsprechend dem nicht-unbemannten Luftfahrzeugdienst ist, die auf der ersten Vorrichtung eingerichtet werden dürfen, wenn die Endgerätevorrichtung den unbemannten Luftfahrzeugdienst durchführt, und
Bestimmen, durch die erste Vorrichtung, H Sitzungen entsprechend dem nicht-unbemannten Luftfahrzeugdienst freizugeben, wobei H eine positive ganze Zahl größer als oder gleich (N-M) ist.

2. Verfahren nach Anspruch 1, wobei das Einschränken (S402), durch die erste Vorrichtung, eines nicht-unbemannten Luftfahrzeugdienstes der Endgerätevorrichtung Folgendes umfasst:
mit der ersten Vorrichtung als eine erste Sitzungsverwaltungsfunktionsvorrichtung, Freigeben, durch die erste Vorrichtung, aller oder eines Teils der Sitzungen entsprechend dem nicht-unbemannten Luftfahrzeugdienst, die durch die erste Vorrichtung verwaltet werden, und/oder Untersagen der Einrichtung oder Modifikation einer Sitzung entsprechend dem nicht-unbemannten Luftfahrzeugdienst; oder
mit der ersten Vorrichtung als Kurznachrichtendienst-Dienstzentrale, Überspringen oder Aussetzen, durch die erste Vorrichtung, des Sendens einer ersten Nachricht an die Endgerätevorrichtung, wobei die erste Nachricht verwendet wird, um das Einrichten oder Modifizieren einer Sitzung entsprechend dem nicht-unbemannten Luftfahrzeugdienst anzufordern; oder
mit der ersten Vorrichtung als die Endgerätevorrichtung, Überspringen oder Aussetzen, durch die erste Vorrichtung, des Sendens einer ersten Nachricht an eine erste Sitzungsverwaltungsfunktionsvorrichtung, wobei die erste Nachricht verwendet wird, um das Einrichten oder Modifizieren einer Sitzung entsprechend dem nicht-unbemannten Luftfahrzeugdienst anzufordern.

3. Verfahren nach Anspruch 1 oder 2, wobei, wenn die erste Vorrichtung bestimmt, dass die Endgerätevorrichtung für den unbemannten Luftfahrzeugdienst autorisiert ist und/oder sich die Endgerätevorrichtung in einem fliegenden Zustand befindet,
vor dem Einschränken (S402), durch die erste Vorrichtung, eines nicht-unbemannten Luftfahrzeugdienstes der Endgerätevorrichtung und/oder Einschränken einer ersten Steuerebenenprozedur, das Verfahren ferner Folgendes umfasst:
Empfangen, durch die erste Vorrichtung, einer zweiten Nachricht von der Endgerätevorrichtung, wobei die zweite Nachricht verwendet wird, um Einrichten einer ersten Sitzung anzufordern; und
Bestimmen, durch die erste Vorrichtung basierend auf der zweiten Nachricht, dass die erste Sitzung zu einer Sitzung entsprechend dem unbemannten Luftfahrzeugdienst gehört.

4. Verfahren nach einem der Ansprüche 1 bis 3, wobei das Verfahren ferner Folgendes umfasst:
Senden (S403), durch die erste Vorrichtung, einer dritten Nachricht an eine zweite Vorrichtung, wobei die dritte Nachricht verwendet wird, um ein Einschränken des nicht-unbemannten Luftfahrzeugdienstes der Endgerätevorrichtung anzufordern.

5. Verfahren nach einem der Ansprüche 1 bis 4, wobei das Einschränken (S402), durch die erste Vorrichtung, eines nicht-unbemannten Luftfahrzeugdienstes der Endgerätevorrichtung Folgendes umfasst:
Senden, durch die erste Vorrichtung, von zweiten Anzeigeinformationen an die Endgerätevorrichtung, wobei die zweiten Anzeigeinformationen anzeigen, dass eine Einrichtung der Sitzung entsprechend dem nicht-unbemannten Luftfahrzeugdienst untersagt ist.

6. Verfahren nach einem der Ansprüche 1 bis 5, wobei Bestimmen (S401), durch die erste Vorrichtung, dass sich die Endgerätevorrichtung in einem fliegenden Zustand befindet, Folgendes umfasst:
Empfangen, durch die erste Vorrichtung, von dritten Anzeigeinformationen von einer Zugriffs- und Mobilitätsverwaltungsfunktionsvorrichtung, wobei die dritten Anzeigeinformationen anzeigen, dass sich die Endgerätevorrichtung in einem fliegenden Zustand befindet.

7. Verfahren nach Anspruch 6, wobei das Verfahren ferner Folgendes umfasst:
Senden, durch die erste Vorrichtung, einer sechsten Nachricht an die Zugriffs- und Mobilitätsverwaltungsfunktionsvorrichtung, wobei die sechste Nachricht verwendet wird, um einen Status der Endgerätevorrichtung zu erhalten, und wobei der Status der Endgerätevorrichtung den fliegenden Zustand und/oder einen nicht-fliegenden Zustand umfasst.

8. Verfahren nach einem der Ansprüche 1 bis 5, wobei die erste Vorrichtung die Endgerätevorrichtung ist; und
Bestimmen (S401), durch die erste Vorrichtung, dass sich die Endgerätevorrichtung in einem fliegenden Zustand befindet, Folgendes umfasst:
Bestimmen, durch die erste Vorrichtung basierend auf Mobilitätsinformationen und/oder fünften Anzeigeinformationen, die von einer Anwendungsschicht sind, dass sich die Endgerätevorrichtung in einem fliegenden Zustand befindet, wobei die fünften Anzeigeinformationen anzeigen, dass die Endgerätevorrichtung in einen Flugmodus eintritt.

9. Verfahren nach einem der Ansprüche 1 bis 8, wobei das Verfahren ferner Folgendes umfasst:
Bestimmen, durch die erste Vorrichtung, dass eine zweite Bedingung erfüllt ist, wobei die zweite Bedingung eine oder mehrere der folgenden Bedingungen umfasst: Autorisierung für den unbemannten Luftfahrzeugdienst wird der Endgerätevorrichtung entzogen, die Endgerätevorrichtung ist nicht für den unbemannten Luftfahrzeugdienst autorisiert, die Registrierung des unbemannten Luftfahrzeugdienstes der Endgerätevorrichtung wird aufgehoben, oder die Endgerätevorrichtung gibt eine letzte Sitzung entsprechend dem unbemannten Luftfahrzeugdienst frei; und
mit der ersten Vorrichtung als die erste Sitzungsverwaltungsfunktionsvorrichtung, Empfangen, durch die erste Vorrichtung, einer siebten Nachricht von der Endgerätevorrichtung und Einrichten oder Modifizieren, basierend auf der siebten Nachricht, einer Sitzung entsprechend dem nicht-unbemannten Luftfahrzeugdienst, wobei die siebte Nachricht verwendet wird, um das Einrichten oder Modifizieren der Sitzung entsprechend dem nicht-unbemannten Luftfahrzeugdienst anzufordern, oder
mit der ersten Vorrichtung als die Kurznachrichtendienst-Dienstzentrale, Senden, durch die erste Vorrichtung, einer achten Nachricht an die Endgerätevorrichtung, wobei die achte Nachricht verwendet wird, um das Einrichten oder Modifizieren einer Sitzung entsprechend dem nicht-unbemannten Luftfahrzeugdienst anzufordern; oder
mit der ersten Vorrichtung als die Endgerätevorrichtung, Senden, durch die erste Vorrichtung, einer achten Nachricht an die erste Sitzungsverwaltungsfunktionsvorrichtung, wobei die achte Nachricht verwendet wird, um das Einrichten oder Modifizieren einer Sitzung entsprechend dem nicht-unbemannten Luftfahrzeugdienst anzufordern.

10. Kommunikationsverfahren, das Folgendes umfasst:
Empfangen (S403), durch eine zweite Vorrichtung, einer Nachricht, die von einer ersten Vorrichtung ist und die verwendet wird, um Einschränken eines nicht-unbemannten Luftfahrzeugdienstes einer Endgerätevorrichtung anzufordern, wobei die erste Vorrichtung eine erste Sitzungsverwaltungsfunktionsvorrichtung ist;
Bestimmen (S404), durch die zweite Vorrichtung basierend auf der Nachricht, dass eine zweite Sitzungsverwaltungsfunktionsvorrichtung eine Sitzung entsprechend dem nicht-unbemannten Luftfahrzeugdienst der Endgerätevorrichtung verwaltet; und
Senden (S405), durch die zweite Vorrichtung, von Anzeigeinformationen an die zweite Sitzungsverwaltungsfunktionsvorrichtung, wobei die Anzeigeinformationen anzeigen, alle oder einen Teil der Sitzungen entsprechend dem nicht-unbemannten Luftfahrzeugdienst freizugeben, die durch die zweite Sitzungsverwaltungsfunktionsvorrichtung verwaltet werden;
**dadurch gekennzeichnet, dass** das Verfahren ferner Folgendes umfasst:
Senden (S405), durch die zweite Vorrichtung, von ersten Anzeigeinformationen an die erste Sitzungsverwaltungsfunktionsvorrichtung, wobei die ersten Anzeigeinformationen anzeigen, eine oder mehrere Sitzungen entsprechend dem nicht-unbemannten Luftfahrzeugdienst freizugeben;
Empfangen, durch die zweite Vorrichtung, von N von der ersten Sitzungsverwaltungsfunktionsvorrichtung, wobei N eine Quantität von Sitzungen entsprechend dem nicht-unbemannten Luftfahrzeugdienst ist, die durch die erste Sitzungsverwaltungsfunktionsvorrichtung verwaltet werden; und
Bestimmen, durch die zweite Vorrichtung basierend auf einer Quantität von Sitzungen entsprechend dem nicht-unbemannten Luftfahrzeugdienst, die durch die Endgerätevorrichtung eingerichtet wurden, N und M, dass die erste Sitzungsverwaltungsfunktionsvorrichtung eine oder mehrere Sitzungen entsprechend dem nicht-unbemannten Luftfahrzeugdienst freigeben muss, wobei M eine Quantität von Sitzungen entsprechend dem nicht-unbemannten Luftfahrzeugdienst ist, die auf der ersten Sitzungsverwaltungsfunktionsvorrichtung eingerichtet werden dürfen, wenn die Endgerätevorrichtung den unbemannten Luftfahrzeugdienst durchführt.

11. Kommunikationseinrichtung (1400, 1500), ausgelegt zum Durchführen des Verfahrens nach Ansprüchen 1 bis 9 oder 10.

## Revendications

1. Procédé de communication, ce procédé comprenant :
la détermination (S401), par un premier dispositif, qu'une première condition est remplie, la première condition comprenant une ou plusieurs des conditions suivantes : un dispositif terminal est autorisé pour un service par véhicule aérien sans pilote, le dispositif terminal déclenche l'établissement d'une première session correspondant au service par véhicule aérien sans pilote, ou le dispositif terminal est dans un état de vol ; et
la restriction (S402), par le premier dispositif, d'un service par véhicule aérien non sans pilote du dispositif terminal ;
la restriction (S402), par le premier dispositif, d'un service par véhicule aérien non sans pilote du dispositif terminal comprenant la libération, par le premier dispositif, de la totalité ou d'une partie de sessions correspondant au service par véhicule aérien non sans pilote qui sont gérées par le premier dispositif, **caractérisé en ce que** le procédé comprend en outre :
la détermination, par le premier dispositif, que N est plus grand que M, N étant une quantité de sessions correspondant au service par véhicule aérien non sans pilote qui sont gérées par le premier dispositif, et M étant une quantité de sessions correspondant au service par véhicule aérien non sans pilote qui sont autorisées à être établies sur le premier dispositif lorsque le dispositif terminal exécute le service par véhicule aérien sans pilote ; et
la détermination, par le premier dispositif, de libérer H sessions correspondant au service par véhicule aérien non sans pilote, H étant un nombre entier positif plus grand que ou égal à (N - M).

2. Procédé selon la revendication 1, dans lequel la restriction (S402), par le premier dispositif, d'un service par véhicule aérien non sans pilote du dispositif terminal comprend :
avec le premier dispositif étant un premier dispositif à fonction de gestion de sessions, la libération, par le premier dispositif, de la totalité ou d'une partie de sessions correspondant au service par véhicule aérien non sans pilote qui sont gérées par le premier dispositif, et/ou l'interdiction de l'établissement ou de la modification d'une session correspondant au service par véhicule aérien non sans pilote ; ou
avec le premier dispositif étant un centre de service-service de messages courts, l'omission ou la suspension, par le premier dispositif, de l'envoi d'un premier message au dispositif terminal, le premier message étant utilisé pour demander d'établir ou de modifier une session correspondant au service par véhicule aérien non sans pilote ; ou
avec le premier dispositif étant le dispositif terminal, l'omission ou la suspension, par le premier dispositif, de l'envoi d'un premier message à un premier dispositif à fonction de gestion de sessions, le premier message étant utilisé pour demander d'établir ou de modifier une session correspondant au service par véhicule aérien non sans pilote.

3. Procédé selon la revendication 1 ou 2, dans lequel, si le premier dispositif détermine que le dispositif terminal est autorisé pour le service par véhicule aérien sans pilote, et/ou que le dispositif terminal est dans un état de vol,
avant la restriction (S402), par le premier dispositif, d'un service par véhicule aérien non sans pilote du dispositif terminal et/ou la restriction d'une première procédure de plan de commande, le procédé comprend en outre :
la réception, par le premier dispositif, d'un deuxième message venant du dispositif terminal, le deuxième message étant utilisé pour demander d'établir une première session, et
la détermination, par le premier dispositif, en se basant sur le deuxième message, que la première session appartient à une session correspondant au service par véhicule aérien sans pilote.

4. Procédé selon l'une quelconque des revendications 1 à 3, le procédé comprenant en outre :
l'envoi (S403), par le premier dispositif, d'un troisième message à un deuxième dispositif, le troisième message étant utilisé pour demander de restreindre le service par véhicule aérien non sans pilote du dispositif terminal.

5. Procédé selon l'une quelconque des revendications 1 à 4, dans lequel la restriction (S402), par le premier dispositif, d'un service par véhicule aérien non sans pilote du dispositif terminal comprend :
l'envoi, par le premier dispositif, d'une deuxième information d'indication au dispositif terminal, la deuxième information d'indication indiquant que l'établissement de la session correspondant au service par véhicule aérien non sans pilote est interdite.

6. Procédé selon l'une quelconque des revendications 1 à 5, dans lequel la détermination (S401), par le premier dispositif, que le dispositif terminal est dans un état de vol comprend :
la réception, par le premier dispositif, d'une troisième information d'indication venant d'un dispositif à fonction de gestion d'accès et de mobilité, la troisième information d'indication indiquant que le dispositif terminal est dans un état de vol.

7. Procédé selon la revendication 6, le procédé comprenant en outre :
l'envoi, par le premier dispositif, d'un sixième message au dispositif à fonction de gestion d'accès et de mobilité, le sixième message étant utilisé pour obtenir un statut du dispositif terminal, et le statut du dispositif terminal comprenant l'état de vol et/ou un état de non-vol.

8. Procédé selon l'une quelconque des revendications 1 à 5, dans lequel le premier dispositif est le dispositif terminal ; et
la détermination (S401), par le premier dispositif, que le dispositif terminal est dans un état de vol comprend :
la détermination, par le premier dispositif, en se basant sur une information de mobilité et/ou sur une cinquième information d'indication qui vient d'une couche d'application, que le dispositif terminal est dans un état de vol, la cinquième information d'indication indiquant que le dispositif terminal entre dans un mode de vol.

9. Procédé selon l'une quelconque des revendications 1 à 8, le procédé comprenant en outre :
la détermination, par le premier dispositif, qu'une deuxième condition est remplie, la deuxième condition comprenant une ou plusieurs des conditions suivantes : l'autorisation pour le service par véhicule aérien sans pilote est révoquée du dispositif terminal, le dispositif terminal n'est pas autorisé pour le service par véhicule aérien sans pilote, le service par véhicule aérien sans pilote du dispositif terminal est désenregistré, ou le dispositif terminal libère une dernière session correspondant au service par véhicule aérien sans pilote ; et
avec le premier dispositif étant le premier dispositif à fonction de gestion de sessions, la réception, par le premier dispositif, d'un septième message venant du dispositif terminal, et l'établissement ou la modification, en se basant sur le septième message, d'une session correspondant au service par véhicule aérien non sans pilote, le septième message étant utilisé pour demander d'établir ou de modifier la session correspondant au service par véhicule aérien non sans pilote ; ou
avec le premier dispositif étant le centre de service-service de messages courts, l'envoi, par le premier dispositif, d'un huitième message au dispositif terminal, le huitième message étant utilisé pour demander d'établir ou de modifier une session correspondant au service par véhicule aérien non sans pilote ; ou
avec le premier dispositif étant le dispositif terminal, l'envoi, par le premier dispositif, d'un huitième message au premier dispositif à fonction de gestion de sessions, le huitième message étant utilisé pour demander d'établir ou de modifier une session correspondant au service par véhicule aérien non sans pilote.

10. Procédé de communication, comprenant :
la réception (S403), par un deuxième dispositif, d'un message qui vient d'un premier dispositif, et qui est utilisé pour demander de restreindre un service par véhicule aérien non sans pilote d'un dispositif terminal, le premier dispositif étant un premier dispositif à fonction de gestion de sessions ;
la détermination (S404), par le deuxième dispositif, en se basant sur le message, qu'un deuxième dispositif à fonction de gestion de sessions gère une session correspondant au service par véhicule aérien non sans pilote du dispositif terminal ; et
l'envoi (S405), par le deuxième dispositif, d'une information d'indication au deuxième dispositif à fonction de gestion de sessions, l'information d'indication indiquant de libérer la totalité ou une partie des sessions correspondant au service par véhicule aérien non sans pilote qui sont gérées par le deuxième dispositif à fonction de gestion de sessions ;
**caractérisé en ce que** ce procédé comprend en outre :
l'envoi (S405), par le deuxième dispositif, d'une première information d'indication au premier dispositif à fonction de gestion de sessions, la première information d'indication indiquant de libérer une ou plusieurs sessions correspondant au service par véhicule aérien non sans pilote ;
la réception, par le deuxième dispositif, de N venant du premier dispositif à fonction de gestion de sessions, N étant une quantité de sessions correspondant au service par véhicule aérien non sans pilote qui sont gérées par le premier dispositif à fonction de gestion de sessions ; et
la détermination, par le deuxième dispositif, en se basant sur une quantité de sessions correspondant au service par véhicule aérien non sans pilote qui ont été établies par le dispositif terminal, N, et M, que le premier dispositif à fonction de gestion de sessions a besoin de libérer une ou plusieurs sessions correspondant au service par véhicule aérien non sans pilote, M étant une quantité de sessions correspondant au service par véhicule aérien non sans pilote qui sont autorisées à être établies sur le premier dispositif à fonction de gestion de sessions lorsque le dispositif terminal exécute le service par véhicule aérien sans pilote.

11. Système de communication (1400, 1500), configuré de façon à exécuter le procédé selon l'une quelconque des revendications 1 à 9 ou 10.
